# EUROPEAN PATENT SPECIFICATION

(11) **EP 3 591 001 B1**
(45) Date of publication and mention of the grant of the patent: **04.11.2026**
(21) Application number: 19189804.8
(22) Date of filing: 20.11.2015
(51) Int. Cl.: C08K 5/00, C08K 5/132, C08K 5/3475, C08K 5/3492, C08K 5/357, C08J 3/22

(54) **STABILIZER COMPOSITIONS AND METHODS FOR USING SAME FOR PROTECTING ORGANIC MATERIALS FROM UV LIGHT AND THERMAL DEGRADATION**
STABILISATORZUSAMMENSETZUNGEN UND VERFAHREN ZUR VERWENDUNG DAVON ZUM SCHUTZ ORGANISCHER MATERIALIEN VOR UV-LICHT UND THERMISCHEM ABBAU
COMPOSITIONS DE STABILISATEUR ET LEURS PROCÉDÉS D'UTILISATION POUR LA PROTECTION DE MATÉRIAUX ORGANIQUES À PARTIR D'UNE LUMIÈRE UV ET LA DÉGRADATION THERMIQUE

(30) Priority: 20.11.2014 US 201462082580 P
(43) Date of publication of application: 08.01.2020
(62) Document number(s) of the earlier application(s) in accordance with Art. 76 EPC: 15816922.7 / 3 221 393
(73) Proprietor: Cytec Industries Inc., Lawrence, NJ 08648 (US)
(72) Inventor: KOZAKIEWICZ, Joseph, Trumbull, CT 06611 (US); ENG, J., Mon Hei, Wilton, CT 06897 (US); KHAWAM, Fadi, Mahwah, NJ 07430 (US); GUPTA, Ram, B., Stamford, CT 06905 (US); RYLES, Roderick, G., Milford, CT 06460 (US); CHO, Jian-yang, Easton, CT 06612 (US)
(74) Representative: Kraus & Lederer PartGmbB

(56) References cited:
- EP-A1- 0 781 800
- US-A1- 2003 109 629
- US-A1- 2005 049 337
- US-A1- 2012 270 111

## Description

### BACKGROUND OF THE INVENTION

### Field.

The present invention generally relates to the field of additivation of certain organic materials with light stabilizer compositions that prevent the deleterious effects of prolonged exposure to UV radiation. More particularly, the instant disclosure relates to stabilizer compositions having certain UV light stabilizers and their use in a variety of materials such as polymeric resins to achieve improved service properties.

### Description of the Related Art.

A variety of organic materials are known to undergo degradation by several mechanisms including exposure to electromagnetic radiation such as sunlight and other sources of ultraviolet ("UV") radiation and heat. For example, polymeric materials such as plastics often discolor, lose gloss and mechanical properties and/or become brittle as a result of prolonged exposure to the sun. Accordingly, a large body of art has been developed directed toward materials such as UV light absorbers and various other stabilizers, which are capable of inhibiting such degradation in these materials.

In particular, UV light absorbers such as benzotriazoles and benzophenones were initially used to stabilize polymeric materials, and to prevent the degradation of such materials from exposure to UV light. Later, it was discovered that hindered amine light stabilizers ("HALS"), which scavenge free radicals formed in the polymeric material when exposed to UV light, were more effective than UV light absorbers ("UVAs"). Accordingly, the use of HALS and UV light absorbers in combination are conventionally used to stabilize polymeric materials.

The use of UVAs by themselves or in combination with HALS to stabilize polymers such as coatings and plastics against weathering due to the direct or indirect impact of heat and ultraviolet light has remained an active area of research. For example, U.S. Pat. Nos. 4,619,956; 4,740,542; and 5,760,228 disclosed compositions and/or methods of stabilizing a polymer film, coating, or a molded article against the action of light, moisture, or oxygen by incorporating aryl triazines and HALS into said polymers. It was further disclosed that such triazines exhibited an enhanced degree of stabilization due to a synergistic effect when combined with certain HALS.

Synergistic combinations of stabilizer compositions were further demonstrated by U.S. Patent No. 6,051,164, wherein it was disclosed that polyolefins containing certain ratios of HALS (having a molecular weight of at least 500 Da) and orthohydroxyphenyl triazines provided superior performance properties over polyolefins containing either stabilizer alone or those with both HALS and triazine, but which were not in the synergistic ratio. Similarly, U.S. Patent No. 6,843,939 disclosed synergistic UV stabilizing additive blends that included orthohydroxyphenyl triazines, HALS, and hindered hydroxybenzoates, and which provided improved performance over either stabilizer alone or combinations of only 2 of the stabilizer additives. In addition, it was further disclosed in EP0781800A1 a polyolefin resin composition for agricultural films containing a polyolefin resin, a hindered amine compound, a UV light absorber in combination with a double hydroxide having favorable weatherability.

Furthermore, while it is the intent of most stabilizer compositions to reduce or prevent degradation caused by heat, such stabilizer compositions do not typically yield the desired result. Frequently, stabilizer compositions that are useful for reducing or preventing degradation caused by heat are hindered or completely relinquished due to the antagonistic effect when combined with compounds useful for absorption of ultraviolet light.

It is further known that particular functionalities of organic materials such as polymeric resins can be achieved by blending certain additives with the polymeric resins. For example, in certain instances it is desirable to modify the surface interface of polymeric materials to produce a variety of related surface effects such as improved slip or lubricity, reduced blocking, or to lubricate processing equipment. It may also be desirable in certain instances to modify polymeric surfaces to improve release of adhesives and promote demolding or adhesion of other materials from a polymeric composition surface. In other instances, polymer films having good clarity and optical properties, and which resist fogging, are desirous. A variety of prior art additives classified as anti-block additives, slip aids, coefficient of frictions modifiers, anti-fog agents, anti-static agents, and release aids have been used in an attempt to provide these attributes to different types of organic materials. These various prior art additives are generally described to be surface active compounds (i.e., surfactants).

Higher levels of these additives, *i.e.*, an amount that significantly reduces the hydrophobicity of the surface of the polymeric article (as measured by contact angle), are required to achieve these intended functionalities. Thus, when added in sufficient concentration (typically at least 1-3 % by weight, or higher, based on polymer) certain of these classes of additives can make the surface of a polymeric article containing such additive(s) less hydrophobic, thereby reducing the contact angle of water on the surface of the article, and imparting the desired features or properties. Although the amount of surface active additives required to reduce the contact angle can vary depending on the type(s) of additive(s) and/or polymeric resin(s) used, the total amount of such additives(s) needs to be high enough to impart the desired property to the polymer article. Read another way, whatever the precise concentration of these classes of additives that is required, the contact angle of water at the surface of the article of manufacture containing such additives(s) needs to be low enough so that the desired property (e.g., anti-fogging or antistatic), is achieved. It has been reported by Shlosman et al., Controlled migration of antifog additives from LLDPE compatibilized with LLDPE grafted maleic anhydride, Polym. Adv. Technol. vol. 25, pp.1484-91 (2014), for example, that the contact angle of water on an article of manufacture containing these classes of compounds should be at or less than about 20°, and more typically less than 10°, in order to achieve the desired level of the property/surface effects for anti-fogging. However, use of these higher levels of surface active compounds which are required to achieve the desired surface effects leads to higher cost and can also often lead to undesirable properties such as blooming and poor processability. Blooming is a process whereby the polymeric article becomes supersaturated with these higher levels of surface active compounds causing the formation of unsightly precipitates at the surface of the article.

Accordingly, synergistic combinations of stabilizer additives can still be discovered even though the compounds themselves are perhaps known for individual use for a particular purpose, or are known to be used together for a particular purpose at concentrations or ratios not previously disclosed or suggested, and which do not cause undesirable performance properties such as blooming or poor processability of the organic material to which they are added.

The discovery of such synergistic stabilizer additives that substantially improve the performance characteristics of a variety of organic materials subject to mechanical stress, or effects such as oxidation, chain scission, and uncontrolled recombinations and cross-linking reactions that are caused by photo-oxidation, as well as heat, would be a useful advance in the art and could find rapid acceptance in a number of industries requiring such stabilized materials.

### SUMMARY OF THE INVENTION

The foregoing and additional objects of the invention are attained in accordance with the principles of the invention described herein, wherein the inventors detail the surprising discovery that certain classes of compounds (some of which are known in the art as surface active agents being useful at various concentrations for providing antifogging, antistatic, or slip properties to polymeric resins containing same) have a synergistic effect on the stabilization properties of UV absorbers, particularly when combined with radical stabilizers such as hindered amine light stabilizers, and are effective for stabilizing a variety of organic materials susceptible to the deleterious effects caused by prolonged exposure to heat and/or light such as from electromagnetic radiation. For purposes of describing the present invention, these certain classes of additive compounds are referred to throughout the specification and claims as "co-active agents." As used throughout the specification and claims the term "UV stabilizer" shall refer to the classes of ultraviolet ("UV") light absorbers (or "UVA") or hindered amine light stabilizers ("HALS") described herein, individually as a class, or in combination with each other. Reference to UVA or HALS alone will just refer to the corresponding individual classes of compounds.

Organic materials such as polymeric resins containing a stabilizing amount of these co-active agents with UV stabilizers described herein have enhanced performance characteristics even when used at lower loading levels. Additionally, other performance problems, such as blooming of films or reduced processability of polymers, are not encountered when stabilizer compositions containing the co-active agents with UV stabilizers are used to make such films, or are blended with such polymers.

Accordingly, in a first aspect the invention provides stabilizer compositions having a stabilizing amount of an ultraviolet light absorber selected from the group consisting of orthohydroxybenzophenone compounds; orthohydroxyphenyl benzotriazole compounds; and mixtures thereof; and a stabilizing amount of a co-active agent, wherein the co-active agent is present at from 1 wt. % to 99 wt. % based on the total weight of the stabilizer composition.

In an aspect related to the first, the invention also provides stabilizer compositions having a stabilizing amount of a hindered amine light stabilizer; a stabilizing amount of an ultraviolet light absorber selected from the group consisting of orthohydroxybenzophenone compounds; orthohydroxyphenyl benzotriazole compounds; and mixtures thereof; and a stabilizing amount of a co-active agent, wherein the co-active agent is present at from 1 wt. % to 99 wt. % based on the total weight of the stabilizer composition.

In another aspect, the invention provides masterbatch concentrates having one or more stabilizer composition as herein described, and at least one organic material that is identical to or compatible with an organic material to be stabilized.

In still another aspect, the invention provides processes for forming a stabilized article of manufacture by combining an organic material subject to degradation and/or discoloration due to effects of light, oxygen, and/or heat (from, for example, prolonged exposure to electromagnetic radiation) with one or more stabilizer composition or masterbatch concentrate as herein described, and shaping the organic material into an article of manufacture, thereby forming a stabilized article of manufacture. Consequently, articles of manufacture made from an organic material to be stabilized, and a stabilizing amount of one or more stabilizer composition or masterbatch concentrate herein described or claimed are also provided.

The invention also provides processes for protecting an organic material from the deleterious effects of light and heat due to exposure to UV irradiation by combining the organic material with a stabilizing amount of one or more stabilizer composition or masterbatch concentrate herein described or claimed.

Finally, the invention also provides kits, having in one or more containers one or more stabilizer composition or component thereof, or one or more masterbatch concentrate, as herein described or claimed, for stabilizing an organic material subject to thermal and/or oxidative degradation due to light and heat.

These and other objects, features and advantages of this invention will become apparent from the following detailed description of the various aspects of the invention taken in conjunction with the accompanying Figures and Examples.

### BRIEF DESCRIPTION OF THE DRAWINGS

So that the manner in which the above-recited features of the present invention can be understood in better detail, a more particular description of the invention may be had by reference to embodiments, some of which are illustrated or captured in the appended figures. It is to be noted, however, that the appended figures represent only certain embodiments of this invention and should not be considered limiting of its scope, for the invention may admit to other equally effective embodiments.
**FIGS. 1A-1B** correlate to the data provided in 7-(5) and 7-(6) of Table 5, and show images of weathered polypropylene plaques exposed for 800 hrs. **(A)** polypropylene plaque stabilized with 0.09 wt. % of CYASORB^{®} UV-3346 (HALS) (available from Cytec Industries, Inc., Woodland Park, NJ) and 0.01 wt. % of CYASORB^{®} UV-1164 (orthohydroxyphenyl triazine) (available from Cytec Industries, Inc., Woodland Park, NJ) shows surface crazing (*i.e.*, failure) at 800 hrs; **(B)** polypropylene plaque stabilized with 0.09 wt. % of CYASORB^{®} UV-3346 (HALS); 0.01 wt. % of CYASORB^{®} UV-1164 triazine; and 0.10 wt. % of BRIJ^{®} S2 (diethylene glycol octadecyl ether) (available from Sigma Aldrich Corp., St. Louis, MO) shows a smooth surface at 800 hrs. Each plaque is shown at 40x magnification.

### DETAILED DESCRIPTION OF CERTAIN EMBODIMENTS OF THE INVENTION

As summarized above, the present invention is based on the discovery that additive compounds currently known in the art as being useful at certain concentrations for providing a variety of performance functions (e.g., antifogging, antistatic, or slip properties) to polymer resins or manufactured articles containing same have a synergistic effect on the stabilization properties of UV stabilizers, and are effective for stabilizing a variety of organic materials susceptible to the deleterious effects caused by exposure to UV light, heat and/or oxidation - even at concentrations lower than those typically used to achieve other performance functions exemplified in the prior art.

Materials containing the stabilizer compositions described herein provide such improved performance properties against exposure to electromagnetic and thermal radiation as compared to state of the art stabilizer compositions, that the results were entirely surprising and unexpected. Although only certain classes of these additive compounds having a synergistic effect with the stabilization properties of UV stabilizers on organic materials are described herein, the invention encompasses any additive, or mixtures of additives, that acts synergistically with the UV stabilizers to stabilize organic materials from the deleterious effects of UV light, heat and/or oxidation. In some instances these classes of additive compounds impact the surface tension on an article of manufacture containing the stabilizer compositions according to the invention, wherein the contact angle of water at the surface of the article is above 20°. Preferably the contact angle of water at the surface of an article containing the stabilizer compositions as herein described is higher than 25°.

Accordingly, as used throughout the specification and claims, the term "co-active agent" shall refer to any such additive compound, or mixtures of additive compounds, (and not necessarily a surfactant) that acts synergistically with UV absorbers alone or in combination with hindered amine light stabilizers to help stabilize organic materials from the deleterious effects of UV light, heat and/or oxidation. The stabilizer compositions containing these co-active agents are optionally capable of providing a contact angle with water at the surface of an article of manufacture containing the stabilizer compositions according to the invention of greater than 20°.

Stabilizer Compositions. The stabilizer compositions according to the present invention are suitable for use in stabilizing various organic materials subject to mechanical stress, discoloration, or effects such as oxidation, chain scission, and uncontrolled recombinations and cross-linking reactions that are caused by photo-oxidation and can be incorporated into such organic material to protect it from these deleterious effects, or it can be used as, or within, a UV filter layer for preventing UV radiation from reaching the organic material or an article of manufacture produced with the organic material.

The stabilizer compositions according to the invention can be readily combined with an organic material to be stabilized, or *vice versa*, by any suitable method known to those of skill in the art. As used herein the term "combined" or "combining" in reference to the stabilizer composition and the organic material to be stabilized includes all manners and/or techniques known to those skilled in the art for intermixing, admixing, integrating, mixing, or blending two or more substances. In certain embodiments, the components of the stabilizer compositions can be combined with the material to be stabilized by at least one technique chosen from extruding, pelletizing, grinding, and molding. In other embodiments, combining can be performed by at least one of melting, dissolution in a solvent, direct mixing, and dry mixing.

The incorporation of the stabilizer compositions according to the invention, and of optional further co-stabilizers and/or co-additives, into the organic materials to be stabilized can be carried out by known methods such as dry blending in the form of a powder, or wet mixing in the form of solutions, dispersions, or suspensions for example in an inert solvent, water, or oil. Such stabilizer compositions are preferably non-aqueous. The incorporation of co-active agent and UV stabilizers for the stabilizer composition, and optional further co-stabilizers and/or co-additives, into the organic material to be stabilized can be carried out by any suitable method known to those of skill in the art and include, for example, before or after molding, or also by applying the dissolved or dispersed stabilizer mixture to the organic material to be stabilized, with or without subsequent evaporation of the solvent or suspension/dispersion agent. They may be added directly into processing apparatus (e.g., extruders, internal mixers, kneaders etc.) as a dry mixture or powder, or as a solution or dispersion, or suspension or melt.

Individual components of the stabilizer compositions according to the invention, and optional further co-stabilizers and/or co-additives, can also be combined into organic materials such as polymers at a time before, during, or just after, for example, polymerization of corresponding monomers, or before crosslinking. In this context, the stabilizer compositions according to the invention can also be combined into the organic material to be stabilized in pure form (i.e., neat and directly to the resin) or encapsulated in waxes, oils or polymers.

Various additives can also be preblended (i.e., mixed together) for simple addition to an organic material to be stabilized. Individual components of the stabilizer composition, and optional further co-stabilizers and/or co-additives, can also be sprayed onto the organic material to be stabilized. They are able to dilute other conventional additives or their melts so that they can also be sprayed together with these additives onto the materials to be stabilized. Addition by spraying during the deactivation of any polymerization catalysts can be particularly advantageous as the steam evolved can be used for deactivation of the catalyst. In the case of spherically polymerized polymers, for example, it may be advantageous to apply individual additive components of the stabilizer composition optionally together with other additives, by spraying.

Accordingly, in one aspect the invention provides stabilizer compositions having a stabilizing amount of an ultraviolet light absorber (UVA) selected from the group consisting of orthohydroxybenzophenone compounds; orthohydroxyphenyl benzotriazole compounds; and mixtures thereof; and from 1 wt.% to 99 wt. % of a co-active agent based on the total weight of the stabilizer composition. In certain embodiments, the stabilizer compositions can further include a stabilizing amount of a hindered amine light stabilizer (HALS).

Reference has been made to this point to the stabilizer composition of the invention as a "neat" composition (i.e., not diluted or mixed with other substances) containing the co-active agent and the UV stabilizer, which can optionally include further UV stabilizers, co-stabilizers, and/or co-additives. In another aspect, however, the invention also includes masterbatch concentrates having a stabilizer composition as described in any embodiment herein, and an organic material that is identical to or compatible with an organic material to be stabilized. In this context, the organic material identical to or compatible with the organic material to be stabilized acts as a carrier vehicle of the stabilizer compositions described herein, which is then admixed with the organic material to be stabilized. While the amount of stabilizer composition present as a portion of the total masterbatch concentrate will vary based on, for example, the type of material to be stabilized and/or its end-use application, in some embodiments the stabilizer composition will be present in an amount from 10 wt. % to 90 wt. %, based on the total weight of the masterbatch concentrate. In other embodiments, the stabilizer composition can be present at from 30 wt. % to 80 wt. %; or from 40 wt. % to 75 wt. % of the total weight of masterbatch concentrate.

In yet another aspect of the stabilizer compositions described herein, the invention provides kits having in one or more containers at least one stabilizer composition as described herein, or a co-active agent and UV stabilizer of such stabilizer compositions, and/or an organic material to be stabilized. The kit may include single or multiple components of at least one stabilizer composition according to the invention, at least one material to be stabilized (e.g., a polymer composition such as a polyolefin), and optionally at least one further co-stabilizer and/or co-additive, each packaged or formulated individually. In other embodiments, the kit can have single or multiple components of at least one stabilizer composition according to the invention, at least one material to be stabilized, and optionally at least one further co-stabilizer and/or co-additive packaged or formulated in combination.

Thus, one or more components of a stabilizer composition as herein described (e.g., co-active agent + UVA; co-active agent + HALS, or co-active agent + UVA + HALS) can be present in first container, and the kit can optionally include one or more components of the stabilizer composition and/or a material to be stabilized in a second or further container. The container or containers can be placed within a package, and the package can optionally include administration or mixing instructions in the form of a label or website address on the package, or in the form of an insert included in the packaging of the kit. A kit can also include additional components or other means for administering or mixing the components, as well as solvents or other means for formulation.

Co-active Agents. As discussed above, the co-active agents refer to any additive or additive mixtures that acts synergistically with a UV absorber, optionally in combination with HALS, to effectively stabilize organic materials from the deleterious effects of UV light, heat and/or oxidation. In certain embodiments, the combination of co-active agent and UV absorber, and optionally in combination with HALS, does not significantly reduce the surface tension properties of the organic material such that an article of manufacture made therefrom possesses a contact angle with water at the surface of such article of manufacture of greater than 20°. While certain of these co-active agents have been known in the art as being useful at certain concentrations for providing specific properties to the materials in which they are contained, it was heretofore unknown that these co-active agents provide a synergistic effect on the stabilization properties of UV absorbers, optionally in combination with radical stabilizers such as hindered light amines, and as demonstrated for the first time prove to be effective for stabilizing a variety of organic materials susceptible to the deleterious effects caused by exposure to heat and/or light such as from electromagnetic radiation.

In certain embodiments the stabilizing amount of co-active agent for the stabilizer compositions described herein can be selected from the group consisting of C₁₂-C₆₀ monohydric alcohols; alkoxylated alcohols or monoalkyl ethers thereof; and mixtures thereof.

In some embodiments, the co-active agent can be a C₁₂-C₆₀ monohydric alcohol,. When the co-active agent is a monohydric alcohol, the monohydric alcohol can be a C₁₂-C₃₆ alkanol, and preferably C₁₂-C₂₂, that is a primary, secondary, linear, branched, or cyclic (i.e., cycloalkanol) alcohol. Such alcohols are well known to those skilled in the art and are commercially available by a number of suppliers under various trade names. Generally suitable alkanols for the present invention include, but are not limited to, 1-dodecanol; 1-tridecanol; 1-tetradecanol; 1-pentadecanol; 1-hexadecanol; 1-heptadecanol; 1-octadecanol; 1-nonadecanol; 1-eicosanol; 1-docosanol; 1-tetracosanol; 1-hexacosanol; 1 octacosanol; 1-triacontanol; 2-methyl-1-undecanol; 2-propyl-1-nonanol; 2-butyl-1-octanol; 2-methyl-1-tridecanol; 2-ethyl-1-dodecanol; 2-propyl-1-undecanol; 2-butyl-1-decanol; 2-pentyl-1-nonanol; 2-hexyl-1-octanol; 2-methyl-1-pentadecanol; 2-ethyl-1-tetradecanol; 2-propyl-1-tridecanol; 2-butyl-1-dodecanol; 2-pentyl-1-undecanol; 2-hexyl-1-decanol; 2-heptyl-1-decanol; 2-hexyl-1-nonanol; 2-octyl-1-octanol; 2-methyl-1-heptadecanol; 2-ethyl-1-hexadecanol; 2-propyl-1-pentadecanol; 2-butyl-1-tetradecanol; 1-pentyl-1-tridecanol; 2-hexyl-1-dodecanol; 2-octyl-1-decanol; 2-nonyl-1-nonanol; 2-dodecanol; 3-dodecanol; 4-dodecanol; 5-dodecanol; 6-dodecanol; 2-tetradecanol; 3-tetradecanol; 4-tetradecanol; 5-tetradecanol; 6 -tetradecanol; tetradecanol; 7-tetradecanol; 2-hexadecanol; 3-hexadecanol; 4-hexadecanol; 5-hexadecanol; 6-hexadecanol; 7-hexadecanol; 8-hexadecanol; 2-octadecanol; 3-octadecanol; 4-octadecanol; 5-octadecanol; 6-octadecanol; 7-octadecanol; 8-octadecanol; 9-octadecanol; 9-octadedcanol-1; 2,4,6,8-tetramethyl-1-nonanol; 3,5,5,7,7-pentamethyl-1-octanol; 3-butyl-1-nonanol; 3-butyl-1-undecanol; 3-hexyl-1-undecanol; 3-hexyl-1-tridecanol; 3-octyl-1-tridecanol; 2-methyl-2-undecanol; 3-methyl-3-undecanol; 4-methyl-4-undecanol; 2-methyl-2-tridecanol; 3-methyl-3-tridecanol; 4-methyl-3-tridecanol; 4-methyl-4-tridecanol; 3-ethyl-3-decanol; 3-ethyl-3-dodecanol; 2,4,6,8-tetramethyl-2-nonanol; 2-methyl-3-undecanol; 2-methyl-4-undecanol; 4-methyl-2-undecanol; 5-methyl-2-undecanol; 4-ethyl-2-decanol; 4-ethyl-3-decanol; and mixtures thereof.

In the same or other embodiments, the co-active agent can include an alkoxylated alcohol, or a monoalkyl ether thereof. In certain embodiments, the co-active agent can be an alkoxylated alcohol, or monalkyl ether thereof, according to Formula (III):

R-(OCHR'CH₂)_{y}-OR" (III)

wherein R is a hydrocarbyl group having from 12 to 60 carbon atoms; R' is chosen from H or C₁-C₄ alkyl; R" is chosen from H or a hydrocarbyl group having from 1 to 10 carbon atoms; and y is an integer from 1 to 100.

The term "hydrocarbyl" as used herein is a generic term encompassing aliphatic, alicyclic and aromatic groups having an all-carbon backbone and consisting of carbon and hydrogen atoms. In certain cases, as defined herein, one or more of the carbon atoms making up the carbon backbone may be optionally replaced or interrupted by a specified atom or group of atoms, such as by one or more heteroatom of N, O, and/or S. Examples of hydrocarbyl groups include alkyl, cycloalkyl, cycloalkenyl, carbocyclic aryl, alkenyl, alkynyl, alkylcycloalkyl, cycloalkylalkyl, cycloalkenylalkyl, and carbocyclic aralkyl, alkaryl, aralkenyl and aralkynyl groups.

Such hydrocarbyl groups can also be optionally substituted by one or more substituents as defined herein. The examples and preferences expressed below also apply to each of the hydrocarbyl substituent groups or hydrocarbyl-containing substituent groups referred to in the various definitions of substituents for compounds of the formulas described herein unless the context indicates otherwise.

Preferred non-aromatic hydrocarbyl groups are saturated groups such as alkyl and cycloalkyl groups. Generally, and by way of example, the hydrocarbyl groups can have up to one hundred carbon atoms, unless the context requires otherwise. Hydrocarbyl groups with from 1 to 60 carbon atoms are preferred, with 1 to 36 carbons more preferred. Within the sub-set of hydrocarbyl groups, particular examples are C₁₂₋₆₀ hydrocarbyl groups, C₁₂₋₃₀ hydrocarbyl groups, C₁₂₋₂₂ hydrocarbyl groups, C₁₋₁₀ hydrocarbyl groups, or C₁₋₄ hydrocarbyl groups, although any individual value, range, or combination of values selected from C₁ through C₆₀ hydrocarbyl groups is contemplated by the inventors as if specifically recited herein.

As indicated by the context used herein, the term "alkyl" is intended to include linear, branched, or cyclic hydrocarbon structures and combinations thereof. Lower alkyl refers to alkyl groups of from 1 to 6 carbon atoms. Examples of lower alkyl groups include methyl, ethyl, propyl, isopropyl, butyl, s-and t-butyl, pentyl, hexyl, or cyclohexyl and the like. Preferred alkyl groups include those of C₃₆ or below.

Accordingly, in certain embodiments, R of Formula (III) can be an alkyl group having from 12 to 30 carbon atoms. In other embodiments, R can contain from 12 to 22 carbon atoms, and ideally from 12 to 18 carbons, or 12 to 15 carbons.

The terms "alkoxy," "alkoxyalkyl," or "alkoxylated" as used herein refer to groups of from 1 to 20 carbon atoms of a straight, branched, or cyclic configuration, or combinations thereof either attached to the parent structure through an oxygen atom, or incorporated into the backbone of a moiety via an oxygen atom. Examples include methoxy, ethoxy, propoxy, isopropoxy, butoxy, cyclopropyloxy, cyclohexyloxy and the like.

Thus, in certain embodiments, or in the same embodiments as those previously described with respect to Formula (III), R' can be methyl or ethyl. In still other embodiments, R' can be H.

Accordingly, in certain embodiments the stabilizer compositions according to the present invention can include a co-active agent that can be alkoxylated with one or more alkoxide. In some embodiments, the co-active agent according to Formula (III) can be ethoxylated. In other embodiments, the co-active agent according to Formula (III) can be propoxylated. In the same or other embodiments, the co-active agent according to Formula (III) can include a mixture of ethoxylated alcohols and propoxylated alcohols, or can be an alcohol that is both ethoxylated and propoxylated.

While the degree of alkoxylation (i.e., the number of ethoxy and/or propoxy groups in the co-active agent) can vary amongst co-active agents, the degree of alkoxylation contemplated by the inventors for the co-active agents described herein ranges from 1 to 100. In certain embodiments, the degree of alkoxylation given by "y" of the co-active agent according to Formula (III) can range from 1 to 75. In other embodiments, the degree of alkoxylation can range from 2 to 25, or from 2 to 12.

In any of the embodiments discussed above for the co-active agent according to Formula (III), the co-active agent can be an alcohol, such as when R" is H. In other embodiments, the co-active agent can be a monoalkyl ether derived from such alcohol, such as when R" is a hydrocarbyl having from 1 to 10 carbon atoms. In one embodiment where the co-active agent is a monoalkyl ether according to Formula (III), R" is methyl.

In certain embodiments, the co-active agent can be selected from one or more of the following ethoxylated and/or propoxylated alcohols, wherein the alcohol is chosen from docosyl alcohol; stearyl alcohol; oleyl alcohol; cetyl alcohol; isotridecyl alcohol; lauryl alcohol; C₁₂-C₃₀ alcohols; C₁₆/C₁₈ alcohol mixtures; C₂₀-C₅₀ alcohols; or monoalkyl ethers of these ethoxylated and/or propoxylated alcohols. In a particular embodiment, the co-active agent is an ethoxylated and propoxylated C₁₂-C₃₀ alcohol. In another particular embodiment, the co-active agent can be a mixture of ethoxylated and propoxylated C₁₂-C₁₅ alcohols having from 2 to 5 ethylene oxide groups and propylene oxide groups.

While the alkoxylated alcohols or monoalkyl ethers thereof according to Formula (III) of the invention can be made by known methods already available to those of ordinary skill in the art, there are also a host of such compounds presently commercially available. Such commercially available alkoxylated compounds include, but are not limited to, any of the alkoxylated alcohols commercially available or known under the BRIJ^{®} trade name (available from Sigma Aldrich, St. Louis, MO); JEECOL^{®} (available from Jeen Int'l Corp.); NOVEL^{®} (available from Sasol Olefins & Surfactants, Hamburg, Germany); UNITHOX^{®} Ethoxylates (available from Baker Hughes, Inc.); GENAPOL^{®} (available from Clariant SE, Switzerland); and HETOXOL^{®} (available from Global Seven, Rockaway, NJ). While the compounds can generally be in any form (i.e., liquid, solid, semi-solid, flake, pastille), solids or semi-solid forms are preferred.

In certain embodiments, the co-active agent can be chosen from any one or more of diethylene glycol octadecyl ether (available as BRIJ^{®} S2); triethylene glycol octadecyl ether (available as BRIJ^{®} S3); 2-(dodecyloxy) ethanol (available as laureth 2); polyoxyethylene (5) octadecyl ether (available as Steareth-5); polyoxyethylene (10) octadecyl ether (available as JEECOL^{®} SA-10); polyoxyethylene (2) oleyl ether (available as BRIJ^{®} 93); polyoxyethylene docosyl ether (available as NOVEL^{®} 22-4); polyoxyethylene (2.6) saturated linear, C₂₀ to C₅₀ synthetic alcohol (available as UNITHOX^{®} 420); C₁₂-C₁₅ oxo alcohol having 2 EO and 5 PO (available as GENAPOL^{®} EP 2525); C₁₂-C₁₅ oxo alcohol having 5 EO and 2 PO (available as GENAPOL^{®} EP 2552); or polyoxyethylene (4) oleyl ether (available as HETOXOL^{®} OL-4).

UV stabilizers and co-additives. With regard to the UV stabilizer system of the stabilizer composition, UVAs that are suitable for use with the co-active agents described herein include one or more of orthohydroxybenzophenones, or orthohydroxyphenylbenzotriazoles compounds. In some embodiments, the UVA component of the stabilizer composition includes orthohydroxybenzophenones, or orthohydroxyphenyl benzotriazoles individually. In other embodiments, the UVA component includes a combination of two or more of such UVA compounds. Orthohydroxybenzophenones, and orthohydroxybenzotriazles are also well known to those skilled in the art of stabilizer additive technology. Their suitability for use as a component of stabilizer compositions has been previously disclosed and treated in at least U.S. Patent Nos. 2,976,259; 3,049,443; 3,399,169; 4,322,455; 4,446,262; 5,264,539; 6,051,164; 6,677,392; and 6,774,232, as well as U.S Publication No. 2006/0052491, the benzophenones, and benzotriazoles of which are incorporated herein by reference as suitable for use with the stabilizer compositions of the instant invention.

Some other non-limiting examples of orthohydroxybenzophenones for use with the stabilizer compositions contemplated herein include any one or more of 2-hydroxy-4-methoxybenzophenone (commercially available from Cytec Industries Inc. as CYASORB^{®} UV-9); 2,2'-dihydroxy-4-methoxybenzophenone (commercially available from Cytec Industries Inc. as CYASORB^{®} UV-24); 2-hydroxy-4-octyloxybenzophenone (commercially available from Cytec Industries Inc. as CYASORB^{®} UV-531); 2'-dihydroxy-4,4'-dimethoxybenzophenone; 2,2'-dihydroxybenzophenone; 2,2',4,4'-tetrahydroxybenzophenone; 2,2'-dihydroxy-4,4'-dimethoxybenzophenone; 2,2'-dihydroxy-4,4'-diethoxybenzophenone; 2,2'-dihydroxy-4,4'-dipropoxybenzophenone; 2,2'-dihydroxy-4,4'-dibutoxybenzophenone; 2,2'-dihydroxy-4-methoxy-4'-ethoxybenzophenone; 2,2'-dihydroxy-4-methoxy-4'-propoxybenzophenone; 2,2'-dihydroxy-4-methoxy-4'-butoxybenzophenone; 2,2'-dihydroxy-4-ethoxy-4'-propoxybenzophenone; 2,2'-dihydroxy-4-ethoxy-4'-butoxybenzophenone; 2,3'-dihydroxy-4,4'-dimethoxybenzophenone; 2,3'-dihydroxy-4-methoxy-4'-butoxybenzophenone; 2-hydroxy-4,4',5'-trimethoxybenzophenone; 2-hydroxy-4,4',6'-tributoxybenzophenone; 2-hydroxy-4-butoxy-4',5'-dimethoxybenzophenone; 2-hydroxy-4-ethoxy-2',4'-dibutylbenzophenone; 2-hydroxy-4-propoxy-4',6'-dichlorobenzophenone; 2-hydroxy-4-propoxy-4',6'-dibromobenzophenone; 2,4-dihydroxybenzophenone; 2-hydroxy-4-ethoxybenzophenone; 2-hydroxy-4-propoxybenzophenone; 2-hydroxy-4-butoxybenzophenone; 2-hydroxy-4-methoxy-4'-methylbenzophenone; 2-hydroxy-4-methoxy-4'-ethylbenzophenone; 2-hydroxy-4-methoxy-4'-propylbenzophenone; 2-hydroxy-4-methoxy-4'-butylbenzophenone; 2-hydroxy-4-methoxy-4'-tertiary butylbenzophenone; 2-hydroxy-4-methoxy-4'-chlorobenzophenone; 2-hydroxy-4-methoxy-2'-chlorobenzophenone; 2-hydroxy-4-methoxy-4'-bromobenzophenone; 2-hydroxy-4,4'-dimethoxybenzophenone; 2-hydroxy-4,4'-dimethoxy-3-methylbenzophenone; 2-hydroxy-4,4'-dimethoxy-2'-ethylbenzophenone; 2-hydroxy-4,4',5'-trimethoxybenzophenone; 2-hydroxy-4-ethoxy-4'-methylbenzophenone; 2-hydroxy-4-ethoxy-4'-ethylbenzophenone; 2-hydroxy-4-ethoxy-4'-propylbenzophenone; 2-hydroxy-4-ethoxy-4'-butylbenzophenone; 2-hydroxy-4-ethoxy-4'-methoxybenzophenone; 2-hydroxy-4,4'-diethoxybenzophenone; 2-hydroxy-4-ethoxy-4'-propoxybenzophenone; 2-hydroxy-4-ethoxy-4'-butoxybenzophenone; 2-hydroxy-4-ethoxy-4'-chlorobenzophenone; or 2-hydroxy-4-ethoxy-4'-bromobenzophenone.

Some other non-limiting examples of orthohydroxyphenyl benzotriazoles useful in the UVA component of the stabilizer compositions described herein include any one or more of those commercially available from Cytec Industries Inc. (e.g., CYASORB^{®} UV-5411), or 2-(2'-hydroxy-5'-methylphenyl)-benzotriazole; 2-(2'-hydroxy-5'-tert-butylphenyl)benzotriazole; 2-(2'-hydroxy-3'-methyl-5'-tert-butylphenyl)-benzotriazole; 2-(2'-hydroxy-5'-cyclohexylphenyl)-benzotriazole; 2-(2'-hydroxy-3',5'-dimethylphenyl)-benzotriazole; 2-(2'-hydroxy-5'-tert-butylphenyl)-5-chloro-benzotriazole; 2-(2'-hydroxy-5-tert-octylphenyl)-2H-benzotriazole; 2-(2'-hydroxy-5-octylphenyl)-2H-benzotriazole; 2-(3',5'-di-tert-butyl-2'-hydroxyphenyl)-5-chlorobenzotriazole; 2-(3',5'-di-tert-amyl-2'-hydroxyphenyl)benzotriazole (commercially available from Cytec Industries Inc. as CYASORB^{®} UV-2337); 2-(3',5'-bis(α,α-dimethylbenzyl)-2'-hydroxyphenyl)benzotriazole; 2-(3'-tert-butyl-2'-hydroxy-5'-(2-octyloxycarbonylethyl)phenyl)benzotriazole; 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 2-[2'-hydroxy-3'-(α,α-dimethylbenzyl)-5'-(1,1,3,3-tetramethyl- butyl)phenyl]benzotriazole; 5-trifluoromethyl-2-(2-hydroxy-3-α-cumyl-5-tert-octylphenyl)-2H-benzotriazole; 2-(2'-hydroxy-5'-(2-hydroxyethyl)phenyl)benzotriazole; 2-(2'-hydroxy-5'-(2-methacryloyloxyethyl)phenyl)benzotriazole; 2-(3'-tert-butyl-5'-methyl-2'-hydroxyphenyl)-5-chloro-benzotriazole; 2-(3'-sec-butyl-5'-tert.butyl-2'-hydroxyphenyl)-benzotriazole; 2-(3',5'-di-tert-butyl-2'-hydroxyphenyl)-benzotriazole; 2-(5'-tert-octyl-2'-hydroxyphenyl)-benzotriazole; 2-(3'-dodecyl-5'-methyl-2'-hydroxyphenyl)-benzotriazole; 2-(3'-tert-butyl-5'-(2-octyloxycarbonylethyl)-2'-hydroxyphenyl)-5-chlorobenzotriazole; 2-(5'-methyl-2'-hydroxyphenyl)-benzotriazole; 2-(5'-tert-butyl-2'-hydroxyphenyl)-benzotriazole; or 2-(2'-hydroxy-3'-di-tert-butylphenyl)-benzotriazole.

As previously discussed HALS compounds scavenge free radicals formed in polymeric materials when exposed to UV light, and are more effective than when certain UVAs are used alone. The benefits imparted by various HALS compounds in combination with UVAs have been demonstrated in at least U.S. Patent Nos. 6,051,164 and 6,843,939, which teachings are incorporated herein by reference. Accordingly, in certain embodiments the stabilizer compositions described herein can further include a stabilizing amount of one or more HALS compound that includes a functional group according to Formula (II): 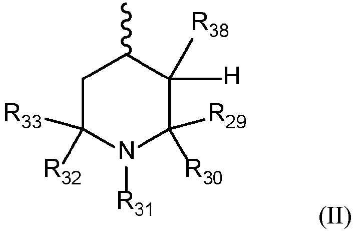 wherein
R₃₁ is chosen from: hydrogen; OH; C₁-C₂₀ hydrocarbyl; -CH₂CN; C₁-C₁₂ acyl; or C₁-C₁₈ alkoxy;
R₃₈ is chosen from: hydrogen; or C₁-C₈ hydrocarbyl; and
each of R₂₉, R₃₀, R₃₂, and R₃₃ is independently chosen from C₁-C₂₀ hydrocarbyl, or R₂₉ and R₃₀ and/or R₃₂ and R₃₃ taken together with the carbon to which they are attached form a C₅-C₁₀ cycloalkyl; or
a functional group according to Formula (IIa): 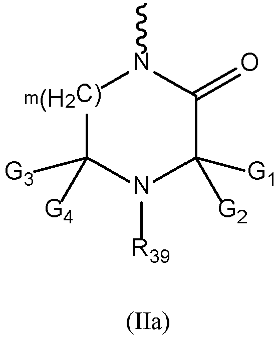
wherein
m is an integer from 1 to 2;
R₃₉ is chosen from: hydrogen; OH; C₁-C₂₀ hydrocarbyl; -CH₂CN; C₁-C₁₂ acyl; or C₁-C₁₈ alkoxy; and
each of G₁-G₄ is independently chosen from C₁-C₂₀ hydrocarbyl.

Exemplary HALS compounds contemplated for use as a component of the stabilizer compositions described herein can include one or more of those commercially available from Cytec Industries Inc. such as mixture of 4-hexadecyloxy- and 4-stearyloxy-2,2,6,6-tetramethylpiperidine (e.g., CYASORB^{®} UV-3853), or bis(2,2,6,6-tetramethylpiperidin-4-yl) sebacate; bis(2,2,6,6-tetramethylpiperidin-4-yl)succinate; bis(1,2,2,6,6-pentamethylpiperidin-4-yl)sebacate; bis(1-octyloxy-2,2,6,6-tetramethylpiperidin-4-yl)sebacate; bis(1,2,2,6,6-pentamethylpiperidin-4-yl) n-butyl 3,5-di-tert-butyl-4-hydroxybenzylmalonate; a condensate of 1-(2-hydroxyethyl)-2,2,6,6-tetramethyl-4-hydroxypiperidine and succinic acid; 2,2,6,6-tetramethylpiperidin-4-yl stearate; 2,2,6,6-tetramethylpiperidin-4-yl dodecanate; 1,2,2,6,6-pentamethylpiperidin-4-yl stearate; 1,2,2,6,6-pentamethylpiperidin-4-yl dodecanate; a condensate of N,N'-bis(2,2,6,6-tetramethylpiperidin-4-yl)hexamethylenediamine and 4-tert-octylamino-2,6-dichloro-1,3,5-triazine; tris(2,2,6,6-tetramethylpiperidin-4-yl) nitrilotriacetate; tetrakis(2,2,6,6-tetramethylpiperidin-4-yl)- 1,2,3,4-butanetetracarboxylate; 4-benzoyl-2,2,6,6-tetramethylpiperidine; 4-stearyloxy-2,2,6,6-tetramethylpiperidine; bis(1,2,2,6,6-pentamethylpiperidyl)-2-n-butyl-2-(2-hydroxy-3,5-di-tert-butylbenzyl)malonate; 3-n-octyl-7,7,9,9-tetramethyl-1,3,8-triazaspiro[4.5]decan-2,4-dione; bis(1-octyloxy-2,2,6,6-tetramethylpiperidyl)sebacate; bis(1-octyloxy-2,2,6,6-tetramethylpiperidyl)succinate; a condensate of N,N'-bis(2,2,6,6-tetramethylpiperidin-4-yl)hexamethylenediamine and 4-morpholino-2,6-dichloro-1,3,5-triazine (commercially available from Cytec Industries Inc. as CYASORB^{®} UV-3346); a condensate of N,N'-bis(2,2,6,6-tetramethylpiperidin-4-yl)hexamethylenediamine and 4-morpholino-2,6-dichloro-1,3,5-triazine, methylated (commercially available from Cytec Industries Inc. as CYASORB^{®} UV-3529); a condensate of 2-chloro-4,6-bis(4-n-butylamino-2,2,6,6-tetramethylpiperidyl)-1,3,5-triazine and 1,2-bis(3-aminopropylamino)ethane; a condensate of 2-chloro-4,6-bis(4-n-butylamino-1,2,2,6,6-pentamethylpiperidyl)-1,3,5-triazine and 1,2-bis-(3- aminopropylamino)ethane; 8-acetyl-3-dodecyl-7,7,9,9-tetramethyl-1,3,8-triazaspiro[4.5]decane-2,4-dione; 3-dodecyl-1-(2,2,6,6-tetramethylpiperidin-4-yl)pyrrolidin-2,5-dione; 3-dodecyl-1-(1-ethanoyl-2,2,6,6-tetramethylpiperidin-4-yl)pyrrolidin-2,5-dione; 3-dodecyl-1-(1,2,2,6,6-pentamethylpiperidin-4-yl)pyrrolidine-2,5-dione; a mixture of 4-hexadecyloxy- and 4-stearyloxy-2,2,6,6-tetramethylpiperidine; a mixture of 4-hexadecyloxy- and 4-stearyloxy-1,2,2,6,6-pentamethylpiperidine; a condensate of N,N'-bis(2,2,6,6-tetramethylpiperidin-4-yl)hexamethylenediamine and 4-cyclohexylamino-2,6-dichloro-1,3,5-triazine; a condensate of 1,2-bis(3-aminopropylamino)ethane, 2,4,6-trichloro-1,3,5-triazine and 4-butylamino-2,2,6,6-tetramethylpiperidine; 2-undecyl-7,7,9,9-tetramethyl-1-oxa-3,8-diaza-4-oxospiro[4.5]decane; oxo-piperanzinyl-triazines; a reaction product of 7,7,9,9-tetramethyl-2-cycloundecyl-1-oxa-3,8-diaza-4-oxospiro[4.5]decane and epichlorohydrin; tetrakis(2,2,6,6-tetramethyl-4-piperidyl) butane-1,2,3,4-tetracarboxylate; 1,2,3,4-butanetetracarboxylic acid, tetrakis(1,2,2,6,6-pentamethyl-4-piperidinyl)ester; 1,2,3,4-butanetetracarboxylic acid, 1,2,2,6,6-pentamethyl-4-piperdinyl tridecyl ester; 1,2,3,4-butanetetracarboxylic acid, 2,2,6,6-tetramethyl-4-piperidinyl tridecyl ester; 1,2,3,4-butanetetracarboxylic acid, polymer with 2,2,6,6-tetramethyl-2,4,8,10-tetraoxaspiro[5.5]-undecane-3,9-diethanol,1,2,2,6,6-pentamethyl-4-piperdinyl ester; 1,2,3,4-butanetetracarboxylic acid, polymer with 2,2,6,6-tetramethyl-2,4,8,10-tetraoxaspiro[5.5]-undecane-3,9-diethanol, 2,2,6,6-tetramethyl-4-piperdinyl ester; bis(1-undecanoxy-2,2,6,6-tetramethylpiperidin-4-yl)carbonate; 1-(2-hydroxy-2-methylpropoxy)-2,2,6,6-tetramethyl-4-piperdinol; 1-(2-hydroxy-2-methylpropoxy)-4-octadecanoyloxy-2,2,6,6-tetramethylpiperidine; 1-(4-octadecanoyloxy-2,2,6,6-tetramethylpiperidin-1-yloxy)-2-octadecanoyloxy-2-methylpropane; 1-(2-hydroxyethyl)-2,2,6,6-tetramethyl-4-piperdinol; a reaction product of 1-(2-hydroxyethyl)-2,2,6,6-tetramethyl-4-piperdinol and dimethylsuccinate; 2,2,4,4-tetramethyl-7-oxa-3,20-diazadispiro[5.1.11.2]heneicosan-21-one; the ester of 2,2,6,6-tetramethyl-4-piperidinol with higher fatty acids; 3-dodecyl-1-(2,2,6,6-tetramethyl-4-piperidyl)pyrrolidine-2,5-dione; 1H-Pyrrole-2,5-dione, 1-octadecyl-, polymer with (1-methylethenyl)benzene and 1-(2,2,6,6-tetramethyl-4-piperidinyl)-1H-pyrrole-2,5-dione; piperazinone, 1,1',1"-[1,3,5-triazine-2,4,6-triyltris[(cyclohexylimino)-2,1-ethanediyl]]tris[3,3,5,5-tetramethyl-; piperazinone, 1,1',1"-[1,3,5-triazine-2,4,6-triyltris[(cyclohexylimino)-2,1-ethanediyl]]tris[3,3,4,5,5-pentamethyl-; the reaction product of 7,7,9,9-tetramethyl-2-cycloundecyl-1-oxa-3,8-diaza-4-oxospiro[4.5]decane and epichlorohydrin; the condensate of N,N'-bis(2,2,6,6-tetramethylpiperidin-4-yl)hexamethylenediamine and 4-cyclohexylamino-2,6-dichloro-1,3,5-triazine; the condensate of 1,2-bis(3-aminopropylamino)ethane, 2,4,6-trichloro-1,3,5-triazine and 4-butylamino-2,2,6,6-tetramethylpiperidine; the condensate of N,N'-bis(2,2,6,6-tetramethylpiperidin-4-yl)hexamethylenediamine and 4-morpholino-2,6-dichloro-1,3,5-triazine; the condensate of 2-chloro-4,6-bis(4-n-butylamino-2,2,6,6-tetramethylpiperidyl)-1,3,5-triazine and 1,2-bis(3-aminopropylamino)ethane; the condensate of 2-chloro-4,6-bis(4-n-butylamino-1,2,2,6,6-pentamethylpiperidyl)-1,3,5-triazine and 1,2-bis-(3-aminopropylamino)ethane; 2-[(2-hydroxyethyl)amino]-4,6-bis[N-(1-cyclohexyloxy-2,2,6,6-tetramethylpiperidin-4-yl)butylamino-1,3,5-triazine; propanedioic acid, [(4-methoxyphenyl)-methylene]-bis-(1,2,2,6,6-pentamethyl-4-piperidinyl) ester; tetrakis(2,2,6,6-tetramethylpiperidin-4-yl)-1,2,3,4-butanetetracarboxylate; benzenepropanoic acid, 3,5-bis(1,1-dimethylethyl)-4-hydroxy-, 1-[2-[3-[3,5-bis(1,1-dimethylethyl)-4-hydroxyphenyl]-1-oxopropoxy]ethyl]-2,2,6,6-tetramethyl-4-piperidinyl ester; N-(1-octyloxy-2,2,6,6-tetramethylpiperidin-4-yl)-N'-dodecyloxalamide; tris(2,2,6,6-tetramethylpiperidin-4-yl) nitrilotriacetate; 1,5-dioxaspiro{5,5}undecane-3,3-dicarboxylic acid, bis(1,2,2,6,6-pentamethyl-4-piperidinyl): 1,5-dioxaspiro{5,5}undecane-3,3-dicarboxylic acid, bis(2,2,6,6-tetramethyl-4-piperidinyl); the condensate of 1-(2-hydroxyethyl)-2,2,6,6-tetramethyl-4-hydroxypiperidine and succinic acid; the condensate of N,N'-bis(2,2,6,6-tetramethylpiperidin-4-yl)hexamethylenediamine and 4-tert-octylamino-2,6-dichloro-1,3,5-triazine; 1,2,3,4-butanetetracarboxylic acid, 1,2,2,6,6-pentamethyl-4-piperidinyl tridecyl ester; tetrakis(2,2,6,6-tetramethylpiperidin-4-yl)-1,2,3,4-butanetetracarboxylate; 1,2,3,4-butanetetracarboxylic acid, 2,2,6,6-tetramethyl-4-piperidinyl tridecyl ester; tetrakis(1,2,2,6,6-pentamethylpiperidin-4-yl)-1,2,3,4-butanetetracarboxylate; mixture of 2,2,4,4-tetramethyl-21-oxo-7-oxa-3.20-diazaspiro(5.1.11.2)-heneicosane-20-propanoic acid-dodecylester and 2,2,4,4-tetramethyl-21-oxo-7-oxa-3.20-diazaspiro(5.1.11.2)-heneicosane-20-propanoic acid-tetradecylester; 1H,4H,5H,8H-2,3a,4a,6,7a,8a-hexaazacyclopenta[def]fluorene-4,8-dione, hexahydro-2,6-bis(2,2,6,6-tetramethyl-4-piperidinyl)-; polymethyl[propyl-3-oxy(2',2',6',6'-tetramethyl-4,4'-piperidinyl)]siloxane; polymethyl[propyl-3-oxy(1',2',2',6',6'-pentamethyl-4,4'-piperidinyl)]siloxane; copolymer of methylmethacrylate with ethyl acrylate and 2,2,6,6-tetramethylpiperidin-4-yl acrylate; copolymer of mixed C₂₀ to C₂₄ alpha-olefins and (2,2,6,6-tetramethylpiperidin-4-yl)succinimide; 1,2,3,4-butanetetracarboxylic acid, polymer with β,β,β',β'-tetramethyl-2,4,8,10-tetraoxaspiro[5.5]undecane-3,9-diethanol, 1,2,2,6,6-pentamethyl-4-piperidinyl ester; 1,2,3,4-butanetetracarboxylic acid, polymer with β,β,β',β'-tetramethyl-2,4,8,10-tetraoxaspiro[5.5]undecane-3,9-diethanol, 2,2,6,6-tetramethyl-4-piperidinyl ester copolymer; 1,3-benzenedicarboxamide, N,N'-bis(2,2,6,6-tetramethyl-4-piperidinyl; 1,1'-(1,10-dioxo-1,10-decanediyl)-bis(hexahydro-2,2,4,4,6-pentamethylpyrimidine; ethane diamide, N-(1-acetyl-2,2,6,6-tetramethylpiperidinyl)-N'-dodecyl; formamide, N,N'-1,6-hexanediylbis[N-(2,2,6,6-tetramethyl-4-piperidinyl); D-glucitol, 1,3:2,4-bis-O-(2,2,6,6-tetramethyl-4-piperidinylidene)-; 2,2,4,4-tetramethyl-7-oxa-3,20-diaza-21-oxo-dispiro[5.1.11.2]heneicosane; propanamide, 2-methyl-N-(2,2,6,6-tetramethyl-4-piperidinyl)-2-[(2,2,6,6-tetramethyl-4-piperidinyl)amino]-; 7-oxa-3,20-diazadispiro[5.1.11.2]heneicosane-20-propanoic acid, 2,2,4,4-tetramethyl-21-oxo-, dodecyl ester; N-(2,2,6,6-tetramethylpiperidin-4-yl)-β-aminopropionic acid dodecyl ester; N-(2,2,6,6-tetramethylpiperidin-4-yl)-N'-aminooxalamide; propanamide, N-(2,2,6,6-tetramethyl-4-piperidinyl)-3-[(2,2,6,6-tetramethyl-4-piperidinyl)amino]-; mixture of 4-hexadecyloxy- and 4-stearyloxy-2,2,6,6-tetramethylpiperidine; 3-dodecyl-1-(1,2,2,6,6-pentamethylpiperidin-4-yl)pyrrolidine-2,5-dione; 3-dodecyl-1-(1-ethanoyl-2,2,6,6-pentamethylpiperidin-4-yl)pyrrolidine-2,5-dione; bis(2,2,6,6-tetramethylpiperidin-4-yl)succinate; bis(1,2,2,6,6-pentamethylpiperidin-4-yl) n-butyl 3,5-di-tert-butyl-4-hydroxybenzylmalonate; tris(2,2,6,6-tetramethylpiperidin-4-yl) nitrilotriacetate; 1,1'-(1,2-ethanediyl)bis(3,3,5,5-tetramethylpiperazinone); 4-benzoyl-2,2,6,6-tetramethylpiperidine; 4-stearyloxy-2,2,6,6-tetramethylpiperidine; bis(1,2,2,6,6-pentamethylpiperidyl)-2-n-butyl-2-(2-hydroxy-3,5-di-tert-butylbenzyl)malonate; 3-n-octyl-7,7,9,9-tetramethyl-1,3,8-triazaspiro[4.5]decan-2,4-dione; bis(1-octyloxy-2,2,6,6-tetramethylpiperidyl)sebacate; bis(1-octyloxy-2,2,6,6-tetramethylpiperidyl)succinate; 8-acetyl-3-dodecyl-7,7,9,9-tetramethyl-1,3,8-triazaspiro[4.5]decane-2,4-dione; 3-dodecyl-1-(2,2,6,6-tetramethylpiperidin-4-yl)pyrrolidin-2,5-dione; 3-dodecyl-1-(1-ethanoyl-2,2,6,6-tetramethylpiperidin-4-yl)pyrrolidin-2,5-dione; 3-dodecyl-1-(1,2,2,6,6-pentamethylpiperidin-4-yl)pyrrolidine-2,5-dione; a mixture of 4-hexadecyloxy- and 4-stearyloxy-2,2,6,6-tetramethylpiperidine; 2-undecyl-7,7,9,9-tetramethyl-1-oxa-3,8-diaza-4-oxospiro[4.5]decane; 1,5-dioxaspiro{5,5}undecane-3,3-dicarboxylic acid, bis(2,2,6,6-tetramethyl-4-piperidinyl) and 1,5-dioxaspiro{5,5}undecane-3,3-dicarboxylic acid, bis(1,2,2,6,6-pentamethyl-4-piperidinyl); N¹-(β-hydroxyethyl)3,3-pentamethylene-5,5-dimethylpiperazin-2-one; N¹-tert-octyl-3,3,5,5-tetramethyl-diazepin-2-one; N¹-tert-octyl-3,3-pentamethylene-5,5-hexamethylene-diazepin-2-one; N¹-tert-octyl-3,3-pentamethylene-5,5-dimethylpiperazin-2-one; trans-1,2-cyclohexane-bis-(N¹-5,5-dimethyl-3,3-pentamethylene-2-piperazinone; trans-1,2-cyclohexane-bis-(N¹-3,3,5,5-dispiropentamethylene-2-piperazinone); N¹-isopropyl-1,4-diazadispiro-(3,3,5,5)pentamethylene-2-piperazinone; N¹-isopropyl-1,4-diazadispiro-3,3-pentamethylene-5,5-tetramethylene-2-piperazinone; N¹-isopropyl-5,5-dimethyl-3,3-pentamethylene-2-piperazinone; trans-1,2-cyclohexane-bis-N¹-(dimethyl-3,3-pentamethylene-2-piperazinone); N¹-octyl-5,5-dimethyl-3,3-pentamethylene-1,4-diazepin-2-one; N¹-octyl-1,4-diazadispiro-(3,3,5,5)pentamethylene-1,5-diazepin-2-one; TINUVIN^{®} XT 200 (available from BASF); or 1,6-hexanediamine, N,N'-bis(2,2,6,6-tetramethyl-4-piperidinyl)-, polymer with 2,4,6-trichloro-1,3,5-triazine, reaction products with 3-bromo-1-propene, n-butyl-1-butanamine and N-butyl-2,2,6,6-tetramethyl-4-piperidinamine, oxidised, hydrogenated; (TINUVIN^{®} NOR 371 available from BASF).

The UVA portion of the stabilizer composition as described herein is specifically contemplated to include in various embodiments a combination of one or more orthohydroxybenzophenone compounds and/or, orthohydroxyphenyl benzotriazole compounds in combination with one or more HALS compounds in various suitable ratios to achieve a desired performance property of an organic material to be stabilized.

Similarly, in some embodiments the stabilizer compositions as heretofore described can include any one or more further class of conventional co-stabilizers that include, but are not limited to, hindered benzoates, thioesters, hydroxylamines, antioxidants, hindered phenols, phosphites, phosphonites, benzofuranones, or nitrones. One or more conventional co-additive known to those skilled in the art can also be included, such as, but not limited to, nucleating agents, fillers, metallic stearates, metal oxides, reinforcing agents, plasticizers, lubricants, rheology agents, catalysts, leveling agents, optical brighteners, anti-static agents, blowing agents, flame retardants, dyes, or pigments. Such conventional co-stabilizers and co-additives are well known to those skilled in the art and can include, for example, any of those described in at least U.S. Patent Nos. 7,642,320 and 8,207,070.

Suitable hindered benzoates or benzamides for use with the UVA portion of the stabilizer composition include those according to Formula (VI): 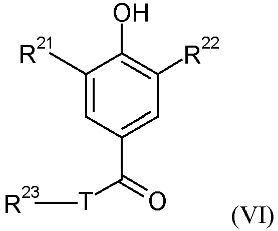 wherein
each of R²¹ and R²² is independently chosen from a C₁₋₁₂ alkyl;
T is chosen from O or NR²⁴, where R²⁴ is H or a C₁₋₃₀ hydrocarbyl; and
R²³ is H or a C₁₋₃₀ hydrocarbyl.

Preferred hindered benzoates can include any one or more of those commercially available from Cytec Industries Inc. such as hexadecyl-3,5-di-tert-butyl-4-hydroxybenzoate (e.g., CYASORB^{®} UV-2908), or 2,4-di-tert-butylphenyl-3,5-di-tert-butyl-4-hydroxybenzoate; octadecyl-3,5-di-tert-butyl-4-hydroxybenzoate; octyl-3,5-di-tert-butyl-4-hydroxybenzoate; decyl-3,5-di-tert-butyl-4-hydroxybenzoate; dodecyl-3,5-di-tert-butyl-4-hydroxybenzoate; tetradecyl-3,5-di-tert-butyl-4-hydroxybenzoate; behenylyl-3,5-di-tert-butyl-4-hydroxybenzoate; 2-methyl-4,6-di-tert-butylphenyl-3,5-di-tert-butyl-4-hydroxybenzoate; or butyl-3-[3-t-butyl-4-(3,5-di-t-butyl-4-hydroxybenzoyloxy)phenyl]propionate.

Suitable thioesters, hydroxylamines, antioxidants, hindered phenols, phosphites, phosphonites, benzofuranones, nitrones, and co-additives include any of those disclosed in U.S. Publication Nos. 2004/0152807; 2009/0085252; 2012/0146257; and 2013/0145962, which are expressly incorporated herein by reference, or known to those skilled in the art.

Preferred hydroxylamines include, but are not limited to, any one or more of N,N-dihydrocarbylhydroxylamine chosen from: N,N-dibenzylhydroxylamine; N,N-diethylhydroxylamine; N,N-dioctylhydroxylamine; N,N-dilaurylhydroxylamine; N,N-didodecylhydroxylamine; N,N-ditetradecylhydroxylaamine; N,N-dihexadecylhydroxylamine; N,N-dioctadecylhydroxylamine; N-hexadecyl-N-tetradecylhydroxylamine; N-hexadecyl-N-heptadecylhydroxylamine; N-hexadecyl-N-octadecylhydroxylamine; N-heptadecyl-N-octadecylhydroxylamine; and N,N-di(hydrogenated tallow)hydroxylamine.

The weight ratio of the co-active agent to the UV stabilizer portion of the stabilizer composition can vary depending on the components within the UV stabilizer portion, the type of material to be stabilized, and/or the application of the stabilized material. In general, the ratio of the co-active agent to the UVA can be present at a weight ratio from 1:50 to 200: 1; 1:40 to 100: 1; or 1:30 to 50: 1. In certain embodiments, the weight ratio of the co-active agent to the UVA + HALS of the stabilizer composition can be from 1:20 to 50: 1. In other embodiments, the ratio of the co-active agent to the UVA + HALS portion is suitable from 1: 10 to 40: 1; or from 1:5 to 20: 1.

Processes/Articles of manufacture. Reference has also been made to use of the stabilizer compositions according to the present invention for stabilizing an organic material. Accordingly, another aspect of the present invention provides processes for stabilizing an organic material subject to degradation and/or discoloration due to effects from light, oxygen, and/or heat, as well as the articles of manufacture thereby obtained. These processes are each achieved by adding before, during, or after processing a stabilizing amount of a stabilizer composition according to the invention as described throughout the specification and claims to the organic material to be stabilized. In certain embodiments, the stabilizer composition can be added to the organic material to be stabilized as a neat composition. In other embodiments, a masterbatch concentrate as described herein can be added to the organic material to be stabilized.

In certain aspects, the invention also provides processes for forming a stabilized article of manufacture, or for protecting an organic material from degradation due to the effects of light and/or heat from UV irradiation, by combining an organic material with a stabilizer composition as herein described. The process can further include shaping the organic material into an article of manufacture by extruding, molding, blowing, casting, thermoforming, or compacting the organic material into an article of manufacture, thereby forming a stabilized article of manufacture. In some embodiments, the process can include combining the organic material with a masterbatch concentrate as herein described.

Those of skill in the art will appreciate that the stabilizer compositions and processes are suitable for use with, and readily adapted to, any industrial polymeric molding process including, but not limited to, injection molding, rotomolding, blow molding, reel-to-reel molding, metal injection molding, compression molding, transfer molding, dip molding, gas assist molding, insert injection molding, micro molding, reaction injection molding, two shot injection molding, as well as any variations or combinations thereof.

In certain embodiments, the stabilizer composition can be present in the stabilized organic material (e.g., in an article of manufacture) from 0.01 wt. % to 15.0 wt. % (i.e., any value from 0.01 wt. % to 15.0 wt. %, including any value therebetween such as 0.01 wt. %; 0.02 wt. %; 0.03 wt. %; 0.04 wt. %; 0.05 wt. %; 0.075 wt. %; 0.10 wt. %; 0.15 wt. %; 0.20 wt. %; 0.25 wt. %; 0.30 wt. %; 0.35 wt.%; 0.50 wt. %; 0.75 wt. %; 1.0 wt. %; 1.5 wt. %; 2.0 wt. %; 2.5 wt. %; 3.0 wt. %; 3.5 wt.%; 5.0 wt. %; 7.5 wt. %; 10.0 wt. %; 12.0 wt. %; 14.0 wt. %; or 15.0 wt. %) based on the total weight of the stabilized organic material, and in some cases based on the number and type of stabilizing additives being added and/or the characteristics of the material to be stabilized.

Accordingly, another aspect of the invention also includes an article of manufacture having an organic material to be stabilized; and
a) from 0.01 wt. % to 15 wt. %, based on the total weight of the article of manufacture, of a stabilizer composition including
   i) a stabilizing amount of an ultraviolet light absorber (UVA) selected from the group consisting of: orthohydroxybenzophenone compounds; orthohydroxyphenyl benzotriazole compounds;; and mixtures thereof;
   ii) from 1 wt.% to 99 wt. % based on the total weight of the stabilizer composition of a co-active agent; and
   iii) a stabilizing amount of a hindered amine light stabilizer compound (HALS) comprising a functional group according to Formula (II): 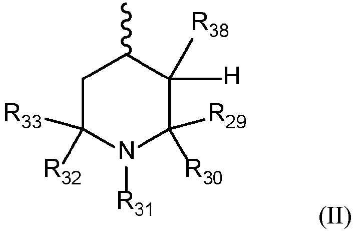
      wherein R₃₁ is chosen from: hydrogen; OH; C₁-C₂₀ hydrocarbyl; -CH₂CN; C₁-C₁₂ acyl; or C₁-C₁₈ alkoxy; R₃₈ is chosen from: hydrogen; or C₁-C₈ hydrocarbyl; and each of R₂₉, R₃₀, R₃₂, and R₃₃ is independently chosen from C₁-C₂₀ hydrocarbyl, or R₂₉ and R₃₀ and/or R₃₂ and R₃₃ taken together with the carbon to which they are attached form a C₅-C₁₀ cycloalkyl; or
      a functional group according to Formula (IIa): 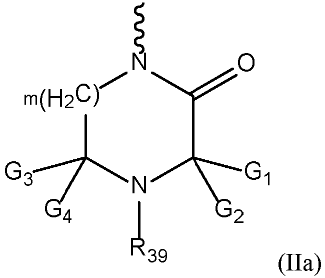
      wherein
      m is an integer from 1 to 2;
      R₃₉ is chosen from: hydrogen; OH; C₁-C₂₀ hydrocarbyl; -CH₂CN; C₁-C₁₂ acyl; or C₁-C₁₈ alkoxy; and
      each of G₁-G₄ is independently chosen from C₁-C₂₀ hydrocarbyl; or
      mixtures of HALS compounds having functional groups according to Formula (II) and Formula (IIa); or
b) a masterbatch concentrate as described herein,
   such that the final concentration of the co-active agent in the article of manufacture is from 0.01 wt. % to 5 wt. %, based on the weight of the article of manufacture.

In some embodiments, the stabilizer composition or masterbatch concentrate can be present from 0.02wt. % to 20 wt. % based on the total weight of the stabilized organic material, or from 0.05 wt. % to 10 wt. % based on the total weight of the stabilized organic material. In the same or other embodiments, the final concentration of the co-active agent in the article of manufacture can be from 0.01 wt. % to 2 wt. %; from 0.01 wt. % to 1 wt. %; or from 0.05 wt. % to 0.50 wt. %, based on the weight of the article of manufacture. Those of ordinary skill in the art will be able to readily determine the amount and type of stabilizing additive(s) that should be added based on preparations as known and/or described in the literature, or through no more than routine experimentation.

In certain embodiments, articles of manufacture formed with stabilizer compositions as herein described or claimed can be further characterized and distinguished in that the contact angle of water droplets at the surface of the stabilized material can be from 10° to 100°; preferably greater than 20 °; more preferably greater than 50 °; more preferably still greater than 75 °.

Organic materials for stabilization. Various nonliving organic materials suitable for stabilizing include, but are not limited to, polyolefins, poly(ethylene-vinyl acetate) (EVA); polyesters, polyethers, polyketones, polyamides, natural and synthetic rubbers, polyurethanes, polystyrenes, high-impact polystyrenes, polyacrylates, polymethacrylates, polyacetals, polyacrylonitriles, polybutadienes, polystyrenes, acrylonitrile-butadiene-styrene, styrene acrylonitrile, acrylate styrene acrylonitrile, cellulosic acetate butyrate, cellulosic polymers, polyimides, polyamideimides, polyetherimides, polyphenylsulfides, polyphenyloxidepolysulfones, polyethersulfones, polyvinylchlorides, polycarbonates, polyketones, aliphatic polyketones, thermoplastic olefins (TPO), aminoresin cross-linked polyacrylates and polyesters, polyisocyanate cross-linked polyesters and polyacrylates, phenol/formaldehyde, urea/formaldehyde and melamine/formaldehyde resins, drying and non-drying alkyd resins, alkyd resins, polyester resins, acrylate resins cross-linked with melamine resins, urea resins, isocyanates, isocyanurates, carbamates, epoxy resins, cross-linked epoxy resins derived from aliphatic, cycloaliphatic, heterocyclic and aromatic glycidyl compounds, which are cross-linked with anhydrides or amines, polysiloxanes, Michael addition polymers, amines, blocked amines with activated unsaturated and methylene compounds, ketimines with activated unsaturated and methylene compounds, polyketimines in combination with unsaturated acrylic polyacetoacetate resins, polyketimines in combination with unsaturated acrylic resins, coating compositions, radiation curable compositions, epoxymelamine resins, organic dyes, cosmetic products, cellulose-based paper formulations, photographic film paper, fibers, waxes, and inks.

In certain embodiments, the nonliving organic material to be stabilized is a polyolefin. Polyolefins suitable for use with the stabilizer composition according to the invention include, but are not limited to:
(A) Polymers of monoolefins, for example polypropylene, polyisobutylene, polybut-1-ene, and poly-4-methylpent-1-ene, polymers of diolefins such as polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE);
(B) Polyolefins, i.e. the polymers of monoolefins exemplified in (A), preferably polyethylene and polypropylene, can be prepared by different, and especially by the following, methods: i) radical polymerisation (normally under high pressure and at elevated temperature); or ii) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either p- or s-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC);
(C) Mixtures of the polymers mentioned under (A), for example mixtures of polypropylene with polyisobutylene, polypropylene with polyethylene (for example PP/HDPE, PP/LDPE) and mixtures of different types of polyethylene (for example LDPE/HDPE); and
(D) Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in (A) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.

Particularly preferred organic materials for stabilizing and providing articles of manufacture include polyolefin polymers such as i) polymers of monoolefins chosen from polyethylene, polypropylene, polyisobutylene, polybut-1-ene, or poly-4-methylpent-1-ene; ii) polymers of diolefins chosen from polyisoprene or polybutadiene; iii) polymers of cycloolefins chosen from cyclopentene or norbornene; iv) polyethylene chosen from optionally crosslinked polyethylene, high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), very low density polyethylene (VLDPE), or ultralow density polyethylene (ULDPE); v) thermoplastic olefins (TPO); vi) copolymers thereof; and vii) mixtures thereof.

**In** a particular embodiment, the organic material can be polyethylene or polypropylene and can be combined with a stabilizing amount of a stabilizer composition having from 0.01 wt. % to 5 wt. %, based on the weight of the stabilized material, of co-active agent in the form of diethylene glycol octadecyl ether, and from 0.001 wt. % to 5 wt. %, based on the weight of the stabilized material, of orthohydroxybenzophenone in the form of 2-hydroxy-4-octyloxybenzophenone, and/or of orthohydroxyphenyl benzotriazole in the form of 2-(2'-hydroxy-5'-octylphenyl)-benzotriazole . In the same or further embodiments, the amount of co-active agent can be from 0.01 wt. % to 1 wt. %, and the stabilizer composition can also include from 0.01 wt. % to 5 wt. %, based on the weight of the stabilized material, of hindered amine light stabilizer in the form of a condensate of N,N'-bis(2,2,6,6-tetramethyl-4-piperidinyl)-1,6-hexanediamine polymers with morpholine-2,4-dichloro-1,3,5-triazine reaction products, methylated, or non-methylated.. In the same or further embodiments, the stabilizer composition can also include from 0.01 wt. % to 5 wt. %, based on the weight of the stabilized material, of a hindered benzoate in the form of hexadecyl-3,5-di-tert-butyl-4-hydroxybenzoate.

Therefore, as described herein, the present invention relates to the following embodiments:

In a first object, the invention relates to a stabilizer composition consisting essentially of:
i) a stabilizing amount of an ultraviolet light absorber (UVA) selected from the group consisting of: orthohydroxybenzophenone compounds; orthohydroxyphenyl benzotriazole compounds;; and mixtures thereof;
ii) a stabilizing amount of a co-active agent selected from the group consisting of C₁₂-C₆₀ monohydric alcohols; alkoxylated alcohols or monoalkyl ethers thereof; and mixtures thereof, wherein the co-active agent is present at from 1 wt.% to 99 wt. % based on the total weight of the stabilizer composition; and
iii) a stabilizing amount of a hindered amine light stabilizer compound (HALS) comprising a functional group according to Formula (II): 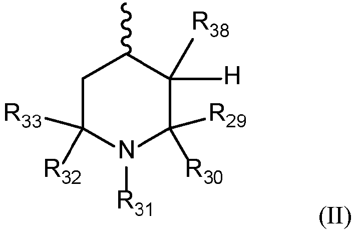
   wherein R₃₁ is chosen from: hydrogen; OH; C₁-C₂₀ hydrocarbyl; -CH₂CN; C₁-C₁₂ acyl; or C₁-C₁₈ alkoxy; R₃₈ is chosen from: hydrogen; or C₁-C₈ hydrocarbyl; and each of R₂₉, R₃₀, R₃₂, and R₃₃ is independently chosen from C₁-C₂₀ hydrocarbyl, or R₂₉ and R₃₀ and/or R₃₂ and R₃₃ taken together with the carbon to which they are attached form a C₅-C₁₀ cycloalkyl; or
   a functional group according to Formula (IIa): 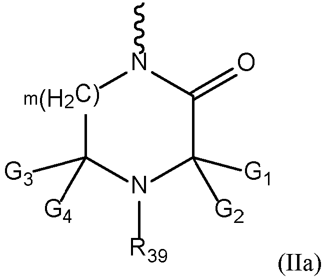
   wherein
   m is an integer from 1 to 2;
   R₃₉ is chosen from: hydrogen; OH; C₁-C₂₀ hydrocarbyl; -CH₂CN; C₁-C₁₂ acyl; or C₁-C₁₈ alkoxy; and
   each of G₁-G₄ is independently chosen from C₁-C₂₀ hydrocarbyl; or
   mixtures of HALS compounds having functional groups according to Formula (II) and Formula (IIa).

In one embodiment, the UV absorber in said stabilizer composition includes a orthohydroxybenzophenone compound selected from the group consisting of 2-hydroxy-4-methoxybenzophenone; 2,2'-dihydroxy-4-methoxybenzophenone; 2-hydroxy-4-octyloxybenzophenone; 2,2'-dihydroxy-4,4'-di-methoxybenzophenone; 2,2'-dihydroxybenzophenone; 2,2',4,4'-tetrahydroxybenzophenone; 2,2'-dihydroxy-4,4'-dimethoxybenzophenone; 2,2'-dihydroxy-4,4'-diethoxybenzophenone; 2,2'-dihydroxy-4,4'-dipropoxybenzophenone; 2,2'-dihydroxy-4,4'-dibutoxybenzophenone; 2,2'-dihydroxy-4-methoxy-4'-ethoxybenzophenone; 2,2'-dihydroxy-4-methoxy-4'-propoxybenzophenone; 2,2'-dihydroxy-4-methoxy-4'-butoxybenzophenone; 2,2'-dihydroxy-4-ethoxy-4'-propoxybenzophenone; 2,2'-dihydroxy-4-ethoxy-4'-butoxybenzophenone; 2,3'-dihydroxy-4,4'-dimethoxybenzophenone; 2,3'-dihydroxy-4-methoxy-4'-butoxybenzophenone; 2-hydroxy-4,4',5'-trimethoxybenzophenone; 2-hydroxy-4,4',6'-tributoxybenzophenone; 2-hydroxy-4-butoxy-4',5'-dimethoxybenzophenone; 2-hydroxy-4-ethoxy-2',4'-dibutylbenzophenone; 2-hydroxy-4-propoxy-4',6'-dichlorobenzophenone; 2-hydroxy-4-propoxy-4',6'-dibromobenzophenone; 2,4-dihydroxybenzophenone; 2-hydroxy-4-ethoxybenzophenone; 2-hydroxy-4-propoxybenzophenone; 2-hydroxy-4-butoxybenzophenone; 2-hydroxy-4-methoxy-4'-methylbenzophenone; 2-hydroxy-4-methoxy-4'-ethylbenzophenone; 2-hydroxy-4-methoxy-4'-propylbenzophenone; 2-hydroxy-4-methoxy-4'-butylbenzophenone; 2-hydroxy-4-methoxy-4'-tertiary butylbenzophenone; 2-hydroxy-4-methoxy-4'-chlorobenzophenone; 2-hydroxy-4-methoxy-2'-chlorobenzophenone; 2-hydroxy-4-methoxy-4'-bromobenzophenone; 2-hydroxy-4,4'-dimethoxybenzophenone; 2-hydroxy-4,4'-dimethoxy-3-methylbenzophenone; 2-hydroxy-4,4'-dimethoxy-2'-ethylbenzophenone; 2-hydroxy-4,4',5'-trimethoxybenzophenone; 2-hydroxy-4-ethoxy-4'-methylbenzophenone; 2-hydroxy-4-ethoxy-4'-ethylbenzophenone; 2-hydroxy-4-ethoxy-4'-propylbenzophenone; 2-hydroxy-4-ethoxy-4'-butylbenzophenone; 2-hydroxy-4-ethoxy-4'-methoxybenzophenone; 2-hydroxy-4,4'-diethoxybenzophenone; 2-hydroxy-4-ethoxy-4'-propoxybenzophenone; 2-hydroxy-4-ethoxy-4'-butoxybenzophenone; 2-hydroxy-4-ethoxy-4'-chlorobenzophenone; 2-hydroxy-4-ethoxy-4'-bromobenzophenone; and mixtures thereof.

In one embodiment, the UV absorber in said stabilizer composition includes an orthohydroxyphenyl benzotriazole compound selected from the group consisting of 2-(2'-hydroxy-5'-methylphenyl)-benzotriazole; 2-(2'-hydroxy-5'-tert-butylphenyl)benzotriazole; 2-(2'-hydroxy-3'-methyl-5'-tert-butylphenyl)-benzotriazole; 2-(2'-hydroxy-5'-cyclohexylphenyl)-benzotriazole; 2-(2'-hydroxy-3',5'-dimethylphenyl)-benzotriazole; 2-(2'-hydroxy-5'-tert-butylphenyl)-5-chloro-benzotriazole; 2-(2'-hydroxy-5-tert-octylphenyl)-2H-benzotriazole; 2-(2'-hydroxy-5-octylphenyl)-2H-benzotriazole; 2-(3',5'-di-tert-butyl-2'-hydroxyphenyl)-5-chlorobenzotriazole; 2-(3'-tert-butyl-5'-methyl-butyl-2'hydroxyphenyl)-5-chlorobenzotriazole; 2-(3',5'-di-tert-amyl-2'-hydroxyphenyl)benzotriazole; 2-(3',5'-bis(α,α-dimethylbenzyl)-2'-hydroxyphenyl)benzotriazole; 2-(3'-tert-butyl-2'-hydroxy-5'-(2-octyloxycarbonylethyl)phenyl)benzotriazole; 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 2-[2'-hydroxy-3'-(α,α-dimethylbenzyl)-5'-(1,1,3,3-tetramethyl- butyl)phenyl]benzotriazole; 5-trifluoromethyl-2-(2-hydroxy-3-α-cumyl-5-tert-octylphenyl)-2H-benzotriazole; 2-(2'-hydroxy-5'-(2-hydroxyethyl)phenyl)benzotriazole; 2-(2'-hydroxy-5'-(2-methacryloyloxyethyl)phenyl)benzotriazole; 2-(3'-tert-butyl-5'-methyl-2'-hydroxyphenyl)-5-chloro-benzotriazole; 2-(3'-sec-butyl-5'-tert.butyl-2'-hydroxyphenyl)-benzotriazole; 2-(3',5'-di-tert-butyl-2'-hydroxyphenyl)-benzotriazole; 2-(5'-tert-octyl-2'-hydroxyphenyl)-benzotriazole; 2-(3'-dodecyl-5'-methyl-2'-hydroxyphenyl)-benzotriazole; 2-(3'-tert-butyl-5'-(2-octyloxycarbonylethyl)-2'-hydroxyphenyl)-5-chlorobenzotriazole; 2-(5'-methyl-2'-hydroxyphenyl)-benzotriazole; 2-(5'-tert-butyl-2'-hydroxyphenyl)-benzotriazole; 2-(2'-hydroxy-3'-di-tert-butylphenyl)-benzotriazole; and mixtures thereof.

In one embodiment, the hindered amine light stabilizer in said stabilizer composition is selected from the group consisting of bis(2,2,6,6-tetramethylpiperidin-4-yl) sebacate; bis(2,2,6,6-tetramethylpiperidin-4-yl)succinate; bis(1,2,2,6,6-pentamethylpiperidin-4-yl)sebacate; bis(1-octyloxy-2,2,6,6-tetramethylpiperidin-4-yl)sebacate; bis(1,2,2,6,6-pentamethylpiperidin-4-yl) n-butyl 3,5-di-tert-butyl-4-hydroxybenzylmalonate; a condensate of 1-(2-hydroxyethyl)-2,2,6,6-tetramethyl-4-hydroxypiperidine and succinic acid; 2,2,6,6-tetramethylpiperidin-4-yl stearate; 2,2,6,6-tetramethylpiperidin-4-yl dodecanate; 1,2,2,6,6-pentamethylpiperidin-4-yl stearate; 1,2,2,6,6-pentamethylpiperidin-4-yl dodecanate; a condensate of N,N'-bis(2,2,6,6-tetramethylpiperidin-4-yl)hexamethylenediamine and 4-tert-octylamino-2,6-dichloro-1,3,5-triazine; tris(2,2,6,6-tetramethylpiperidin-4-yl) nitrilotriacetate; tetrakis(2,2,6,6-tetramethylpiperidin-4-yl)- 1,2,3,4-butanetetracarboxylate; 4-benzoyl-2,2,6,6-tetramethylpiperidine; 4-stearyloxy-2,2,6,6-tetramethylpiperidine; bis(1,2,2,6,6-pentamethylpiperidyl)-2-n-butyl-2-(2-hydroxy-3,5-di-tert-butylbenzyl)malonate; 3-n-octyl-7,7,9,9-tetramethyl-1,3,8-triazaspiro[4.5]decan-2,4-dione; bis(1-octyloxy-2,2,6,6-tetramethylpiperidyl)sebacate; bis(1-octyloxy-2,2,6,6-tetramethylpiperidyl)succinate; a condensate of N,N'-bis(2,2,6,6-tetramethylpiperidin-4-yl)hexamethylenediamine and 4-morpholino-2,6-dichloro-1,3,5-triazine; a condensate of N,N'-bis(2,2,6,6-tetramethylpiperidin-4-yl)hexamethylenediamine and 4-morpholino-2,6-dichloro-1,3,5-triazine, methylated; a condensate of 2-chloro-4,6-bis(4-n-butylamino-2,2,6,6-tetramethylpiperidyl)-1,3,5-triazine and 1,2-bis(3-aminopropylamino)ethane; a condensate of 2-chloro-4,6-bis(4-n-butylamino-1,2,2,6,6-pentamethylpiperidyl)-1,3,5-triazine and 1,2-bis-(3- aminopropylamino)ethane; 8-acetyl-3-dodecyl-7,7,9,9-tetramethyl-1,3,8-triazaspiro[4.5]decane-2,4-dione; 3-dodecyl-1-(2,2,6,6-tetramethylpiperidin-4-yl)pyrrolidin-2,5-dione; 3-dodecyl-1-(1-ethanoyl-2,2,6,6-tetramethylpiperidin-4-yl)pyrrolidin-2,5-dione; 3-dodecyl-1-(1,2,2,6,6-pentamethylpiperidin-4-yl)pyrrolidine-2,5-dione; a mixture of 4-hexadecyloxy- and 4-stearyloxy-2,2,6,6-tetramethylpiperidine; a mixture of 4-hexadecyloxy- and 4-stearyloxy-1,2,2,6,6-pentamethylpiperidine; a condensate of N,N'-bis(2,2,6,6-tetramethylpiperidin-4-yl)hexamethylenediamine and 4-cyclohexylamino-2,6-dichloro-1,3,5-triazine; a condensate of 1,2-bis(3-aminopropylamino)ethane, 2,4,6-trichloro-1,3,5-triazine and 4-butylamino-2,2,6,6-tetramethylpiperidine; 2-undecyl-7,7,9,9-tetramethyl-1-oxa-3,8-diaza-4-oxospiro[4.5]decane; oxo-piperanzinyl-triazines; a reaction product of 7,7,9,9-tetramethyl-2-cycloundecyl-1-oxa-3,8-diaza-4-oxospiro[4.5]decane and epichlorohydrin; tetrakis(2,2,6,6-tetramethyl-4-piperidyl) butane-1,2,3,4-tetracarboxylate; 1,2,3,4-butanetetracarboxylic acid, tetrakis(1,2,2,6,6-pentamethyl-4-piperidinyl)ester; 1,2,3,4-butanetetracarboxylic acid, 1,2,2,6,6-pentamethyl-4-piperdinyl tridecyl ester; 1,2,3,4-butanetetracarboxylic acid, 2,2,6,6-tetramethyl-4-piperidinyl tridecyl ester; 1,2,3,4-butanetetracarboxylic acid, polymer with 2,2,6,6-tetramethyl-2,4,8,10-tetraoxaspiro[5.5]-undecane-3,9-diethanol,1,2,2,6,6-pentamethyl-4-piperdinyl ester; 1,2,3,4-butanetetracarboxylic acid, polymer with 2,2,6,6-tetramethyl-2,4,8,10-tetraoxaspiro[5.5]-undecane-3,9-diethanol, 2,2,6,6-tetramethyl-4-piperdinyl ester; bis(1-undecanoxy-2,2,6,6-tetramethylpiperidin-4-yl)carbonate; 1-(2-hydroxy-2-methylpropoxy)-2,2,6,6-tetramethyl-4-piperdinol; 1-(2-hydroxy-2-methylpropoxy)-4-octadecanoyloxy-2,2,6,6-tetramethylpiperidine; 1-(4-octadecanoyloxy-2,2,6,6-tetramethylpiperidin-1-yloxy)-2-octadecanoyloxy-2-methylpropane; 1-(2-hydroxyethyl)-2,2,6,6-tetramethyl-4-piperdinol; a reaction product of 1-(2-hydroxyethyl)-2,2,6,6-tetramethyl-4-piperdinol and dimethylsuccinate; 2,2,4,4-tetramethyl-7-oxa-3,20-diazadispiro[5.1.11.2]heneicosan-21-one; the ester of 2,2,6,6-tetramethyl-4-piperidinol with higher fatty acids; 3-dodecyl-1-(2,2,6,6-tetramethyl-4-piperidyl)pyrrolidine-2,5-dione; 1H-Pyrrole-2,5-dione, 1-octadecyl-, polymer with (1-methylethenyl)benzene and 1-(2,2,6,6-tetramethyl-4-piperidinyl)-1H-pyrrole-2,5-dione; piperazinone, 1,1',1"-[1,3,5-triazine-2,4,6-triyltris[(cyclohexylimino)-2,1-ethanediyl]]tris[3,3,5,5-tetramethyl-; piperazinone, 1,1',1"-[1,3,5-triazine-2,4,6-triyltris[(cyclohexylimino)-2,1-ethanediyl]]tris[3,3,4,5,5-pentamethyl-; the reaction product of 7,7,9,9-tetramethyl-2-cycloundecyl-1-oxa-3,8-diaza-4-oxospiro[4.5]decane and epichlorohydrin; the condensate of N,N'-bis(2,2,6,6-tetramethylpiperidin-4-yl)hexamethylenediamine and 4-cyclohexylamino-2,6-dichloro-1,3,5-triazine; the condensate of 1,2-bis(3-aminopropylamino)ethane, 2,4,6-trichloro-1,3,5-triazine and 4-butylamino-2,2,6,6-tetramethylpiperidine; the condensate of N,N'-bis(2,2,6,6-tetramethylpiperidin-4-yl)hexamethylenediamine and 4-morpholino-2,6-dichloro-1,3,5-triazine; the condensate of 2-chloro-4,6-bis(4-n-butylamino-2,2,6,6-tetramethylpiperidyl)-1,3,5-triazine and 1,2-bis(3-aminopropylamino)ethane; the condensate of 2-chloro-4,6-bis(4-n-butylamino-1,2,2,6,6-pentamethylpiperidyl)-1,3,5-triazine and 1,2-bis-(3-aminopropylamino)ethane; 2-[(2-hydroxyethyl)amino]-4,6-bis[N-(1-cyclohexyloxy-2,2,6,6-tetramethylpiperidin-4-yl)butylamino-1,3,5-triazine; propanedioic acid, [(4-methoxyphenyl)-methylene]-bis-(1,2,2,6,6-pentamethyl-4-piperidinyl) ester; tetrakis(2,2,6,6-tetramethylpiperidin-4-yl)-1,2,3,4-butanetetracarboxylate; benzenepropanoic acid, 3,5-bis(1,1-dimethylethyl)-4-hydroxy-, 1-[2-[3-[3,5-bis(1,1-dimethylethyl)-4-hydroxyphenyl]-1-oxopropoxy]ethyl]-2,2,6,6-tetramethyl-4-piperidinyl ester; N-(1-octyloxy-2,2,6,6-tetramethylpiperidin-4-yl)-N'-dodecyloxalamide; tris(2,2,6,6-tetramethylpiperidin-4-yl) nitrilotriacetate; 1,5-dioxaspiro{ 5,5}undecane-3,3-dicarboxylic acid, bis(1,2,2,6,6-pentamethyl-4-piperidinyl): 1,5-dioxaspiro{5,5}undecane-3,3-dicarboxylic acid, bis(2,2,6,6-tetramethyl-4-piperidinyl); the condensate of 1-(2-hydroxyethyl)-2,2,6,6-tetramethyl-4-hydroxypiperidine and succinic acid; the condensate of N,N'-bis(2,2,6,6-tetramethylpiperidin-4-yl)hexamethylenediamine and 4-tert-octylamino-2,6-dichloro-1,3,5-triazine; 1,2,3,4-butanetetracarboxylic acid, 1,2,2,6,6-pentamethyl-4-piperidinyl tridecyl ester; tetrakis(2,2,6,6-tetramethylpiperidin-4-yl)-1,2,3,4-butanetetracarboxylate; 1,2,3,4-butanetetracarboxylic acid, 2,2,6,6-tetramethyl-4-piperidinyl tridecyl ester; tetrakis(1,2,2,6,6-pentamethylpiperidin-4-yl)-1,2,3,4-butanetetracarboxylate; mixture of 2,2,4,4-tetramethyl-21-oxo-7-oxa-3.20-diazaspiro(5.1.11.2)-heneicosane-20-propanoic acid-dodecylester and 2,2,4,4-tetramethyl-21-oxo-7-oxa-3.20-diazaspiro(5.1.11.2)-heneicosane-20-propanoic acid-tetradecylester; 1H,4H,5H,8H-2,3a,4a,6,7a,8a-hexaazacyclopenta[def]fluorene-4,8-dione, hexahydro-2,6-bis(2,2,6,6-tetramethyl-4-piperidinyl)-; polymethyl[propyl-3-oxy(2',2',6',6'-tetramethyl-4,4'-piperidinyl)]siloxane; polymethyl[propyl-3-oxy(1',2',2',6',6'-pentamethyl-4,4'-piperidinyl)]siloxane; copolymer of methylmethacrylate with ethyl acrylate and 2,2,6,6-tetramethylpiperidin-4-yl acrylate; copolymer of mixed C₂₀ to C₂₄ alpha-olefins and (2,2,6,6-tetramethylpiperidin-4-yl)succinimide; 1,2,3,4-butanetetracarboxylic acid, polymer with β,β,β',β'-tetramethyl-2,4,8,10-tetraoxaspiro[5.5]undecane-3,9-diethanol, 1,2,2,6,6-pentamethyl-4-piperidinyl ester; 1,2,3,4-butanetetracarboxylic acid, polymer with β,β,β',β'-tetramethyl-2,4,8,10-tetraoxaspiro[5.5]undecane-3,9-diethanol, 2,2,6,6-tetramethyl-4-piperidinyl ester copolymer; 1,3-benzenedicarboxamide, N,N'-bis(2,2,6,6-tetramethyl-4-piperidinyl; 1,1'-(1,10-dioxo-1,10-decanediyl)-bis(hexahydro-2,2,4,4,6-pentamethylpyrimidine; ethane diamide, N-(1-acetyl-2,2,6,6-tetramethylpiperidinyl)-N'-dodecyl; formamide, N,N'-1,6-hexanediylbis[N-(2,2,6,6-tetramethyl-4-piperidinyl); D-glucitol, 1,3:2,4-bis-O-(2,2,6,6-tetramethyl-4-piperidinylidene)-; 2,2,4,4-tetramethyl-7-oxa-3,20-diaza-21-oxo-dispiro[5.1.11.2]heneicosane; propanamide, 2-methyl-N-(2,2,6,6-tetramethyl-4-piperidinyl)-2-[(2,2,6,6-tetramethyl-4-piperidinyl)amino]-; 7-oxa-3,20-diazadispiro[5.1.11.2]heneicosane-20-propanoic acid, 2,2,4,4-tetramethyl-21-oxo-, dodecyl ester; N-(2,2,6,6-tetramethylpiperidin-4-yl)-β-aminopropionic acid dodecyl ester; N-(2,2,6,6-tetramethylpiperidin-4-yl)-N'-aminooxalamide; propanamide, N-(2,2,6,6-tetramethyl-4-piperidinyl)-3-[(2,2,6,6-tetramethyl-4-piperidinyl)amino]-; mixture of 4-hexadecyloxy- and 4-stearyloxy-2,2,6,6-tetramethylpiperidine; 3-dodecyl-1-(1,2,2,6,6-pentamethylpiperidin-4-yl)pyrrolidine-2,5-dione; 3-dodecyl-1-(1-ethanoyl-2,2,6,6-pentamethylpiperidin-4-yl)pyrrolidine-2,5-dione; bis(2,2,6,6-tetramethylpiperidin-4-yl)succinate; bis(1,2,2,6,6-pentamethylpiperidin-4-yl) n-butyl 3,5-di-tert-butyl-4-hydroxybenzylmalonate; tris(2,2,6,6-tetramethylpiperidin-4-yl) nitrilotriacetate; 1,1'-(1,2-ethanediyl)bis(3,3,5,5-tetramethylpiperazinone); 4-benzoyl-2,2,6,6-tetramethylpiperidine; 4-stearyloxy-2,2,6,6-tetramethylpiperidine; bis(1,2,2,6,6-pentamethylpiperidyl)-2-n-butyl-2-(2-hydroxy-3,5-di-tert-butylbenzyl)malonate; 3-n-octyl-7,7,9,9-tetramethyl-1,3,8-triazaspiro[4.5]decan-2,4-dione; bis(1-octyloxy-2,2,6,6-tetramethylpiperidyl)sebacate; bis(1-octyloxy-2,2,6,6-tetramethylpiperidyl)succinate; 8-acetyl-3-dodecyl-7,7,9,9-tetramethyl-1,3,8-triazaspiro[4.5]decane-2,4-dione; 3-dodecyl-1-(2,2,6,6-tetramethylpiperidin-4-yl)pyrrolidin-2,5-dione; 3-dodecyl-1-(1-ethanoyl-2,2,6,6-tetramethylpiperidin-4-yl)pyrrolidin-2,5-dione; 3-dodecyl-1-(1,2,2,6,6-pentamethylpiperidin-4-yl)pyrrolidine-2,5-dione; a mixture of 4-hexadecyloxy- and 4-stearyloxy-2,2,6,6-tetramethylpiperidine; 2-undecyl-7,7,9,9-tetramethyl-1-oxa-3,8-diaza-4-oxospiro[4.5]decane; 1,5-dioxaspiro{5,5}undecane-3,3-dicarboxylic acid, bis(2,2,6,6-tetramethyl-4-piperidinyl) and 1,5-dioxaspiro{5,5}undecane-3,3-dicarboxylic acid, bis(1,2,2,6,6-pentamethyl-4-piperidinyl); N¹-(β-hydroxyethyl)3,3-pentamethylene-5,5-dimethylpiperazin-2-one; N¹-tert-octyl-3,3,5,5-tetramethyl-diazepin-2-one; N¹-tert-octyl-3,3-pentamethylene-5,5-hexamethylene-diazepin-2-one; N¹-tert-octyl-3,3-pentamethylene-5,5-dimethylpiperazin-2-one; trans-1,2-cyclohexane-bis-(N¹-5,5-dimethyl-3,3-pentamethylene-2-piperazinone; trans-1,2-cyclohexane-bis-(N¹-3,3,5,5-dispiropentamethylene-2-piperazinone); N¹-isopropyl-1,4-diazadispiro-(3,3,5,5)pentamethylene-2-piperazinone; N¹-isopropyl-1,4-diazadispiro-3,3-pentamethylene-5,5-tetramethylene-2-piperazinone; N¹-isopropyl-5,5-dimethyl-3,3-pentamethylene-2-piperazinone; trans-1,2-cyclohexane-bis-N¹-(dimethyl-3,3-pentamethylene-2-piperazinone); N¹-octyl-5,5-dimethyl-3,3-pentamethylene-1,4-diazepin-2-one; N¹-octyl-1,4-diazadispiro-(3,3,5,5)pentamethylene-1,5-diazepin-2-one; 1,6-hexanediamine, N,N'-bis(2,2,6,6-tetramethyl-4-piperidinyl)-, polymer with 2,4,6-trichloro-1,3,5-triazine, reaction products with 3-bromo-1-propene, n-butyl-1-butanamine and N-butyl-2,2,6,6-tetramethyl-4-piperidinamine, oxidised, hydrogenated (TINUVIN^{®} NOR HALS 371); and mixtures thereof.

In one embodiment, the co-active agent in said stabilizer composition is a monohydric alcohol selected from the group consisting of 1-decanol; 1-undecanol; 1-dodecanol; 1-tridecanol; 1-tetradecanol; 1-pentadecanol; 1-hexadecanol; 1-heptadecanol; 1-octadecanol; 1-nonadecanol; 1-eicosanol; 1-docosanol; 1-tetracosanol; 1-hexacosanol; 1 octacosanol; 1-triacontanol; 2-methyl-1-undecanol; 2-propyl-1-nonanol; 2-butyl-1-octanol; 2-methyl-1-tridecanol; 2-ethyl-1-dodecanol; 2-propyl-1-undecanol; 2-butyl-1-decanol; 2-pentyl-1-nonanol; 2-hexyl-1-octanol; 2-methyl-1-pentadecanol; 2-ethyl-1-tetradecanol; 2-propyl-1-tridecanol; 2-butyl-1-dodecanol; 2-pentyl-1-undecanol; 2-hexyl-1-decanol; 2-heptyl-1-decanol; 2-hexyl-1-nonanol; 2-octyl-1-octanol; 2-methyl-1-heptadecanol; 2-ethyl-1-hexadecanol; 2-propyl-1-pentadecanol; 2-butyl-1-tetradecanol; 1-pentyl-1-tridecanol; 2-hexyl-1-dodecanol; 2-octyl-1-decanol; 2-nonyl-1-nonanol; 2-dodecanol; 3-dodecanol; 4-dodecanol; 5-dodecanol; 6-dodecanol; 2-tetradecanol; 3-tetradecanol; 4-tetradecanol; 5-tetradecanol; 6 -tetradecanol; tetradecanol; 7-tetradecanol; 2-hexadecanol; 3-hexadecanol; 4-hexadecanol; 5-hexadecanol; 6-hexadecanol; 7-hexadecanol; 8-hexadecanol; 2-octadecanol; 3-octadecanol; 4-octadecanol; 5-octadecanol; 6-octadecanol; 7-octadecanol; 8-octadecanol; 9-octadecanol; 9-octadedcanol-1; 2,4,6,8-tetramethyl-1-nonanol; 3,5,5,7,7-pentamethyl-1-octanol; 3-butyl-1-nonanol; 3-butyl-1-undecanol; 3-hexyl-1-undecanol; 3-hexyl-1-tridecanol; 3-octyl-1-tridecanol; 2-methyl-2-undecanol; 3-methyl-3-undecanol; 4-methyl-4-undecanol; 2-methyl-2-tridecanol; 3-methyl-3-tridecanol; 4-methyl-3-tridecanol; 4-methyl-4-tridecanol; 3-ethyl-3-decanol; 3-ethyl-3-dodecanol; 2,4,6,8-tetramethyl-2-nonanol; 2-methyl-3-undecanol; 2-methyl-4-undecanol; 4-methyl-2-undecanol; 5-methyl-2-undecanol; 4-ethyl-2-decanol; 4-ethyl-3-decanol; and mixtures thereof.

In another embodiment, the co-active agent is an alkoxylated alcohol, or monoalkyl ether thereof, according to Formula (III):

R-(OCHR'CH₂)_{y}-OR" (III)

wherein R is a hydrocarbyl group having from 12 to 60 carbon atoms, preferably a C₁₂ to C₃₀ alkyl, more preferably the alkyl group contains from 12 to 22 carbons; R' is chosen from H or C₁-C₄ alkyl; R" is chosen from H or a hydrocarbyl group having from 1 to 10 carbon atoms, preferably R" is H; and y is an integer from 1 to 100, preferably from 1 to 75.

In one embodiment, the co-active agent comprises an ethoxylated and/or propoxylated alcohol, wherein the alcohol is selected from the group consisting of docosyl alcohol; stearyl alcohol; oleyl alcohol; cetyl alcohol; isotridecyl alcohol; lauryl alcohol; C₁₂-C₁₅ alcohols; C₁₆/C₁₈ alcohols; and C₂₀-C₅₀ alcohols, in particular a mixture of ethoxylated alcohol and propoxylated alcohol, preferably the alcohol comprises C₁₂-C₃₀ alcohols. For example, the co-active agent is selected from the group consisting of C₁₂-C₁₅ oxo alcohols having 2 ethylene oxide and 5 propylene oxide groups; and C₁₂-C₁₅ oxo alcohols having 5 ethylene oxide and 2 propylene oxide groups.

In one embodiment, R" in Formula (III) is methyl and the co-active agent comprises a monoalkyl ether of an ethoxylated and/or propoxylated alcohol, wherein the alcohol is selected from the group consisting of docosyl alcohol; stearyl alcohol; oleyl alcohol; cetyl alcohol; isotridecyl alcohol; lauryl alcohol; C₁₂-C₁₅ alcohols; C₁₆/C₁₈ alcohols; and C₂₀-C₅₀ alcohols.

In one embodiment, the stabilizer composition according to any one of embodiments above further comprises a stabilizing amount of a co-stabilizer selected from the group consisting of hindered benzoates; thioesters; hydroxylamines; antioxidants; hindered phenols; phosphites; phosphonites; benzofuranones; nitrones; and mixtures thereof.

In one embodiment, the co-stabilizer is a hindered benzoate or benzamide compound according to Formula (VI): 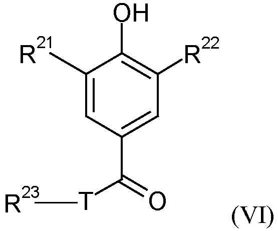 wherein
each of R²¹ and R²² is independently chosen from a C₁-C₁₂ alkyl;
T is chosen from O or NR²⁴, where R²⁴ is H or a C₁-C₃₀ hydrocarbyl; and
R²³ is H or a C₁-C₃₀ hydrocarbyl.

Preferably, the hindered benzoate compound is selected from the group consisting of 2,4-di-tert-butylphenyl-3,5-di-tert-butyl-4-hydroxybenzoate; hexadecyl-3,5-di-tert-butyl-4-hydroxybenzoate; octadecyl-3,5-di-tert-butyl-4-hydroxybenzoate; octyl-3,5-di-tert-butyl-4-hydroxybenzoate; decyl-3,5-di-tert-butyl-4-hydroxybenzoate; dodecyl-3,5-di-tert-butyl-4-hydroxybenzoate; tetradecyl-3,5-di-tert-butyl-4-hydroxybenzoate; behenylyl-3,5-di-tert-butyl-4-hydroxybenzoate; 2-methyl-4,6-di-tert-butylphenyl-3,5-di-tert-butyl-4-hydroxybenzoate; butyl-3-[3-t-butyl-4-(3,5-di-t-butyl-4-hydroxybenzoyloxy)phenyl]propionate; and mixtures thereof.
in one embodiment, the stabilizer composition according to any one of embodiments above further comprises a stabilizing amount of a co-additive compound selected from the group consisting of nucleating agents; fillers; metallic stearates; metal oxides; reinforcing agents; plasticizers; lubricants; rheology agents; catalysts; leveling agents; optical brighteners; anti-static agents; blowing agents; flame retardants; dyes; pigments; and mixtures thereof.

In one embodiment, the co-active agent and the UV absorber are present in the stabilizer composition at a ratio from 1:50 to 200:1.

In one embodiment, the co-active agent and the UV absorber and HALS combined (UVA + HALS) are present in the stabilizer composition at a ratio from 1:20 to 50: 1, or from 1: 10 to 40: 1 or from 1:5 to 20: 1.

In another aspect, the present invention relates to a masterbatch concentrate comprising a stabilizer composition as defined above; and at least one organic material identical to or compatible with an organic material to be stabilized, wherein the stabilizer composition is present in an amount from 10 wt. % to 90 wt. %, preferably from 30 wt. % to 80 wt. %, more preferably from 40 wt. % to 75 wt. %, based on the total weight of the masterbatch concentrate.

In another aspect, the invention also provides a kit for stabilizing an organic material comprising in one or more containers a stabilizer composition according to any one of embodiments above, or a masterbatch concentrate according to any one of embodiments above.

Preferably, the kit according to the invention further comprises in the same or additional container a co-stabilizer or a co-additive according to any one of embodiments above.

In another aspect, the invention relates to an article of manufacture comprising an organic material to be stabilized; and
a) from 0.01 wt. % to 15 wt. %, based on the total weight of the article of manufacture, of a stabilizer composition comprising
   i) a stabilizing amount of an ultraviolet light absorber (UVA) selected from the group consisting of: orthohydroxybenzophenone compounds; orthohydroxyphenyl benzotriazole compounds;; and mixtures thereof;
   ii) from 1 wt.% to 99 wt. % based on the total weight of the stabilizer composition of a co-active agent; and
   iii) a stabilizing amount of a hindered amine light stabilizer compound (HALS) comprising a functional group according to Formula (II): 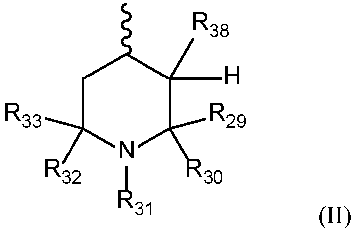
      wherein R₃₁ is chosen from: hydrogen; OH; C₁-C₂₀ hydrocarbyl; -CH₂CN; C₁-C₁₂ acyl; or C₁-C₁₈ alkoxy; R₃₈ is chosen from: hydrogen; or C₁-C₈ hydrocarbyl; and each of R₂₉, R₃₀, R₃₂, and R₃₃ is independently chosen from C₁-C₂₀ hydrocarbyl, or R₂₉ and R₃₀ and/or R₃₂ and R₃₃ taken together with the carbon to which they are attached form a C₅-C₁₀ cycloalkyl; or
      a functional group according to Formula (IIa): 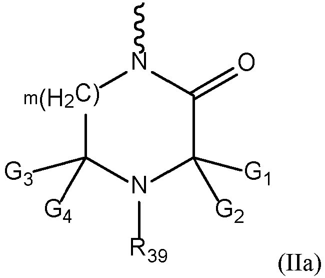
      wherein
      m is an integer from 1 to 2;
      R₃₉ is chosen from: hydrogen; OH; C₁-C₂₀ hydrocarbyl; -CH₂CN; C₁-C₁₂ acyl; or C₁-C₁₈ alkoxy; and
      each of G₁-G₄ is independently chosen from C₁-C₂₀ hydrocarbyl; or
      mixtures of HALS compounds having functional groups according to Formula (II) and Formula (IIa); or
b) a masterbatch concentrate as defined in any one of embodiments above,
   such that the final concentration of the co-active agent in the article of manufacture is from 0.01 wt. % to 1 wt. %, preferably from 0.05 wt. % to 0.50 wt. %, based on the weight of the article of manufacture. Preferably, the stabilizer composition is as defined in any one of embodiments above.

In one embodiment, the stabilizer composition or masterbatch concentrate is present in a final concentration from 0.02 wt. % to 20 wt. %, preferably from 0.05 wt. % to 10 wt. %, based on the total weight of the article of manufacture.

In one embodiment, the article of manufacture according to any one of embodiments above is further characterized by having a contact angle with water at a surface of the article of greater than 20 °, preferably greater than 50 °, more preferably greater than 75 °.

In one embodiment, the organic material to be stabilized is selected from the group consisting of polyolefins, poly(ethylene-vinyl acetate) (EVA), polyesters, polyethers, polyketones, polyamides, natural and synthetic rubbers, polyurethanes, polystyrenes, high-impact polystyrenes, polyacrylates, polymethacrylates, polybutyl acrylates, polyacetals, polyacrylonitriles, polybutadienes, polystyrenes, acrylonitrile-butadiene-styrene, styrene acrylonitrile, acrylate styrene acrylonitrile, cellulosic acetate butyrate, cellulosic polymers, polyimides, polyamideimides, polyetherimides, polyphenylsulfides, polyphenyloxidepolysulfones, polyethersulfones, polyvinylchlorides, polycarbonates, polyketones, aliphatic polyketones, thermoplastic olefins (TPO), aminoresin cross-linked polyacrylates and polyesters, polyisocyanate cross-linked polyesters and polyacrylates, phenol/formaldehyde, urea/formaldehyde and melamine/formaldehyde resins, drying and non-drying alkyd resins, alkyd resins, polyester resins, acrylate resins cross-linked with melamine resins, urea resins, isocyanates, isocyanurates, carbamates, epoxy resins, cross-linked epoxy resins derived from aliphatic, cycloaliphatic, heterocyclic and aromatic glycidyl compounds, which are cross-linked with anhydrides or amines, polysiloxanes, Michael addition polymers, amines, blocked amines with activated unsaturated and methylene compounds, ketimines with activated unsaturated and methylene compounds, polyketimines in combination with unsaturated acrylic polyacetoacetate resins, polyketimines in combination with unsaturated acrylic resins, coating compositions, radiation curable compositions, epoxymelamine resins, organic dyes, cosmetic products, cellulose-based paper formulations, photographic film paper, fibers, waxes, and inks.

Preferably, the organic material to be stabilized is a polyolefin polymer selected from the group consisting of i) polymers of monoolefins chosen from polyethylene, polypropylene, polyisobutylene, polybut-1-ene, or poly-4-methylpent-1-ene; ii) polymers of diolefins chosen from polyisoprene or polybutadiene; iii) polymers of cycloolefins chosen from cyclopentene or norbornene; iv) polyethylene chosen from optionally crosslinked polyethylene, high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), very low density polyethylene (VLDPE), or ultralow density polyethylene (ULDPE); v) thermoplastic olefins (TPO); vi) copolymers thereof; and vii) mixtures thereof.

In one embodiment, the ratio of co-active agent to UVA in the article of manufacture is from 200:1 to 1:50, preferably from 100:1 to 1:40, more preferably from 50:1 to 1:30.

In another aspect, the invention relates to a process of forming a stabilized article of manufacture made from an organic material subject to degradation and/or discoloration due to the effects from exposure to light, oxygen, and/or heat, the process comprising: combining at least one organic material with a stabilizer composition as defined in any one of embodiments above, or a masterbatch concentrate as defined by any one of embodiments above, or a kit as defined by embodiments above; and extruding, molding, blowing, rotomolding, casting, thermoforming, or compacting the organic material into an article of manufacture.

In one embodiment, the organic material in the process according to the invention is a polyolefin polymer selected from the group consisting of i) polymers of monoolefins chosen from polyethylene, polypropylene, polyisobutylene, polybut-1-ene, or poly-4-methylpent-1-ene; ii) polymers of diolefins chosen from polyisoprene or polybutadiene; iii) polymers of cycloolefins chosen from cyclopentene or norbornene; iv) polyethylene chosen from optionally crosslinked polyethylene, high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), very low density polyethylene (VLDPE), or ultralow density polyethylene (ULDPE); v) thermoplastic olefins (TPO); vi) copolymers thereof; and vii) mixtures thereof.

Preferably, the organic material is polyethylene or polypropylene and is blended with a stabilizing amount of a stabilizer composition comprising i) from 0.01 wt. % to 5 wt. % of hindered amine light stabilizer in the form of a condensate of N,N'-bis(2,2,6,6-tetramethyl-4-piperidinyl)-1,6-hexanediamine polymers with morpholine-2,4-dichloro-1,3,5-triazine reaction products, methylated, or non-methylated; ii) from 0.001 wt. % to 5 wt. % of orthohydroxybenzophenone in the form of 2-hydroxy-4-octyloxybenzophenone and/or of orthohydroxyphenyl benzotriazole in the form of 2-(2'-hydroxy-5'-octylphenyl)-benzotriazole; and iii) from 0.01 wt. % to 5 wt. % of a co-active agent in the form of diethylene glycol octadecyl ether.

In one embodiment, the stabilizing amount of co-active agent in the process according to the invention is from 0.01 wt. % to 1 wt. %, based on the total weight of the stabilizer composition.

In one embodiment, the stabilizing amount of ultraviolet light absorber (UVA) in the process according to the invention is an orthohydroxybenzophenone in the form of 2-hydroxy-4-octyloxybenzophenone and/or an orthohydroxyphenyl benzotriazole in the form of 2-(2'-hydroxy-5'-octylphenyl)-benzotriazole.

In one embodiment, the stabilizer composition in the process according to the invention further includes iv) from 0.01 wt. % to 5 wt. % of a hindered benzoate in the form of hexadecyl-3,5-di-tert-butyl-4-hydroxybenzoate.

### Examples

The following examples are provided to assist one skilled in the art to further understand certain embodiments of the present invention.

### Example 1

### UV Weathering Performance of Polypropylene/(60° Gloss Data)

### Processes/Methods of Use:

Sample Preparation The various additive materials are compounded with polypropylene (Pro-fax 6301) polymer from Lyondell Basell Industries and extruded using conventional single-screw extrusion parameters. After extrusion, standard 2 x 2 x 0.125 inch plaques and tensile bars (1 inch) are injection molded using an Arburg injection molding machine. The conditions during injection molding are as follows: nozzle temperature: 230 °C; injection pressure: 60, shot size: 14.5. The additives are used as received, except that certain ethoxylated alcohols are methylated according to the methods below.

For UV weathering, samples are exposed to QUV-313 under ASTM G-154 testing conditions. Gloss (60°) values are measured at set exposure intervals. High gloss value indicates smooth surface without surface crazing or blooming effects. Samples are considered failed when they start to show surface crazing.

For physical properties, 5 tensile bars per each data point are tested on an Instron Engineering Company Tensile Tester (Model TTB). The average physical properties of the five test samples are measured using ASTM D638 Type-5 method. The cross-head speed of the tensile tester is 2 inch (0.508 cm.) per minute. Samples are considered failed when they retain less than 50% the original physical properties.

### Preparation of Methylated Ethoxylated Alcohols

Synthesis of Methylated BRIJ^{®} S2 - Sodium hydride (4.35 g) is charged to a 500 ml round bottom flask followed by the addition of 75 ml n-heptane. It is stirred using a magnetic stir bar for ~20 minutes under nitrogen blanket and then allowed NaH to settle. The n-heptane is removed with the help of a pipette. The n-heptane washing is repeated. Then, fresh 200 ml n-heptane is added. To it is added BRIJ^{®} S2 (27g) dissolved in 50 ml tetrahydrofuran (THF). A slight exotherm is observed during the BRIJ^{®} S2 addition and the contents are stirred under nitrogen for about 30 minutes at room temperature. Methyl iodide (10.5 g) is then slowly added to the mixture and the contents stirred first at room temperature for 1 hr and then heated to about 50 °C for about 3 hr. The reaction is then cooled and diluted with 100 ml methanol. The mixture is then concentrated under reduced pressure and the residue is treated with a methylene chloride/water mixture. The organic layer is separated and washed with water, concentrated under reduced pressure and dried under vacuum to give the desired methylated BRIJ^{®} S2 characterized by LC/MS and NMR analytical techniques.

Synthesis of Methylated HETOXOL^{®} OL-4 - Sodium hydride (4.8 g) is charged to a 500 ml round bottom flask followed by the addition of 75 ml n-heptane. It is stirred using a magnetic stir bar for ~20 minutes under nitrogen blanket and then allowed NaH to settle. The n-heptane is removed with the help of a pipette. The n-heptane washing is repeated. Then, fresh 200 ml n-heptane is added. To it is added HETOXOL^{®} OL-4 (44.4 g) dissolved in 50 ml tetrahydrofuran (THF). A slight exotherm is observed during the HETOXOL^{®} OL-4 addition and the contents stirred under nitrogen for about 30 minutes at room temperature. Methyl iodide (15.6 g) is then slowly added to the mixture and the contents stirred first at room temperature for 1 hr and then heated to about 50 °C for about 3 hr. The reaction is then cooled and diluted with 100 ml methanol. The mixture is then concentrated under reduced pressure and the residue is treated with a methylene chloride/water mixture. The organic layer is separated and washed with water, concentrated under reduced pressure. A slight yellow colored liquid material is obtained. The product is passed through silica gel and treated with activated carbon to remove color bodies. The product thus obtained is characterized to be the desired methylated HETOXOL^{®} OL-4 by LC/MS and NMR analytical techniques.

The results are shown in the Tables below and Figures 1A-B. The various co-active agents and other additives used in formulating the examples is provided below by trade name, chemical name, and source of supply. In some cases these same chemicals may be available from other suppliers under different trade name.

**Table of Chemical Sources**

| **Sample Name** | **Chemical Name** | **Supplier** |
|---|---|---|
| | | |
| Stearyl alcohol | Octadecan-1-ol | Sigma Aldrich |
| BRIJ^{®} S2 | Polyoxyethylene (2 EO) stearyl ether | Sigma Aldrich |
| JEECOL^{®} SA-10 | Polyoxyethylene (10 EO) stearyl ether | Jeen Int. Corp. |
| JEECOL^{®} LA-2 | Polyoxyethylene (2 EO) dodecyl ether | Jeen Int. Corp. |
| BRIJ^{®} 93 | Polyoxyethylene (2 EO) oleyl ether | Sigma Aldrich |
| Steareth-5 | Polyoxyethylene (5 EO) stearyl ether | Venus Goa Chemicals |
| NOVEL^{®} 22-4 | Polyoxyethylene (4 EO) Docosyl ether | Sasol America |
| NOVEL^{®} 23E2 | C₁₂-C₁₃-alcohol polyethylene glycol ether (2 EO) | Sasol America |
| UNITHOX^{®} 420 | Saturated linear, C₂₀ to C₅₀, synthetic alcohol (EO represents about 20wt%) polyethylene glycol ether | Baker Hughes |
| TERGITOL^{®} 15-S-3 | C₁₂-C₁₄ secondary alcohol, polyethylene glycol ether (3 EO) | Dow Chemical Co. |
| GENAPOL^{®} EP 2525 | C₁₂/₁₅ oxo alcohol w/ 2 EO and 5 PO | Clariant |
| GENAPOL^{®} EP 2552 | C₁₂/₁₅ oxo alcohol w/ 5 EO and 2 PO | Clariant |
| BEROL^{®} 840 | Polyoxyethylene (4 EO) octyl ether | AkzoNobel |
| LUTENSOL^{®} XP 80 | Polyoxyethylene (8 EO) decyl ether | BASF |
| JEECOL^{®} LA-4 | Polyoxyethylene (4 EO) dodecyl ether | Jeen Int. Corp. |
| HETOXOL^{®} OL4 | Polyoxyethylene (4 EO) oleyl ether | Global Steven |
| Methylated BRIJ^{®} S2 | Polyoxyethylene (2 EO) stearyl ether, methylated | Cytec Industries Inc. |
| Methylated HETOXOL^{®} OL4 | Polyoxyethylene (4 EO) oleyl ether, methylated | Cytec Industries Inc. |
| CYASORB^{®} UV-1164 * | 2-[4,6-bis(2,4-dimethylphenyl)-1,3,5-triazin-2-yl]-5-(octyloxy) phenol | Cytec Industries Inc. |
| Methylated CYASORB^{®} UV-1164 * | 2-(2-methoxy-4-octyloxyphenyl)-4,6-bis(2,4-dimethylphenyl)-1,3,5-triazine | Cytec Industries Inc. |
| CYASORB^{®} UV-3346 | Substituted amine oligomer (1,6-hexanediamine, N,N'-bis(2,2,6,6-tetramethyl-4-piperidinyl)-, polymers with morpholine-2,4,6-trichloro-1,3,5-triazine reaction products | Cytec Industries Inc. |
| CYASORB^{®} UV-3529 | Substituted amine oligomer (1,6-hexanediamine, N,N'-bis(2,2,6,6-tetramethyl-4-piperidinyl)-, polymers with morpholine-2,4,6-trichloro-1,3,5-triazine reaction products, methylated | Cytec Industries Inc. |
| CYASORB^{®} UV-3853 | mixture of 4-hexadecyloxy- and 4-stearyloxy-2,2,6,6-tetramethylpiperidine | Cytec Industries Inc. |
| CYASORB^{®} UV-2908 | 3,5-di-[t-butyl]-4-hydroxybenzoic acid hexadecyl ester | Cytec Industries Inc. |
| CYASORB^{®} UV-531 | 2-hydroxy-4-n-octyloxybenzophenone | Cytec Industries Inc. |
| CYASORB^{®} UV-5411 | 2-(2-Hydroxy-5-t-octylphenyl)benzotriazole | Cytec Industries Inc. |
| TINUVIN^{®} 1577FF * | 2-[4,6-bis(2,4-dimethylphenyl)-1,3,5-triazin-2-yl]-5-(hexyloxy) phenol | BASF |
| P-800 * | 2,4,6-tris(2-hydroxy-4-octyloxy-phenyl)-1,3,5-triazine | Cytec Industries Inc. |

| | | |
|---|---|---|
| * The following samples CYASORB^{®} UV-1164, Methylated CYASORB^{®} UV-1164, TINUVIN^{®} 1577FF, P-800 are not in accordance with the claimed invention. | | |

**Table 1: UV Weathering Performance of Polypropylene Stabilized with HALS + UV Absorber + Mono-hydroxy Alcohol**

| **(60° Gloss Data)** | | | | |
|---|---|---|---|---|
| Description | | 60° Gloss (Initial) | 60° Gloss (After 100 hours) | 60° Gloss (After 800 hours) |
| 1-(1) | No additive | 91 | Failed* | -- |
| 1-(2) | 0.15% Stearyl Alcohol | 90 | Failed* | -- |
| 1-(3) | 0.09% UV-3346 + 0.01% UV-1164 | 91 | 88 | Failed * |
| 1-(4) | 0.09% UV-3346 + 0.01% UV-1164 + 0.15% Stearyl Alcohol | 92 | 89 | 88 |

| | | | | |
|---|---|---|---|---|
| *Sample failed due to surface crazing. | | | | |

Formulation 1-(4) demonstrates that stearyl alcohol shows synergistic performance when used in combination with UV-1164 (UV absorber)/UV-3346 (HALS).

**Table 2: UV Weathering Performance of Polypropylene Stabilized with UV Absorbers + Ethoxylated Alcohol**

| **(60° Gloss Data)** | | | | |
|---|---|---|---|---|
| Description | | 60° Gloss (Initial) | 60° Gloss (After 100 hours) | 60° Gloss (After 200 hours) |
| 4-(1) | No Additive | 89 | Failed* | -- |
| 4-(2) | 0.15% BRIJ^{®} S2 | 89 | Failed* | -- |
| 4-(3) | 0.1% Me-UV 1164 | 89 | Failed* | -- |
| 4-(4) | 0.1% Me-UV 1164 + 0.15% BRIJ^{®} S2 | 89 | Failed* | -- |
| 4-(5) | 0.1% TINUVIN 1577FF | 89 | 87 | Failed* |
| 4-(6) | 0.1% TINUVIN 1577FF + 0.15% BRIJ^{®} S2 | 89 | 87 | 90 |
| 4-(7) | 0.1% UV-1164 | 90 | 87 | Failed* |
| 4-(8) | 0.1% UV-1164 + 0.15% BRIJ^{®} S2 | 89 | 88 | 89 |

| | | | | |
|---|---|---|---|---|
| *Sample failed due to surface crazing. | | | | |

Formulations 4-(6) and 4-(8) demonstrate that triazine UV absorbers (TINUVIN^{®} 1577FF and UV-1164) both show synergistic performance when used in combination with BRIJ^{®} S2.

**Table 3: UV Weathering Performance of Polypropylene Stabilized with UV Absorbers + Ethoxylated Alcohol**

| **(60° Gloss Data)** | | | | | |
|---|---|---|---|---|---|
| Description | | 60° Gloss (Initial) | 60° Gloss (After 50 hours) | 60° Gloss (After 150 hours) | 60° Gloss (After 350hours) |
| 5-(1) | No Additive | 88 | Failed* | -- | -- |
| 5-(2) | 0.15% BRIJ^{®} S2 | 86 | Failed* | -- | -- |
| 5-(3) | 0.1% UV-531 | 88 | 88 | 89 | Failed* |
| 5-(4) | 0.1% UV-531 + 0.15% BRIJ^{®} S2 | 87 | 88 | 89 | 83 |
| 5-(5) | 0.1% UV-5411 | 86 | 84 | Failed* | -- |
| 5-(6) | 0.1% UV-5411 + 0.15% BRIJ^{®} S2 | 87 | 87 | Failed* | -- |
| 5-(7) | 0.1% UV-1164 | 89 | 89 | Failed* | -- |
| 5-(8) | 0.1% UV-1164 + 0.15% BRIJ^{®} S2 | 88 | 88 | 85 | Failed* |

| | | | | | |
|---|---|---|---|---|---|
| *Sample failed due to surface crazing. | | | | | |

Comparing formulations 5-(4) and 5-(8) in the above table demonstrate that the benzophenone UV absorber (UV-531) shows higher synergistic performance than the triazine UV absorber (UV-1164) when used in combination with BRIJ^{®} S2.

**Tables 4A, B: UV Weathering Performance of Polypropylene Stabilized with HALS Variants + Ethoxylated Alcohol**

| **(60° Gloss Data)** | | | | |
|---|---|---|---|---|
| **4A** | | | | |
| Description | | 60° Gloss (Initial) | 60° Gloss (After 200 hours) | 60° Gloss (After 400 hours) |
| 6-(1) | No additive | 90 | Failed* | -- |
| 6-(2) | 0.10% BRIJ^{®} S2 | 90 | Failed* | |
| 6-(3) | 0.10% UV-3529 | 91 | 88 | Failed* |
| 6-(4) | 0.10% UV-3529 + 0.10% BRIJ^{®} S2 | 90 | 87 | Failed* |
| 6-(5) | 0.05% UV-3853 | 91 | 87 | Failed* |
| 6-(6) | 0.05% UV-3853 + 0.10% BRIJ^{®} S2 | 90 | 88 | Failed* |

| | | | | |
|---|---|---|---|---|
| *Sample failed due to surface crazing. | | | | |

### 4B

| Description | | 60° Gloss (Initial) | 60° Gloss (After 100 hours) | 60° Gloss (After 400 hours) |
|---|---|---|---|---|
| 6-(7) | No additive | 87 | Failed* | -- |
| 6-(8) | 0.15% BRIJ^{®} S2 | 89 | Failed* | |
| 6-(9) | 0.09% UV-3346 | 88 | 88 | Failed* |
| 6-(10) | 0.09% UV-3346 + 0.15% BRIJ^{®} S2 | 88 | 90 | Failed* |

| | | | | |
|---|---|---|---|---|
| *Sample failed due to surface crazing. | | | | |

Formulations 6-(4), 6-(6), and 6-(10) show that HALS (UV-3529, UV-3853, UV-3346) do not show any synergistic performance when used in combination with BRIJ^{®} S2.

**Table 5: UV Weathering Performance of Polypropylene Stabilized with UV Absorbers + HALS + Ethoxylated Alcohol**

| **(60° Gloss Data)** | | | | | | |
|---|---|---|---|---|---|---|
| **5.** | | | | | | |
| Description | | 60° Gloss (Initial ) | 60° Gloss (After 200 hours) | 60° Gloss (After 600 hours) | 60° Gloss (After 800 hours) | 60° Gloss (After 1000 hours) |
| 7-(1) | No additive | 89 | Failed* | -- | -- | -- |
| 7-(2) | 0.15% BRIJ^{®} S2 | 89 | Failed* | -- | -- | -- |
| 7-(3) | 0.09% UV-3346 + 0.01% Me UV-1164 | 90 | 88 | Failed* | -- | -- |
| 7-(4) | 0.09% UV-3346 + 0.01% Me UV-1164 + 0.15% BRIJ^{®} S2 | 90 | 88 | Failed* | -- | -- |
| 7-(5) | 0.09% UV-3346 + 0.01% UV-1164 | 89 | 87 | 89 | Failed* | -- |
| 7-(6) | 0.09% UV-3346 + 0.01% UV-1164 + 0.15% BRIJ^{®} S2 | 89 | 89 | 89 | 89 | 88 |
| 7-(7) | 0.09% UV-3346 + 0.01% TINUVIN 1577FF | 90 | 88 | 89 | Failed* | -- |
| 7-(8) | 0.09% UV-3346 + 0.01% TINUVIN 1577FF + 0.15% BRIJ^{®} S2 | 89 | 88 | 89 | 89 | 88 |
| 7-(9) | 0.09% UV-3346 + 0.01% P-800 | 90 | 87 | 88 | Failed* | -- |
| 7-(10) | 0.09% UV-3346 + 0.01% P-800 + 0.15% BRIJ^{®} S2 | 90 | 87 | 88 | 89 | Failed* |

| | | | | | | |
|---|---|---|---|---|---|---|
| *Sample failed due to surface crazing. | | | | | | |

Formulations 7-(6), 7-(8), and 7-(10) demonstrate that HALS (UV-3346) in combination with triazine UV absorber variants show synergistic performance when used in combination with BRIJ^{®} S2. Formulation 7-(4) indicates lack of synergistic performance when methylated UV-1164 is used.

**Table 6: UV Weathering Performance of Polypropylene Stabilized with HALS + UV Absorber + Ethoxylated Alcohol**

| **(Physical Properties: Percent Retention of Stress at Break)** | | | | |
|---|---|---|---|---|
| Description | | % Retention of Stress at Break (Initial) | % Retention of Stress at Break (After 1000 hours) | % Retention of Stress at Break (After 2000 hours) |
| 8-(1) | No additive | 100 | Failed** | -- |
| 8-(2) | 0.10% BRIJ^{®} S2 | 100 | Failed** | -- |
| 8-(3) | 0.09% UV-3346 + 0.01% UV-1164 | 100 | 57 | Failed** |
| 8-(4) | 0.09% UV-3346 + 0.01% UV-1164 + 0.10% BRIJ^{®} S2 | 100 | 77 | 71 |

| | | | | |
|---|---|---|---|---|
| ** Samples retained less than 50% of the original tensile strength. | | | | |

Formulation 8-(4) demonstrates that BRIJ^{®} S2 shows synergistic performance when used in combination with UV-1164 (UV absorber)/UV-3346 (HALS) in enhancing physical properties.

**Table 7: UV Weathering Performance of Polypropylene Stabilized with HALS + Different Classes of UV Absorbers + Ethoxylated Alcohol**

| **(60° Gloss Data)** | | | | |
|---|---|---|---|---|
| Description | | 60° Gloss (Initial) | 60° Gloss (After 500 hours) | 60° Gloss (After 600 hours) |
| 9-(1) | 0.09% UV-3346 + 0.01% UV-531 | 90 | Failed* | -- |
| 9-(2) | 0.09% UV-3346 + 0.01% UV-531 + 0.15% BRIJ^{®} S2 | 90 | 90 | 89 |
| 9-(3) | 0.09% UV-3346 + 0.01% UV-5411 | 89 | 90 | Failed* |
| 9-(4) | 0.09% UV-3346 + 0.01% UV-5411+ 0.15% BRIJ^{®} S2 | 89 | 90 | 89 |
| 9-(5) | 0.09% UV-3346 + 0.01% UV-1164 | 89 | Failed* | -- |
| 9-(6) | 0.09% UV-3346 + 0.01% UV-1164 + 0.15% BRIJ^{®} S2 | 90 | 90 | 89 |

| | | | | |
|---|---|---|---|---|
| *Sample failed due to surface crazing. | | | | |

Formulations 9-(2), 9-(4), and 9-(6) demonstrate that HALS (UV-3346) in combination with different classes of UV absorbers show synergistic performance when used in combination with BRIJ^{®} S2.

**Table 8: UV Weathering Performance of Polypropylene Stabilized with HALS + UV Absorber + Hindered Benzoate + Ethoxylated Alcohol**

| **(60° Gloss Data)** | | | | |
|---|---|---|---|---|
| Description | | 60° Gloss (Initial) | 60° Gloss (After 500 hours) | 60° Gloss (After 600 hours) |
| 10-(1) | 0.045% UV-3346 + 0.01% UV-1164 + 0.045% UV-2908 | 90 | 86 | Failed* |
| 10-(2) | 0.045% UV-3346 + 0.01% UV-1164 + 0.045% 2908 + 0.15% BRIJ^{®} S2 | 90 | 90 | 89 |

| | | | | |
|---|---|---|---|---|
| *Sample failed due to surface crazing. | | | | |

Formulation 10-(2) demonstrates that HALS (UV-3346) in combination with UV absorber (UV-1164) and hindered benzoate (UV-2908) shows synergistic performance when used in combination with BRIJ^{®} S2.

**Table 9: UV Weathering Performance of Polypropylene Stabilized with HALS + UV Absorber + Stearyl Alcohol vs. BRIJ^{®} S2**

| **(60° Gloss Data)** | | | | | |
|---|---|---|---|---|---|
| Description | | 60° Gloss (Initial) | 60° Gloss (After 100 hours) | 60° Gloss (After 700 hours) | 60° Gloss (After 800 hours) |
| 11-(1) | No additive | 91 | Failed* | -- | -- |
| 11-(2) | 0.09% UV-3346 + 0.01% UV-1164 | 91 | 88 | Failed* | -- |
| 11-(3) | 0.09% UV-3346 + 0.01% UV-1164 + 0.15% Stearyl Alcohol | 92 | 89 | 88 | Failed* |
| 11-(4) | 0.09% UV-3346 + 0.01% UV-1164 + 0.15% BRIJ^{®} S2 | 93 | 88 | 88 | 87 |

| | | | | | |
|---|---|---|---|---|---|
| *Sample failed due to surface crazing. | | | | | |

Comparing formulations 11-(3) and 11-(4) demonstrates that HALS (UV-3346) in combination with UV absorber (UV-1164) shows higher synergistic performance when used with BRIJ^{®} S2 than with stearyl alcohol.

**Table 10: UV Weathering Performance of Polypropylene Stabilized with HALS + UV Absorber + Ethoxylated Alcohols with Varying Degree of Ethoxylation**

| **(60° Gloss Data)** | | | | |
|---|---|---|---|---|
| .Description | | 60° Gloss (Initial) | 60° Gloss (After 100 hours) | 60° Gloss (After 700 hours) |
| 12-(1) | No additive | 91 | Failed* | -- |
| 12-(2) | 0.09% UV-3346 + 0.01% UV-1164 | 91 | 88 | Failed* |
| 12-(3) | 0.09% UV-3346 + 0.01% UV-1164 + 0.15% BRIJ^{®} S2 | 93 | 88 | 88 |
| 12-(4) | 0.09% UV-3346 + 0.01% UV-1164 + 0.15% Steareth-5 | 91 | 87 | 87 |
| 12-(5) | 0.09% UV-3346 + 0.01% UV-1164 + 0.15% Steareth-10 | 92 | 84 | 87 |

| | | | | |
|---|---|---|---|---|
| *Sample failed due to surface crazing. | | | | |

Formulations 12-(3), 12-(4) and 12-(5) in the above table demonstrates that ethoxylated alcohols with varying degree of ethoxylation all show synergistic performance when used with HALS (UV-3346) and UV absorber (UV-1164).

**Table 11: UV Weathering Performance of Polypropylene Stabilized with HALS + UV Absorber + Ethoxylated Alcohols with Alkyl Chain Variants**

| **(60° Gloss Data)** | | | | |
|---|---|---|---|---|
| | Description | 60° Gloss (Initial) | 60° Gloss (After 100 hours) | 60° Gloss (After 600 hours) |
| 13-(1) | No UV Stabilizer | 87 | Failed* | |
| 13-(2) | 0.09% UV-3346 + 0.01% UV-1164 | 87 | 87 | Failed* |
| 13-(3) | 0.09% UV-3346 + 0.01% UV-1164/0.15% BRIJ^{®} S2 | 88 | 88 | 88 |
| 13-(4) | 0.09% UV-3346 + 0.01% UV-1164/0.15% Laureth-2 | 88 | 88 | 90 |
| 13-(5) | 0.09% UV-3346 + 0.01% UV-1164/0.15% BRIJ^{®} 93 | 87 | 86 | 88 |
| 13-(6) | 0.09% UV-3346 + 0.01% UV-1164/0.15% NOVEL^{®} 22-4 | 87 | 87 | 87 |
| 13-(7) | 0.09% UV-3346 + 0.01% UV-1164/0.15% UNITHOX^{®} 420 | 87 | 88 | 88 |

| | | | | |
|---|---|---|---|---|
| *Sample failed due to surface crazing. | | | | |

Formulations 13-(3) to 13-(7) demonstrate that ethoxylated alcohols with varying degree of alkyl chain length all show synergistic performance when used with HALS (UV-3346) and UV absorber (UV-1164).

**Table 12: UV Weathering Performance of Polypropylene Stabilized with HALS + UV Absorber + Ethoxylated Branched Alcohols**

| **(60° Gloss Data)** | | | | |
|---|---|---|---|---|
| Description | | 60° Gloss (Initial) | 60° Gloss (After 100 hours) | 60° Gloss (After 700 hours) |
| 14-(1) | No Stabilizer | 88 | Failed* | -- |
| 14-(2) | 0.15% NOVEL^{®} 23E2 | 89 | Failed* | -- |
| 14-(3) | 0.15% TERGITOL^{®} 15-S-3 | 89 | Failed* | -- |
| 14-(4) | 0.09% UV-3346 + 0.01% UV-1164 | 89 | 89 | Failed* |
| 14-(5) | 0.09% UV-3346 + 0.01% UV-1164 + 0.15% NOVEL^{®} 23E2 | 89 | 89 | 90 |
| 14-(6) | 0.09% UV-3346 + 0.01% UV-1164+ 0.15% TERGITOL^{®} 15-S-3 | 89 | 90 | 88 |

| | | | | |
|---|---|---|---|---|
| *Sample failed due to surface crazing. | | | | |

Formulations 14-(5) and 14-(6) demonstrate that branched ethoxylated alcohols show synergistic performance when used with HALS (UV-3346) and UV absorber (UV-1164).

**Table 13: UV Weathering Performance of Polypropylene Stabilized with HALS + UV Absorber + Alkylated Ethoxylated Alcohols**

| **(60° Gloss Data)** | | | | |
|---|---|---|---|---|
| Description | | 60° Gloss (Initial) | 60° Gloss (After 100 hours) | 60° Gloss (After 700 hours) |
| 15-(1) | No Stabilizer | 88 | Failed* | -- |
| 15-(2) | 0.15% Methylated BRIJ^{®} S2 | 90 | Failed* | -- |
| 15-(3) | 0.15% Methylated HETOXOL^{®} OL-4 | 89 | Failed* | -- |
| 15-(4) | 0.09% UV-3346 + 0.01% UV-1164 | 88 | 88 | Failed* |
| 15-(5) | 0.09% UV-3346 + 0.01% UV-1164 + 0.15% Methylated BRIJ^{®} S2 | 89 | 88 | 85 |
| 15-(6) | 0.09% UV-3346 + 0.01% UV-1164+ 0.15% Methylated HETOXOL^{®} OL-4 | 89 | 88 | 87 |

| | | | | |
|---|---|---|---|---|
| *Sample failed due to surface crazing. | | | | |

Formulations 15-(5) and 15-(6) demonstrate that methylated ethoxylated alcohols show synergistic performance when used with HALS (UV-3346) and UV absorber (UV-1164).

**Tables 14A, B: UV Weathering Performance of Polypropylene Stabilized with HALS Variants + UV Absorber + Ethoxylated Alcohol**

| **(60° Gloss Data)** | | | |
|---|---|---|---|
| **14A** | | | |
| Description | | 60° Gloss (Initial) | 60° Gloss (After 800 hours) |
| 16-(1) | 0.09% UV-3346 + 0.01% UV-1164 | 80 | Failed* |
| 16-(2) | 0.09% UV-3346 + 0.01% UV-1164 + 0.15% BRIJ^{®} S2 | 89 | 90 |
| 16-(3) | 0.09% UV-3529 + 0.01% UV-1164 | 89 | Failed* |
| 16-(4) | 0.09% UV-3529 + 0.01% UV-1164+ 0.15% BRIJ^{®} S2 | 89 | 90 |

| | | | |
|---|---|---|---|
| *Sample failed due to surface crazing. | | | |

### 14B

| Description | | 60° Gloss (Initial) | 60° Gloss (After 1000 hours) |
|---|---|---|---|
| 16-(5) | 0.09% UV-3853 + 0.01% UV-1164 | 88 | Failed* |
| 16-(6) | 0.09% UV-3853 + 0.01% UV-1164 + 0.15% BRIJ^{®} S2 | 89 | 90 |

| | | | |
|---|---|---|---|
| *Sample failed due to surface crazing. | | | |

Formulations 16-(2), 16-(4) and 16-(6) demonstrate that all HALS (UV-3346, UV-3529, UV-3853) in combination with UV absorber (UV-1164) show synergistic performance when used in combination with BRIJ^{®} S2.

**Tables 15A, B: UV Weathering Performance of Polypropylene Stabilized with HALS + UV Absorber + Alcohol Ethoxylate/Propoxylate**

| **(60° Gloss Data)** | | | | |
|---|---|---|---|---|
| **15A.** | | | | |
| Description | | 60° Gloss (Initial) | 60° Gloss (After 100 hours) | 60° Gloss (After 700 hours) |
| 28-(1) | 0.15% GENAPOL^{®} EP2552 | 90 | Failed* | -- |
| 28-(2) | 0.09% UV-3346 + 0.01% UV-1164 | 90 | 90 | Failed* |
| 28-(3) | 0.09% UV-3346 + 0.01% UV-1164 + 0.15% GENAPOL^{®} EP2552 | 89 | 89 | 89 |

| | | | | |
|---|---|---|---|---|
| *Sample failed due to surface crazing. | | | | |

### 15B.

| Description | | 60° Gloss (Initial) | 60° Gloss (After 100 hours) | 60° Gloss (After 800 hours) |
|---|---|---|---|---|
| 28-(4) | No stabilizer | 88 | Failed* | -- |
| 28-(5) | 0.15% GENAPOL^{®} EP2525 | 88 | Failed* | -- |
| 28-(6) | 0.09% UV-3346 + 0.01% UV-1164 | 89 | 89 | Failed* |
| 28-(7) | 0.09% UV-3346 + 0.01% UV-1164 + 0.15% GENAPOL^{®} EP2525 | 89 | 89 | 90 |

| | | | | |
|---|---|---|---|---|
| *Sample failed due to surface crazing. | | | | |

Formulations 28-(3) and 28-(7) demonstrate that HALS (UV-3346) in combination with UV absorber (UV-1164) show synergistic performance when used in combination with alcohol ethoxylate/propoxylate.

**Table 16: UV Weathering Performance of Polypropylene Stabilized with HALS + UV absorber + Ethoxylated Alcohols**

| **(60° Gloss Data)** | | | | |
|---|---|---|---|---|
| Description | | 60° Gloss (Initial) | 60° Gloss (After 300 hours) | 60° Gloss (After 800 hours) |
| 29-(1) | No stabilizer | 88 | Failed* | - |
| 29-(2) | 0.09% UV-3346 + 0.01% UV-1164 | 88 | 88 | Failed* |
| 29-(3) | 0.09% UV-3346 + 0.01% UV-1164 + 0.15% BEROL^{®} 840 | 90 | 88 | Failed* |
| 29-(4) | 0.09% UV-3346 + 0.01% UV-1164 + 0.15% LUTENSOL^{®} XP 80 | 89 | 88 | Failed* |
| 29-(5) | 0.09% UV-3346 + 0.01% UV-1164+0.15% JEECOL^{®} LA-4 | 88 | 87 | 79 |
| 29-(6) | 0.09% UV-3346 + 0.01% UV-1164+0.15% BRIJ^{®}-S2 | 89 | 88 | 89 |
| 29-(7) | 0.09% UV-3346 + 0.01% UV-1164+0.15% HETOXOL^{®} OL4 | 90 | 89 | 89 |

| | | | | |
|---|---|---|---|---|
| *Sample failed due to surface crazing. | | | | |

Table 16 shows that a range of ethoxylated alcohols can be used in the invention and that stabilizer formulations containing ethoxylated C₁₂ alcohols (or higher carbon number) provide the best stabilization. The ethoxylated alcohol can also be alkylated at the terminal hydroxyl group.

### Example 2

### UV Weathering Performance of Other Resin Types/(60° Gloss Data)

Similar to Example 1, various additive compounds are compounded with high-density polyethylene polymer (available as SCLAIR^{®} 2909 from Nova Chemicals), or with polyamide Nylon 66 polymer (available as TORZEN^{®} U4800 NC01 from M. Holland), and extruded using conventional twin-screw extrusion parameters. After extrusion, standard 2 x 2 x 0.125 inch plaques and tensile bars (1 inch) are injection molded using an Arburg injection molding machine. The results are provided in the Tables below.

**Table 17: UV Weathering Performance of High-Density Polyethylene Stabilized with HALS + UV Absorber + Ethoxylated Alcohol**

| **(60° Gloss Data)** | | | | |
|---|---|---|---|---|
| Description | | 60° Gloss (Initial) | 60° Gloss (After 250 hours) | 60° Gloss (After 2000 hours) |
| 30-(1) | No additive | 93 | Failed* | -- |
| 30-(2) | 0.09% UV-3346 + 0.01% UV-1164 | 93 | 97 | Failed* |
| 30-(3) | 0.09% UV-3346 + 0.01% UV-1164 + 0.15% BRIJ^{®} S2 | 95 | 95 | 94 |

| | | | | |
|---|---|---|---|---|
| *Sample failed due to surface crazing. | | | | |

In high-density polyethylene polymer, formulation 30-(3) demonstrates that HALS (UV-3346) in combination with UV absorber (UV-1164) show synergistic performance when used in combination with BRIJ^{®} S2.

**Table 18: UV Weathering Performance of High-Density Polyethylene Stabilized with HALS + UV Absorber + Ethoxylated Alcohol**

| **(Physical Properties: Percent Retention of Strain at Break)** | | | | |
|---|---|---|---|---|
| Description | | % Retention of Strain at Break (Initial) | % Retention of Strain at Break (After 500 hours) | % Retention of Strain at Break (After 1250 hours) |
| 31-(1) | No additive | 100 | Failed*** | -- |
| 31-(2) | 0.09% UV-3346 + 0.01% UV-1164 | 100 | 72 | Failed*** |
| 31-(3) | 0.09% UV-3346 + 0.01% UV-1164 + 0.15% BRIJ^{®} S2 | 100 | 71 | 64 |

| | | | | |
|---|---|---|---|---|
| *** Samples retained less than 50% of the original elongation at break. | | | | |

In high-density polyethylene polymer, formulation 31-(3) demonstrates that HALS (UV-3346) in combination with UV absorber (UV-1164) show synergistic performance when used in combination with BRIJ^{®} S2 in enhancing physical properties.

**Table 19: UV Weathering Performance of Polyamide (Nylon 66) Stabilized with HALS + UV Absorber + Ethoxylated Alcohol**

| **(60° Gloss Data)** | | | |
|---|---|---|---|
| Description | | 60° Gloss (Initial) | 60° Gloss (After 200 hours) |
| 32-(1) | 0.09% UV-3346 + 0.01% UV-1164 | 93 | Failed* |
| 32-(2) | 0.09% UV-3346 + 0.01% UV-1164 + 0.10% BRIJ^{®} S2 | 96 | 97 |

| | | | |
|---|---|---|---|
| *Sample failed due to surface crazing. | | | |

In nylon, formulation 32-(2) demonstrates that HALS (UV-3346) in combination with UV absorber (UV-1164) show synergistic performance when used in combination with BRIJ^{®} S2.

### Example 3

### Contact Angle Measurements (Water on Polypropylene Plaques)

Contact angles are measured using the sessile drop method which is an optical contact angle method using a KSV Model 200 CAM. Measurements are made on several droplets on injection molded plaques. The instrument software measures the left and right angles using the Young/Laplace equation-based method. The area of the droplet is measured using the software rather than controlling the volume of droplet with a micro-pipette. The volume of each droplet is ~10.0 ± 0.5µL. Results are shown in the Table below.

**Table 20. Contact Angle Measurements (Water on Polypropylene Plaques)**

| **Formulation** | **Contact Angle (°)** |
|---|---|
| 33-(1) 0.01% UV-1164/0.09% UV-3346/0.10% BRIJ^{®} S2 | 102 |
| 33-(2) 0.01% UV-1164/0.09% UV-3346/0.15% BRIJ^{®} S2 | 94 |
| 33-(3) 0.01% UV-1164/0.09% UV-3346/0.30% BRIJ^{®} S2 | 98 |
| 33-(4) 0.025% UV-1164/0.23% UV-3346/0.30% BRIJ^{®} S2 | 96 |
| 33-(5) 0.01% UV-1164/0.09% UV-3346 | 102 |
| 33-(6) Polypropylene resin (control) | 102 |
| 33-(7) 0.10% BRIJ^{®} S2 | 107 |
| 33-(8) 0.15% BRIJ^{®} S2 | 96 |
| 33-(9) 0.30% BRIJ^{®} S2 | 88 |
| 33-(10) 1.0% BRIJ^{®} S2 | <5 |

Table 20 shows that formulations of the invention can provide a low degree of wettability as measured by the contact angle made with a water droplet on a surface of an article of manufacture made with a material, such as polypropylene, containing a stabilizer composition as described herein.

## Claims

1. A stabilizer composition for polymeric organic materials, said stabilizer composition consisting essentially of:
i) a stabilizing amount of an ultraviolet light absorber (UVA) selected from the group consisting of: orthohydroxybenzophenone compounds; orthohydroxyphenyl benzotriazole compounds; and mixtures thereof;
ii) a stabilizing amount of a co-active agent selected from the group consisting of C₁₂-C₆₀ monohydric alcohols; alkoxylated alcohols or monoalkyl ethers thereof; and mixtures thereof, wherein the co-active agent is present at from 1 wt.% to 99 wt. % based on the total weight of the stabilizer composition; and
iii) a stabilizing amount of a hindered amine light stabilizer compound (HALS) comprising a functional group according to Formula (II): 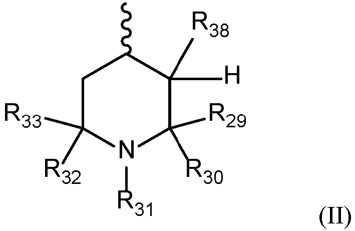 wherein R₃₁ is chosen from: hydrogen; OH; C₁-C₂₀ hydrocarbyl; -CH₂CN; C₁-C₁₂ acyl; or C₁-C₁₈ alkoxy; R₃₈ is chosen from: hydrogen; or C₁-C₈ hydrocarbyl; and each of R₂₉, R₃₀, R₃₂, and R₃₃ is independently chosen from C₁-C₂₀ hydrocarbyl, or R₂₉ and R₃₀ and/or R₃₂ and R₃₃ taken together with the carbon to which they are attached form a C₅-C₁₀ cycloalkyl; or
a functional group according to Formula (IIa): 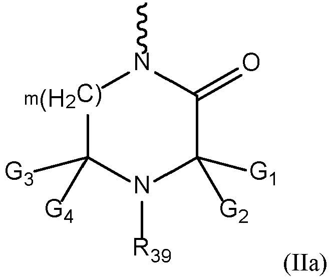
wherein
m is an integer from 1 to 2;
R₃₉ is chosen from: hydrogen; OH; C₁-C₂₀ hydrocarbyl; -CH₂CN; C₁-C₁₂ acyl; or C₁-C₁₈ alkoxy; and
each of G₁-G₄ is independently chosen from C₁-C₂₀ hydrocarbyl; or
mixtures of HALS compounds having functional groups according to Formula (II) and Formula (IIa).

2. A stabilizer composition according to claim 1, wherein the co-active agent and the UV absorber combined with HALS (co-active agent : (UVA + HALS)) are present in a weight ratio from 1:20 to 50: 1.

3. A stabilizer composition according to claim 1 or 2, wherein the orthohydroxybenzophenone compound is selected from the group consisting of 2-hydroxy-4-methoxybenzophenone; 2,2'-dihydroxy-4-methoxybenzophenone; 2-hydroxy-4-octyloxybenzophenone; 2,2'-dihydroxy-4,4'-di-methoxybenzophenone; 2,2'-dihydroxybenzophenone; 2,2',4,4'-tetrahydroxybenzophenone; 2,2'-dihydroxy-4,4'-dimethoxybenzophenone; 2,2'-dihydroxy-4,4'-diethoxybenzophenone; 2,2'-dihydroxy-4,4'-dipropoxybenzophenone; 2,2'-dihydroxy-4,4'-dibutoxybenzophenone; 2,2'-dihydroxy-4-methoxy-4'-ethoxybenzophenone; 2,2'-dihydroxy-4-methoxy-4'-propoxybenzophenone; 2,2'-dihydroxy-4-methoxy-4'-butoxybenzophenone; 2,2'-dihydroxy-4-ethoxy-4'-propoxybenzophenone; 2,2'-dihydroxy-4-ethoxy-4'-butoxybenzophenone; 2,3'-dihydroxy-4,4'-dimethoxybenzophenone; 2,3'-dihydroxy-4-methoxy-4'-butoxybenzophenone; 2-hydroxy-4,4',5'-trimethoxybenzophenone; 2-hydroxy-4,4',6'-tributoxybenzophenone; 2-hydroxy-4-butoxy-4',5'-dimethoxybenzophenone; 2-hydroxy-4-ethoxy-2',4'-dibutylbenzophenone; 2-hydroxy-4-propoxy-4',6'-dichlorobenzophenone; 2-hydroxy-4-propoxy-4',6'-dibromobenzophenone; 2,4-dihydroxybenzophenone; 2-hydroxy-4-ethoxybenzophenone; 2-hydroxy-4-propoxybenzophenone; 2-hydroxy-4-butoxybenzophenone; 2-hydroxy-4-methoxy-4'-methylbenzophenone; 2-hydroxy-4-methoxy-4'-ethylbenzophenone; 2-hydroxy-4-methoxy-4'-propylbenzophenone; 2-hydroxy-4-methoxy-4'-butylbenzophenone; 2-hydroxy-4-methoxy-4'-tertiary butylbenzophenone; 2-hydroxy-4-methoxy-4'-chlorobenzophenone; 2-hydroxy-4-methoxy-2'-chlorobenzophenone; 2-hydroxy-4-methoxy-4'-bromobenzophenone; 2-hydroxy-4,4'-dimethoxybenzophenone; 2-hydroxy-4,4'-dimethoxy-3-methylbenzophenone; 2-hydroxy-4,4'-dimethoxy-2'-ethylbenzophenone; 2-hydroxy-4,4',5'-trimethoxybenzophenone; 2-hydroxy-4-ethoxy-4'-methylbenzophenone; 2-hydroxy-4-ethoxy-4'-ethylbenzophenone; 2-hydroxy-4-ethoxy-4'-propylbenzophenone; 2-hydroxy-4-ethoxy-4'-butylbenzophenone; 2-hydroxy-4-ethoxy-4'-methoxybenzophenone; 2-hydroxy-4,4'-diethoxybenzophenone; 2-hydroxy-4-ethoxy-4'-propoxybenzophenone; 2-hydroxy-4-ethoxy-4'-butoxybenzophenone; 2-hydroxy-4-ethoxy-4'-chlorobenzophenone; 2-hydroxy-4-ethoxy-4'-bromobenzophenone; and mixtures thereof; and
wherein the orthohydroxyphenyl benzotriazole compound is selected from the group consisting of 2-(2'-hydroxy-5'-methylphenyl)-benzotriazole; 2-(2'-hydroxy-5'-tert-butylphenyl)benzotriazole; 2-(2'-hydroxy-3'-methyl-5'-tert-butylphenyl)-benzotriazole; 2-(2'-hydroxy-5'-cyclohexylphenyl)-benzotriazole; 2-(2'-hydroxy-3',5'-dimethylphenyl)-benzotriazole; 2-(2'-hydroxy-5'-tert-butylphenyl)-5-chloro-benzotriazole; 2-(2'-hydroxy-5-tert-octylphenyl)-2H-benzotriazole; 2-(2'-hydroxy-5-octylphenyl)-2H-benzotriazole; 2-(3',5'-di-tert-butyl-2'-hydroxyphenyl)-5-chlorobenzotriazole; 2-(3'-tert-butyl-5'-methyl-butyl-2'hydroxyphenyl)-5-chlorobenzotriazole; 2-(3',5'-di-tert-amyl-2'-hydroxyphenyl)benzotriazole; 2-(3',5'-bis(α,α-dimethylbenzyl)-2'-hydroxyphenyl)benzotriazole; 2-(3'-tert-butyl-2'-hydroxy-5'-(2-octyloxycarbonylethyl)phenyl)benzotriazole; 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 2-[2'-hydroxy-3'-(α,α-dimethylbenzyl)-5'-(1,1,3,3-tetramethyl- butyl)phenyl]benzotriazole; 5-trifluoromethyl-2-(2-hydroxy-3-α-cumyl-5-tert-octylphenyl)-2H-benzotriazole; 2-(2'-hydroxy-5'-(2-hydroxyethyl)phenyl)benzotriazole; 2-(2'-hydroxy-5'-(2-methacryloyloxyethyl)phenyl)benzotriazole; 2-(3'-tert-butyl-5'-methyl-2'-hydroxyphenyl)-5-chloro-benzotriazole; 2-(3'-sec-butyl-5'-tert.butyl-2'-hydroxyphenyl)-benzotriazole; 2-(3',5'-di-tert-butyl-2'-hydroxyphenyl)-benzotriazole; 2-(5'-tert-octyl-2'-hydroxyphenyl)-benzotriazole; 2-(3'-dodecyl-5'-methyl-2'-hydroxyphenyl)-benzotriazole; 2-(3'-tert-butyl-5'-(2-octyloxycarbonylethyl)-2'-hydroxyphenyl)-5-chlorobenzotriazole; 2-(5'-methyl-2'-hydroxyphenyl)-benzotriazole; 2-(5'-tert-butyl-2'-hydroxyphenyl)-benzotriazole; 2-(2'-hydroxy-3'-di-tert-butylphenyl)-benzotriazole; and mixtures thereof.

4. A stabilizer composition according to any one of claims 1 to 3, wherein the hindered amine light stabilizer is selected from the group consisting of bis(2,2,6,6-tetramethylpiperidin-4-yl) sebacate; bis(2,2,6,6-tetramethylpiperidin-4-yl)succinate; bis(1,2,2,6,6-pentamethylpiperidin-4-yl)sebacate; bis(1-octyloxy-2,2,6,6-tetramethylpiperidin-4-yl)sebacate; bis(1,2,2,6,6-pentamethylpiperidin-4-yl) n-butyl 3,5-di-tert-butyl-4-hydroxybenzylmalonate; a condensate of 1-(2-hydroxyethyl)-2,2,6,6-tetramethyl-4-hydroxypiperidine and succinic acid; 2,2,6,6-tetramethylpiperidin-4-yl stearate; 2,2,6,6-tetramethylpiperidin-4-yl dodecanate; 1,2,2,6,6-pentamethylpiperidin-4-yl stearate; 1,2,2,6,6-pentamethylpiperidin-4-yl dodecanate; a condensate of N,N'-bis(2,2,6,6-tetramethylpiperidin-4-yl)hexamethylenediamine and 4-tert-octylamino-2,6-dichloro-1,3,5-triazine; tris(2,2,6,6-tetramethylpiperidin-4-yl) nitrilotriacetate; tetrakis(2,2,6,6-tetramethylpiperidin-4-yl)- 1,2,3,4-butanetetracarboxylate; 4-benzoyl-2,2,6,6-tetramethylpiperidine; 4-stearyloxy-2,2,6,6-tetramethylpiperidine; bis(1,2,2,6,6-pentamethylpiperidyl)-2-n-butyl-2-(2-hydroxy-3,5-di-tert-butylbenzyl)malonate; 3-n-octyl-7,7,9,9-tetramethyl-1,3,8-triazaspiro[4.5]decan-2,4-dione; bis(1-octyloxy-2,2,6,6-tetramethylpiperidyl)sebacate; bis(1-octyloxy-2,2,6,6-tetramethylpiperidyl)succinate; a condensate of N,N'-bis(2,2,6,6-tetramethylpiperidin-4-yl)hexamethylenediamine and 4-morpholino-2,6-dichloro-1,3,5-triazine; a condensate of N,N'-bis(2,2,6,6-tetramethylpiperidin-4-yl)hexamethylenediamine and 4-morpholino-2,6-dichloro-1,3,5-triazine, methylated; a condensate of 2-chloro-4,6-bis(4-n-butylamino-2,2,6,6-tetramethylpiperidyl)-1,3,5-triazine and 1,2-bis(3-aminopropylamino)ethane; a condensate of 2-chloro-4,6-bis(4-n-butylamino-1,2,2,6,6-pentamethylpiperidyl)-1,3,5-triazine and 1,2-bis-(3- aminopropylamino)ethane; 8-acetyl-3-dodecyl-7,7,9,9-tetramethyl-1,3,8-triazaspiro[4.5]decane-2,4-dione; 3-dodecyl-1-(2,2,6,6-tetramethylpiperidin-4-yl)pyrrolidin-2,5-dione; 3-dodecyl-1-(1-ethanoyl-2,2,6,6-tetramethylpiperidin-4-yl)pyrrolidin-2,5-dione; 3-dodecyl-1-(1,2,2,6,6-pentamethylpiperidin-4-yl)pyrrolidine-2,5-dione; a mixture of 4-hexadecyloxy- and 4-stearyloxy-2,2,6,6-tetramethylpiperidine; a mixture of 4-hexadecyloxy- and 4-stearyloxy-1,2,2,6,6-pentamethylpiperidine; a condensate of N,N'-bis(2,2,6,6-tetramethylpiperidin-4-yl)hexamethylenediamine and 4-cyclohexylamino-2,6-dichloro-1,3,5-triazine; a condensate of 1,2-bis(3-aminopropylamino)ethane, 2,4,6-trichloro-1,3,5-triazine and 4-butylamino-2,2,6,6-tetramethylpiperidine; 2-undecyl-7,7,9,9-tetramethyl-1-oxa-3,8-diaza-4-oxospiro[4.5]decane; oxo-piperanzinyl-triazines; a reaction product of 7,7,9,9-tetramethyl-2-cycloundecyl-1-oxa-3,8-diaza-4-oxospiro[4.5]decane and epichlorohydrin; tetrakis(2,2,6,6-tetramethyl-4-piperidyl) butane-1,2,3,4-tetracarboxylate; 1,2,3,4-butanetetracarboxylic acid, tetrakis(1,2,2,6,6-pentamethyl-4-piperidinyl)ester; 1,2,3,4-butanetetracarboxylic acid, 1,2,2,6,6-pentamethyl-4-piperdinyl tridecyl ester; 1,2,3,4-butanetetracarboxylic acid, 2,2,6,6-tetramethyl-4-piperidinyl tridecyl ester; 1,2,3,4-butanetetracarboxylic acid, polymer with 2,2,6,6-tetramethyl-2,4,8,10-tetraoxaspiro[5.5]-undecane-3,9-diethanol,1,2,2,6,6-pentamethyl-4-piperdinyl ester; 1,2,3,4-butanetetracarboxylic acid, polymer with 2,2,6,6-tetramethyl-2,4,8,10-tetraoxaspiro[5.5]-undecane-3,9-diethanol, 2,2,6,6-tetramethyl-4-piperdinyl ester; bis(1-undecanoxy-2,2,6,6-tetramethylpiperidin-4-yl)carbonate; 1-(2-hydroxy-2-methylpropoxy)-2,2,6,6-tetramethyl-4-piperdinol; 1-(2-hydroxy-2-methylpropoxy)-4-octadecanoyloxy-2,2,6,6-tetramethylpiperidine; 1-(4-octadecanoyloxy-2,2,6,6-tetramethylpiperidin-1-yloxy)-2-octadecanoyloxy-2-methylpropane; 1-(2-hydroxyethyl)-2,2,6,6-tetramethyl-4-piperdinol; a reaction product of 1-(2-hydroxyethyl)-2,2,6,6-tetramethyl-4-piperdinol and dimethylsuccinate; 2,2,4,4-tetramethyl-7-oxa-3,20-diazadispiro[5.1.11.2]heneicosan-21-one; the ester of 2,2,6,6-tetramethyl-4-piperidinol with higher fatty acids; 3-dodecyl-1-(2,2,6,6-tetramethyl-4-piperidyl)pyrrolidine-2,5-dione; 1H-Pyrrole-2,5-dione, 1-octadecyl-, polymer with (1-methylethenyl)benzene and 1-(2,2,6,6-tetramethyl-4-piperidinyl)-1H-pyrrole-2,5-dione; piperazinone, 1,1',1"-[1,3,5-triazine-2,4,6-triyltris[(cyclohexylimino)-2,1-ethanediyl]]tris[3,3,5,5-tetramethyl-; piperazinone, 1,1',1"-[1,3,5-triazine-2,4,6-triyltris[(cyclohexylimino)-2,1-ethanediyl]]tris[3,3,4,5,5-pentamethyl-; the reaction product of 7,7,9,9-tetramethyl-2-cycloundecyl-1-oxa-3,8-diaza-4-oxospiro[4.5]decane and epichlorohydrin; the condensate of N,N'-bis(2,2,6,6-tetramethylpiperidin-4-yl)hexamethylenediamine and 4-cyclohexylamino-2,6-dichloro-1,3,5-triazine; the condensate of 1,2-bis(3-aminopropylamino)ethane, 2,4,6-trichloro-1,3,5-triazine and 4-butylamino-2,2,6,6-tetramethylpiperidine; the condensate of N,N'-bis(2,2,6,6-tetramethylpiperidin-4-yl)hexamethylenediamine and 4-morpholino-2,6-dichloro-1,3,5-triazine; the condensate of 2-chloro-4,6-bis(4-n-butylamino-2,2,6,6-tetramethylpiperidyl)-1,3,5-triazine and 1,2-bis(3-aminopropylamino)ethane; the condensate of 2-chloro-4,6-bis(4-n-butylamino-1,2,2,6,6-pentamethylpiperidyl)-1,3,5-triazine and 1,2-bis-(3-aminopropylamino)ethane; 2-[(2-hydroxyethyl)amino]-4,6-bis[N-(1-cyclohexyloxy-2,2,6,6-tetramethylpiperidin-4-yl)butylamino-1,3,5-triazine; propanedioic acid, [(4-methoxyphenyl)-methylene]-bis-(1,2,2,6,6-pentamethyl-4-piperidinyl) ester; tetrakis(2,2,6,6-tetramethylpiperidin-4-yl)-1,2,3,4-butanetetracarboxylate; benzenepropanoic acid, 3,5-bis(1,1-dimethylethyl)-4-hydroxy-, 1-[2-[3-[3,5-bis(1,1-dimethylethyl)-4-hydroxyphenyl]-1-oxopropoxy]ethyl]-2,2,6,6-tetramethyl-4-piperidinyl ester; N-(1-octyloxy-2,2,6,6-tetramethylpiperidin-4-yl)-N'-dodecyloxalamide; tris(2,2,6,6-tetramethylpiperidin-4-yl) nitrilotriacetate; 1,5-dioxaspiro{5,5}undecane-3,3-dicarboxylic acid, bis(1,2,2,6,6-pentamethyl-4-piperidinyl): 1,5-dioxaspiro{5,5}undecane-3,3-dicarboxylic acid, bis(2,2,6,6-tetramethyl-4-piperidinyl); the condensate of 1-(2-hydroxyethyl)-2,2,6,6-tetramethyl-4-hydroxypiperidine and succinic acid; the condensate of N,N'-bis(2,2,6,6-tetramethylpiperidin-4-yl)hexamethylenediamine and 4-tert-octylamino-2,6-dichloro-1,3,5-triazine; 1,2,3,4-butanetetracarboxylic acid, 1,2,2,6,6-pentamethyl-4-piperidinyl tridecyl ester; tetrakis(2,2,6,6-tetramethylpiperidin-4-yl)-1,2,3,4-butanetetracarboxylate; 1,2,3,4-butanetetracarboxylic acid, 2,2,6,6-tetramethyl-4-piperidinyl tridecyl ester; tetrakis(1,2,2,6,6-pentamethylpiperidin-4-yl)-1,2,3,4-butanetetracarboxylate; mixture of 2,2,4,4-tetramethyl-21-oxo-7-oxa-3.20-diazaspiro(5.1.11.2)-heneicosane-20-propanoic acid-dodecylester and 2,2,4,4-tetramethyl-21-oxo-7-oxa-3.20-diazaspiro(5.1.11.2)-heneicosane-20-propanoic acid-tetradecylester; 1H,4H,5H,8H-2,3a,4a,6,7a,8a-hexaazacyclopenta[def]fluorene-4,8-dione, hexahydro-2,6-bis(2,2,6,6-tetramethyl-4-piperidinyl)-; polymethyl[propyl-3-oxy(2',2',6',6'-tetramethyl-4,4'-piperidinyl)]siloxane; polymethyl[propyl-3-oxy(1',2',2',6',6'-pentamethyl-4,4'-piperidinyl)]siloxane; copolymer of methylmethacrylate with ethyl acrylate and 2,2,6,6-tetramethylpiperidin-4-yl acrylate; copolymer of mixed C₂₀ to C₂₄ alpha-olefins and (2,2,6,6-tetramethylpiperidin-4-yl)succinimide; 1,2,3,4-butanetetracarboxylic acid, polymer with β,β,β',β'-tetramethyl-2,4,8,10-tetraoxaspiro[5.5]undecane-3,9-diethanol, 1,2,2,6,6-pentamethyl-4-piperidinyl ester; 1,2,3,4-butanetetracarboxylic acid, polymer with β,β,β',β'-tetramethyl-2,4,8,10-tetraoxaspiro[5.5]undecane-3,9-diethanol, 2,2,6,6-tetramethyl-4-piperidinyl ester copolymer; 1,3-benzenedicarboxamide, N,N'-bis(2,2,6,6-tetramethyl-4-piperidinyl; 1,1'-(1,10-dioxo-1,10-decanediyl)-bis(hexahydro-2,2,4,4,6-pentamethylpyrimidine; ethane diamide, N-(1-acetyl-2,2,6,6-tetramethylpiperidinyl)-N'-dodecyl; formamide, N,N'-1,6-hexanediylbis[N-(2,2,6,6-tetramethyl-4-piperidinyl); D-glucitol, 1,3:2,4-bis-O-(2,2,6,6-tetramethyl-4-piperidinylidene)-; 2,2,4,4-tetramethyl-7-oxa-3,20-diaza-21-oxo-dispiro[5.1.11.2]heneicosane; propanamide, 2-methyl-N-(2,2,6,6-tetramethyl-4-piperidinyl)-2-[(2,2,6,6-tetramethyl-4-piperidinyl)amino]-; 7-oxa-3,20-diazadispiro[5.1.11.2]heneicosane-20-propanoic acid, 2,2,4,4-tetramethyl-21-oxo-, dodecyl ester; N-(2,2,6,6-tetramethylpiperidin-4-yl)-β-aminopropionic acid dodecyl ester; N-(2,2,6,6-tetramethylpiperidin-4-yl)-N'-aminooxalamide; propanamide, N-(2,2,6,6-tetramethyl-4-piperidinyl)-3-[(2,2,6,6-tetramethyl-4-piperidinyl)amino]-; mixture of 4-hexadecyloxy- and 4-stearyloxy-2,2,6,6-tetramethylpiperidine; 3-dodecyl-1-(1,2,2,6,6-pentamethylpiperidin-4-yl)pyrrolidine-2,5-dione; 3-dodecyl-1-(1-ethanoyl-2,2,6,6-pentamethylpiperidin-4-yl)pyrrolidine-2,5-dione; bis(2,2,6,6-tetramethylpiperidin-4-yl)succinate; bis(1,2,2,6,6-pentamethylpiperidin-4-yl) n-butyl 3,5-di-tert-butyl-4-hydroxybenzylmalonate; tris(2,2,6,6-tetramethylpiperidin-4-yl) nitrilotriacetate; 1,1'-(1,2-ethanediyl)bis(3,3,5,5-tetramethylpiperazinone); 4-benzoyl-2,2,6,6-tetramethylpiperidine; 4-stearyloxy-2,2,6,6-tetramethylpiperidine; bis(1,2,2,6,6-pentamethylpiperidyl)-2-n-butyl-2-(2-hydroxy-3,5-di-tert-butylbenzyl)malonate; 3-n-octyl-7,7,9,9-tetramethyl-1,3,8-triazaspiro[4.5]decan-2,4-dione; bis(1-octyloxy-2,2,6,6-tetramethylpiperidyl)sebacate; bis(1-octyloxy-2,2,6,6-tetramethylpiperidyl)succinate; 8-acetyl-3-dodecyl-7,7,9,9-tetramethyl-1,3,8-triazaspiro[4.5]decane-2,4-dione; 3-dodecyl-1-(2,2,6,6-tetramethylpiperidin-4-yl)pyrrolidin-2,5-dione; 3-dodecyl-1-(1-ethanoyl-2,2,6,6-tetramethylpiperidin-4-yl)pyrrolidin-2,5-dione; 3-dodecyl-1-(1,2,2,6,6-pentamethylpiperidin-4-yl)pyrrolidine-2,5-dione; a mixture of 4-hexadecyloxy- and 4-stearyloxy-2,2,6,6-tetramethylpiperidine; 2-undecyl-7,7,9,9-tetramethyl-1-oxa-3,8-diaza-4-oxospiro[4.5]decane; 1,5-dioxaspiro {5,5}undecane-3,3-dicarboxylic acid, bis(2,2,6,6-tetramethyl-4-piperidinyl) and 1,5-dioxaspiro{5,5}undecane-3,3-dicarboxylic acid, bis(1,2,2,6,6-pentamethyl-4-piperidinyl); N¹-(β-hydroxyethyl)3,3-pentamethylene-5,5-dimethylpiperazin-2-one; N¹-tert-octyl-3,3,5,5-tetramethyl-diazepin-2-one; N¹-tert-octyl-3,3-pentamethylene-5,5-hexamethylene-diazepin-2-one; N¹-tert-octyl-3,3-pentamethylene-5,5-dimethylpiperazin-2-one; trans-1,2-cyclohexane-bis-(N¹-5,5-dimethyl-3,3-pentamethylene-2-piperazinone; trans-1,2-cyclohexane-bis-(N¹-3,3,5,5-dispiropentamethylene-2-piperazinone); N¹-isopropyl-1,4-diazadispiro-(3,3,5,5)pentamethylene-2-piperazinone; N¹-isopropyl-1,4-diazadispiro-3,3-pentamethylene-5,5-tetramethylene-2-piperazinone; N¹-isopropyl-5,5-dimethyl-3,3-pentamethylene-2-piperazinone; trans-1,2-cyclohexane-bis-N¹-(dimethyl-3,3-pentamethylene-2-piperazinone); N¹-octyl-5,5-dimethyl-3,3-pentamethylene-1,4-diazepin-2-one; N¹-octyl-1,4-diazadispiro-(3,3,5,5)pentamethylene-1,5-diazepin-2-one; 1,6-hexanediamine, N,N'-bis(2,2,6,6-tetramethyl-4-piperidinyl)-, polymer with 2,4,6-trichloro-1,3,5-triazine, reaction products with 3-bromo-1-propene, n-butyl-1-butanamine and N-butyl-2,2,6,6-tetramethyl-4-piperidinamine, oxidised, hydrogenated; and mixtures thereof.

5. A stabilizer composition according to any one of claims 1 to 4, wherein the co-active agent is an alcohol selected from the group consisting of 1-decanol; 1-undecanol; 1-dodecanol; 1-tridecanol; 1-tetradecanol; 1-pentadecanol; 1-hexadecanol; 1-heptadecanol; 1-octadecanol; 1-nonadecanol; 1-eicosanol; 1-docosanol; 1-tetracosanol; 1-hexacosanol; 1 octacosanol; 1-triacontanol; 2-methyl-1-undecanol; 2-propyl-1-nonanol; 2-butyl-1-octanol; 2-methyl-1-tridecanol; 2-ethyl-1-dodecanol; 2-propyl-1-undecanol; 2-butyl-1-decanol; 2-pentyl-1-nonanol; 2-hexyl-1-octanol; 2-methyl-1-pentadecanol; 2-ethyl-1-tetradecanol; 2-propyl-1-tridecanol; 2-butyl-1-dodecanol; 2-pentyl-1-undecanol; 2-hexyl-1-decanol; 2-heptyl-1-decanol; 2-hexyl-1-nonanol; 2-octyl-1-octanol; 2-methyl-1-heptadecanol; 2-ethyl-1-hexadecanol; 2-propyl-1-pentadecanol; 2-butyl-1-tetradecanol; 1-pentyl-1-tridecanol; 2-hexyl-1-dodecanol; 2-octyl-1-decanol; 2-nonyl-1-nonanol; 2-dodecanol; 3-dodecanol; 4-dodecanol; 5-dodecanol; 6-dodecanol; 2-tetradecanol; 3-tetradecanol; 4-tetradecanol; 5-tetradecanol; 6 -tetradecanol; tetradecanol; 7-tetradecanol; 2-hexadecanol; 3-hexadecanol; 4-hexadecanol; 5-hexadecanol; 6-hexadecanol; 7-hexadecanol; 8-hexadecanol; 2-octadecanol; 3-octadecanol; 4-octadecanol; 5-octadecanol; 6-octadecanol; 7-octadecanol; 8-octadecanol; 9-octadecanol; 9-octadedcanol-1; 2,4,6,8-tetramethyl-1-nonanol; 3,5,5,7,7-pentamethyl-1-octanol; 3-butyl-1-nonanol; 3-butyl-1-undecanol; 3-hexyl-1-undecanol; 3-hexyl-1-tridecanol; 3-octyl-1-tridecanol; 2-methyl-2-undecanol; 3-methyl-3-undecanol; 4-methyl-4-undecanol; 2-methyl-2-tridecanol; 3-methyl-3-tridecanol; 4-methyl-3-tridecanol; 4-methyl-4-tridecanol; 3-ethyl-3-decanol; 3-ethyl-3-dodecanol; 2,4,6,8-tetramethyl-2-nonanol; 2-methyl-3-undecanol; 2-methyl-4-undecanol; 4-methyl-2-undecanol; 5-methyl-2-undecanol; 4-ethyl-2-decanol; 4-ethyl-3-decanol; and mixtures thereof.

6. A stabilizer composition according to any one of claims 1 to 4, wherein the co-active agent is an alkoxylated alcohol according to Formula (III):
R-(OCHR'CH₂)_{y}-OR" (III),
or monoalkyl ether thereof,
wherein R is a hydrocarbyl group having from 12 to 60 carbon atoms; R' is chosen from H or C₁-C₄ alkyl; R" is chosen from H or a hydrocarbyl group having from 1 to 10 carbon atoms; and y is an integer from 1 to 100;
preferably wherein R is a C₁₂ to C₃₀ alkyl; more preferably
wherein the alkyl group contains from 12 to 22 carbons; or
wherein R" is H; or
wherein y is from 1 to 75.

7. A stabilizer composition according to claim 6, wherein the co-active agent comprises an ethoxylated and/or propoxylated alcohol, wherein the alcohol is selected from the group consisting of docosyl alcohol; stearyl alcohol; oleyl alcohol; cetyl alcohol; isotridecyl alcohol; lauryl alcohol; C₁₂-C₁₅ alcohols; C₁₆/C₁₈ alcohols; and C₂₀-C₅₀ alcohols; or
wherein the co-active agent comprises a mixture of ethoxylated alcohol and propoxylated alcohol,
preferably wherein the alcohol comprises C₁₂-C₃₀ alcohols; or
wherein the co-active agent is selected from the group consisting of C₁₂-C₁₅ oxo alcohols having 2 ethylene oxide and 5 propylene oxide groups; and C₁₂-C₁₅ oxo alcohols having 5 ethylene oxide and 2 propylene oxide groups.

8. A stabilizer composition according to claim 6, wherein R" is methyl and the co-active agent comprises a monoalkyl ether of an ethoxylated and/or propoxylated alcohol, wherein the alcohol is selected from the group consisting of docosyl alcohol; stearyl alcohol; oleyl alcohol; cetyl alcohol; isotridecyl alcohol; lauryl alcohol; C₁₂-C₁₅ alcohols; C₁₆/C₁₈ alcohols; and C₂₀-C₅₀ alcohols.

9. A masterbatch concentrate comprising a stabilizer composition as defined in any one of claims 1 to 8; and at least one polymeric organic material identical to or compatible with a polymeric organic material to be stabilized by the masterbatch concentrate, wherein the stabilizer composition is present in an amount from 10 wt. % to 90 wt. %, based on the total weight of the masterbatch concentrate.

10. An article of manufacture comprising a polymeric organic material to be stabilized, preferably selected from the group consisting of polyolefins, poly(ethylene-vinyl acetate) (EVA), polyesters, polyethers, polyketones, polyamides, natural and synthetic rubbers, polyurethanes, polystyrenes, high-impact polystyrenes, polyacrylates, polymethacrylates, polybutyl acrylates, polyacetals, polyacrylonitriles, polybutadienes, polystyrenes, acrylonitrile-butadiene-styrene, styrene acrylonitrile, acrylate styrene acrylonitrile, cellulosic acetate butyrate, cellulosic polymers, polyimides, polyamideimides, polyetherimides, polyphenylsulfides, polyphenyloxidepolysulfones, polyethersulfones, polyvinylchlorides, polycarbonates, polyketones, aliphatic polyketones, thermoplastic olefins (TPO), aminoresin cross-linked polyacrylates and polyesters, polyisocyanate cross-linked polyesters and polyacrylates, phenol/formaldehyde, urea/formaldehyde and melamine/formaldehyde resins, drying and non-drying alkyd resins, alkyd resins, polyester resins, acrylate resins cross-linked with melamine resins, urea resins, isocyanates, isocyanurates, carbamates, epoxy resins, cross-linked epoxy resins derived from aliphatic, cycloaliphatic, heterocyclic and aromatic glycidyl compounds, which are cross-linked with anhydrides or amines, polysiloxanes, Michael addition polymers, amines, blocked amines with activated unsaturated and methylene compounds, ketimines with activated unsaturated and methylene compounds, polyketimines in combination with unsaturated acrylic polyacetoacetate resins, polyketimines in combination with unsaturated acrylic resins, coating compositions, radiation curable compositions, epoxymelamine resins, and fibers;
more preferably a polyolefin polymer selected from the group consisting of i) polymers of monoolefins chosen from polyethylene, polypropylene, polyisobutylene, polybut-1-ene, or poly-4-methylpent-1-ene; ii) polymers of diolefins chosen from polyisoprene or polybutadiene; iii) polymers of cycloolefins chosen from cyclopentene or norbornene; iv) polyethylene chosen from optionally crosslinked polyethylene, high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), very low density polyethylene (VLDPE), or ultralow density polyethylene (ULDPE); v) thermoplastic olefins (TPO); vi) copolymers thereof; and vii) mixtures thereof; and
a) from 0.01 wt. % to 15 wt. %, based on the total weight of the article of manufacture, of a stabilizer composition comprising
i) a stabilizing amount of an ultraviolet light absorber (UVA) selected from the group consisting of: orthohydroxybenzophenone compounds; orthohydroxyphenyl benzotriazole compounds; and mixtures thereof;
ii) from 1 wt.% to 99 wt. % based on the total weight of the stabilizer composition of a co-active agent selected from the group consisting of C₁₂-C₆₀ monohydric alcohols; alkoxylated alcohols or monoalkyl ethers thereof; and mixtures thereof; and
iii) a stabilizing amount of a hindered amine light stabilizer compound (HALS) comprising a functional group according to Formula (II): 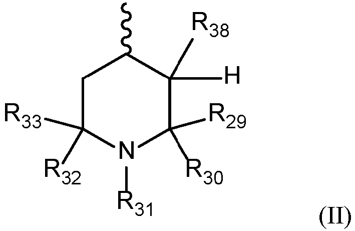
wherein R₃₁ is chosen from: hydrogen; OH; C₁-C₂₀ hydrocarbyl; -CH₂CN; C₁-C₁₂ acyl; or C₁-C₁₈ alkoxy; R₃₈ is chosen from: hydrogen; or C₁-C₈ hydrocarbyl; and each of R₂₉, R₃₀, R₃₂, and R₃₃ is independently chosen from C₁-C₂₀ hydrocarbyl, or R₂₉ and R₃₀ and/or R₃₂ and R₃₃ taken together with the carbon to which they are attached form a C₅-C₁₀ cycloalkyl; or
a functional group according to Formula (IIa): 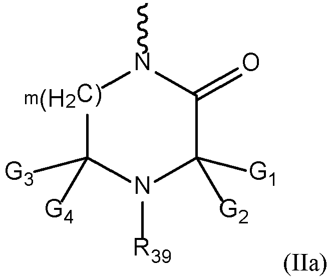
wherein
m is an integer from 1 to 2;
R₃₉ is chosen from: hydrogen; OH; C₁-C₂₀ hydrocarbyl; -CH₂CN; C₁-C₁₂ acyl; or C₁-C₁₈ alkoxy; and
each of G₁-G₄ is independently chosen from C₁-C₂₀ hydrocarbyl; or
mixtures of HALS compounds having functional groups according to Formula (II) and Formula (IIa); or
b) a masterbatch concentrate as defined in claim 9,
such that the final concentration of the co-active agent in the article of manufacture is from 0.01 wt. % to 1 wt. %, based on the weight of the article of manufacture;
preferably, wherein the final concentration of co-active agent in the article of manufacture is from 0.05 wt. % to 0.5 wt. %, based on the weight of the article of manufacture.

11. An article of manufacture according to claim 11, wherein the stabilizer composition is as defined in any one of claims 1 to 8.

12. An article of manufacture according to any one of claims 10 to 11, wherein the ratio of co-active agent to UVA in the article of manufacture is from 200:1 to 1:50; and more preferably wherein the ratio of co-active agent to UVA in the article of manufacture is from 50:1 to 1:30.

13. An article of manufacture according to any one of claims 10 to 12 further **characterized by** having a contact angle with water at a surface of the article of greater than 20 °; and more preferably
wherein the contact angle with water at a surface of the article is greater than 50 °.

14. An article of manufacture according to any one of claims 10 to 13, wherein the polymeric organic material is polyethylene or polypropylene and is blended with a stabilizing amount of a stabilizer composition comprising
i) from 0.01 wt. % to 5 wt. % of a hindered amine light stabilizer compound selected from the group consisting of bis(2,2,6,6-tetramethylpiperidin-4-yl) sebacate; bis(1,2,2,6,6-pentamethylpiperidin-4-yl)sebacate; bis(1-octyloxy-2,2,6,6-tetramethylpiperidin-4-yl)sebacate; a condensate of 1-(2-hydroxyethyl)-2,2,6,6-tetramethyl-4-hydroxypiperidine and succinic acid; a condensate of N,N'-bis(2,2,6,6-tetramethylpiperidin-4-yl)hexamethylenediamine and 4-tert-octylamino-2,6-dichloro-1,3,5-triazine; a condensate of N,N'-bis(2,2,6,6-tetramethylpiperidin-4-yl)hexamethylenediamine and 4-morpholino-2,6-dichloro-1,3,5-triazine; a condensate of N,N'-bis(2,2,6,6-tetramethylpiperidin-4-yl)hexamethylenediamine and 4-morpholino-2,6-dichloro-1,3,5-triazine, methylated; 2,2,6,6-tetramethylpiperidin-4-yl stearate; the condensate of 2-chloro-4,6-bis(4-n-butylamino-1,2,2,6,6-pentamethylpiperidyl)-1,3,5-triazine and 1,2-bis-(3-aminopropylamino)ethane; 1,6-hexanediamine, N,N'-bis(2,2,6,6-tetramethyl-4-piperidinyl)-, polymer with 2,4,6-trichloro-1,3,5-triazine, reaction products with 3-bromo-1-propene, n-butyl-1-butanamine and N-butyl-2,2,6,6-tetramethyl-4-piperidinamine, oxidised, hydrogenated; and mixtures thereof;
ii) from 0.001 wt. % to 5 wt. % of a benzotriazole compound selected from the group consisting of 2-(2'-hydroxy-5'-methylphenyl)-benzotriazole; 2-(2'-hydroxy-3',5'-dimethylphenyl)-benzotriazole; 2-(2'-hydroxy-5-tert-octylphenyl)-2H-benzotriazole; 2-(3',5'-di-tert-butyl-2'-hydroxyphenyl)-5-chlorobenzotriazole; 2-(3'-tert-butyl-5'-methyl-2'-hydroxyphenyl)-5-chloro-benzotriazole; and mixtures thereof; and
iii) from .0.05 wt. % to 0.5 wt. % of a co-active agent in the form of an alkoxylated alcohol according to Formula (III):
R-(OCHR'CH₂)_{y}-OR" (III),
wherein R is a C₁₂ to C₁₈ alkyl; each of R' and R" is H; and y is chosen from 1 to 75.

15. An article of manufacture according to any one of claims 10 to 13, wherein the polymeric organic material is polyethylene or polypropylene and is blended with a stabilizing amount of a stabilizer composition comprising
i) from 0.001 wt. % to 5 wt. % of a benzophenone compound selected from the group consisting of 2-hydroxy-4-methoxybenzophenone; 2,2'-dihydroxy-4-methoxybenzophenone; 2-hydroxy-4-octyloxybenzophenone; and mixtures thereof;
ii) from 0.01 wt. % to 0.5 wt. % of a co-active agent in the form of an alkoxylated alcohol according to Formula (III):
R-(OCHR'CH₂)_{y}-OR" (III),
wherein R is a C₁₂ to C₁₈ alkyl; each of R' and R" is H; and y is chosen from 1 to 75; and
iii) from 0.01 wt. % to 5 wt. % of a hindered amine light stabilizer compound selected from the group consisting of bis(2,2,6,6-tetramethylpiperidin-4-yl) sebacate; bis(1,2,2,6,6-pentamethylpiperidin-4-yl)sebacate; bis(1-octyloxy-2,2,6,6-tetramethylpiperidin-4-yl)sebacate; a condensate of 1-(2-hydroxyethyl)-2,2,6,6-tetramethyl-4-hydroxypiperidine and succinic acid; a condensate of N,N'-bis(2,2,6,6-tetramethylpiperidin-4-yl)hexamethylenediamine and 4-tert-octylamino-2,6-dichloro-1,3,5-triazine; a condensate of N,N'-bis(2,2,6,6-tetramethylpiperidin-4-yl)hexamethylenediamine and 4-morpholino-2,6-dichloro-1,3,5-triazine; a condensate of N,N'-bis(2,2,6,6-tetramethylpiperidin-4-yl)hexamethylenediamine and 4-morpholino-2,6-dichloro-1,3,5-triazine, methylated; 2,2,6,6-tetramethylpiperidin-4-yl stearate; the condensate of 2-chloro-4,6-bis(4-n-butylamino-1,2,2,6,6-pentamethylpiperidyl)-1,3,5-triazine and 1,2-bis-(3-aminopropylamino)ethane; 1,6-hexanediamine, N,N'-bis(2,2,6,6-tetramethyl-4-piperidinyl)-, polymer with 2,4,6-trichloro-1,3,5-triazine, reaction products with 3-bromo-1-propene, n-butyl-1-butanamine and N-butyl-2,2,6,6-tetramethyl-4-piperidinamine, oxidised, hydrogenated; and mixtures thereof.

## Patentansprüche

1. Stabilisatorzusammensetzung für polymere organische Materialien, wobei die Stabilisatorzusammensetzung im Wesentlichen aus Folgendem besteht:
i) einer stabilisierenden Menge eines Ultraviolettlichtabsorbers (UVA), ausgewählt aus der Gruppe, bestehend aus: Orthohydroxybenzophenon-Verbindungen; Orthohydroxyphenylbenzotriazol-Verbindungen; und Mischungen davon;
ii) einer stabilisierenden Menge eines coaktiven Mittels, ausgewählt aus der Gruppe, bestehend aus einwertigen C₁₂- bis C₆₀-Alkoholen; alkoxylierten Alkoholen oder Monoalkylethern davon; und Mischungen davon, wobei das coaktive Mittel in einer Menge von 1 Gew.-% bis 99 Gew.-%, bezogen auf das Gesamtgewicht der Stabilisatorzusammensetzung, vorliegt; und
iii) einer stabilisierenden Menge einer gehinderten Amin-Lichtstabilisatorverbindung (HALS), umfassend eine funktionelle Gruppe gemäß Formel (II): 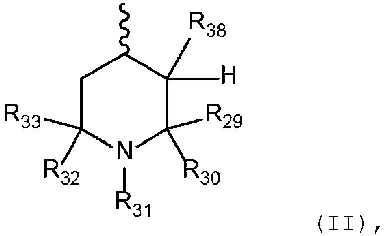
wobei R₃₁ ausgewählt ist aus: Wasserstoff; OH; C₁- bis C₂₀-Hydrocarbyl; -CH₂CN; C₁- bis C₁₂-Acyl; oder C₁- bis C₁₈-Alkoxy; R₃₈ ausgewählt ist aus: Wasserstoff; oder C₁- bis C₈-Hydrocarbyl; und R₂₉, R₃₀, R₃₂ und R₃₃ jeweils unabhängig aus C₁- bis C₂₀-Hydrocarbyl ausgewählt sind oder R₂₉ und R₃₀ und/oder R₃₂ und R₃₃ zusammen mit dem Kohlenstoff, an den sie gebunden sind, ein C₅- bis C₁₀-Cycloalkyl bilden; oder
eine funktionelle Gruppe gemäß Formel (IIa): 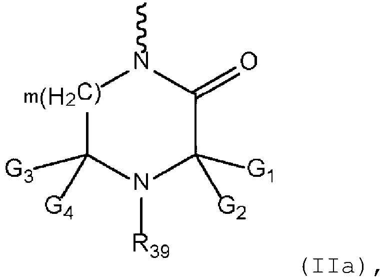
wobei
m eine ganze Zahl von 1 bis 2 ist;
R₃₉ ausgewählt ist aus: Wasserstoff; OH; C₁- bis C₂₀-Hydrocarbyl; -CH₂CN; C₁- bis C₁₂-Acyl; oder C₁- bis C₁₂-Alkoxy;
jedes von G₁ bis G₄ unabhängig ausgewählt ist aus C₁- bis C₂₀-Hydrocarbyl; oder
Mischungen von HALS-Verbindungen mit funktionellen Gruppen gemäß Formel (II) und Formel (IIa).

2. Stabilisatorzusammensetzung nach Anspruch 1, wobei das coaktive Mittel und der UV-Absorber in Kombination mit HALS (coaktives Mittel: (UVA + HALS)) in einem Gewichtsverhältnis von 1:20 bis 50:1 vorliegen.

3. Stabilisatorzusammensetzung nach Anspruch 1 oder 2, wobei die Orthohydroxybenzophenon-Verbindung ausgewählt ist aus der Gruppe, bestehend aus 2-Hydroxy-4-methoxybenzophenon; 2,2'-Dihydroxy-4-methoxybenzophenon; 2-Hydroxy-4-octyloxybenzophenon; 2,2'-Dihydroxy-4,4'-di-methoxybenzophenon; 2,2'-Dihydroxybenzophenon; 2,2',4,4'-Tetrahydroxybenzophenon; 2,2'-Dihydroxy-4,4'-dimethoxybenzophenon; 2,2'-Dihydroxy-4,4'-diethoxybenzophenon; 2,2'-Dihydroxy-4,4'-dipropoxybenzophenon; 2,2'-Dihydroxy-4,4'-dibutoxybenzophenon; 2,2'-Dihydroxy-4-methoxy-4'-ethoxybenzophenon; 2,2'-Dihydroxy-4-methoxy-4'-propoxybenzophenon; 2,2'-Dihydroxy-4-methoxy-4'-butoxybenzophenon; 2,2'-Dihydroxy-4-ethoxy-4'-propoxybenzophenon; 2,2'-Dihydroxy-4-ethoxy-4'-butoxybenzophenon; 2,3'-Dihydroxy-4,4'-dimethoxybenzophenon; 2,3'-Dihydroxy-4-methoxy-4'-butoxybenzophenon; 2-Hydroxy-4,4',5'-trimethoxybenzophenon; 2-Hydroxy-4,4',6'-tributoxybenzophenon; 2-Hydroxy-4-butoxy-4',5'-dimethoxybenzophenon; 2-Hydroxy-4-ethoxy-2',4'-dibutylbenzophenon; 2-Hydroxy-4-propoxy-4',6'-dichlorbenzophenon; 2-Hydroxy-4-propoxy-4',6'-dibrombenzophenon; 2,4-Dihydroxybenzophenon; 2-Hydroxy-4-ethoxybenzophenon; 2-Hydroxy-4-propoxybenzophenon; 2-Hydroxy-4-butoxybenzophenon; 2-Hydroxy-4-methoxy-4'-methylbenzophenon; 2-Hydroxy-4-methoxy-4'-ethylbenzophenon; 2-Hydroxy-4-methoxy-4'-propylbenzophenon; 2-Hydroxy-4-methoxy-4'-butylbenzophenon; 2-Hydroxy-4-methoxy-4'-tertiär-butylbenzophenon; 2-Hydroxy-4-methoxy-4'-chlorbenzophenon; 2-Hydroxy-4-methoxy-2'-chlorbenzophenon; 2-Hydroxy-4-methoxy-4'-brombenzophenon; 2-Hydroxy-4,4'-dimethoxybenzophenon; 2-Hydroxy-4,4'-dimethoxy-3-methylbenzophenon; 2-Hydroxy-4,4'-dimethoxy-2'-ethylbenzophenon; 2-Hydroxy-4,4',5'-trimethoxybenzophenon; 2-Hydroxy-4-ethoxy-4'-methylbenzophenon; 2-Hydroxy-4-ethoxy-4'-ethylbenzophenon; 2-Hydroxy-4-ethoxy-4'-propylbenzophenon; 2-Hydroxy-4-ethoxy-4'-butylbenzophenon; 2-Hydroxy-4-ethoxy-4'-methoxybenzophenon; 2-Hydroxy-4,4'-diethoxybenzophenon; 2-Hydroxy-4-ethoxy-4'-propoxybenzophenon; 2-Hydroxy-4-ethoxy-4'-butoxybenzophenon; 2-Hydroxy-4-ethoxy-4'-chlorbenzophenon; 2-Hydroxy-4-ethoxy-4'-brombenzophenon; und Mischungen davon; und wobei die Orthohydroxyphenylbenzotriazol-Verbindung ausgewählt ist aus der Gruppe, bestehend aus 2-(2'-Hydroxy-5'-methylphenyl)benzotriazol; 2-(2'-Hydroxy-5'-tert-butylphenyl)benzotriazol; 2-(2'-Hydroxy-3'-methyl-5'-tert-butylphenyl)benzotriazol; 2-(2'-Hydroxy-5'-cyclohexylphenyl)benzotriazol; 2-(2'-Hydroxy-3',5'-dimethylphenyl)benzotriazol; 2-(2'-Hydroxy-5'-tert-butylphenyl)-5-chlorbenzotriazol; 2-(2'-Hydroxy-5-tert-octylphenyl)-2H-benzotriazol; 2-(2'-Hydroxy-5-octylphenyl)-2H-benzotriazol; 2-(3',5'-Di-tert-butyl-2'-hydroxyphenyl)-5-chlorbenzotriazol; 2-(3'-tert-butyl-5'-methylbutyl-2'-hydroxyphenyl)-5-chlorbenzotriazol; 2-(3',5'-Di-tert-amyl-2'-hydroxyphenyl)benzotriazol; 2-(3',5'-Bis(α,α-dimethylbenzyl)-2'-hydroxyphenyl)benzotriazol; 2-(3'-tert-Butyl-2'-hydroxy-5'-(2-octyloxycarbonylethyl)phenyl)benzotriazol; 2,2'-Methylen-bis[4-(1,1,3,3-tetramethylbutyl)-6-benzotriazol-2-ylphenol]; dem Umesterungsprodukt von 2-[3'-tert-Butyl-5'-(2-methoxycarbonylethyl)-2'-hydroxyphenyl]-2H-benzotriazol mit Polyethylenglycol 300; 2-[2'-Hydroxy-3'-(α,α-dimethylbenzyl)-5'-(1,1,3,3-tetramethylbutyl)phenyl]benzotriazol; 5-Trifluormethyl-2-(2-hydroxy-3-α-cumyl-5-tert-octylphenyl)-2H-benzotriazol; 2-(2'-Hydroxy-5'-(2-hydroxyethyl)phenyl)benzotriazol; 2-(2'-Hydroxy-5'-(2-methacryloyloxyethyl)phenyl)benzotriazol; 2-(3'-tert-Butyl-5'-methyl-2'-hydroxyphenyl)-5-chlorbenzotriazol; 2-(3'-sek-Butyl-5'-tert-butyl-2'-hydroxyphenyl)benzotriazol; 2-(3',5'-Di-tert-butyl-2'-hydroxyphenyl)benzotriazol; 2-(5'-tert-Octyl-2'-hydroxyphenyl)benzotriazol; 2-(3'-Dodecyl-5'-methyl-2'-hydroxyphenyl)benzotriazol; 2-(3'-tert-Butyl-5'-(2-octyloxycarbonylethyl)-2'-hydroxyphenyl)-5-chlorbenzotriazol; 2-(5'-Methyl-2'-hydroxyphenyl)benzotriazol; 2-(5'-tert-Butyl-2'-hydroxyphenyl)benzotriazol; 2-(2'-Hydroxy-3'-di-tert-butylphenyl)benzotriazol; und Mischungen davon.

4. Stabilisatorzusammensetzung nach einem der Ansprüche 1 bis 3, wobei der gehinderte Amin-Lichtstabilisator ausgewählt ist aus der Gruppe, bestehend aus Bis(2,2,6,6-tetramethylpiperidin-4-yl)sebacat; Bis(2,2,6,6-tetramethylpiperidin-4-yl)succinat; Bis(1,2,2,6,6-pentamethylpiperidin-4-yl)sebacat; Bis(1-octyloxy-2,2,6,6-tetramethylpiperidin-4-yl)sebacat; Bis(1,2,2,6,6-pentamethylpiperidin-4-yl)-n-butyl-3,5-di-tert-butyl-4-hydroxybenzylmalonat; einem Kondensat von 1-(2-Hydroxyethyl)-2,2,6,6-tetramethyl-4-hydroxypiperidin und Bernsteinsäure; 2,2,6,6-Tetramethylpiperidin-4-ylstearat; 2,2,6,6-Tetramethylpiperidin-4-yldodecanat; 1,2,2,6,6-Pentamethylpiperidin-4-ylstearat; 1,2,2,6,6-Pentamethylpiperidin-4-yldodecanat; einem Kondensat von N,N'-Bis(2,2,6,6-tetramethylpiperidin-4-yl)hexamethylendiamin und 4-tert-Octylamino-2,6-dichlor-1,3,5-triazin; Tris(2,2,6,6-tetramethylpiperidin-4-yl)nitriltriacetat; Tetrakis(2,2,6,6-tetramethylpiperidin-4-yl)-1,2,3,4-butantetracarboxylat; 4-Benzoyl-2,2,6,6-tetramethylpiperidin; 4-Stearyloxy-2,2,6,6-tetramethylpiperidin; Bis(1,2,2,6,6-pentamethylpiperidyl)-2-n-butyl-2-(2-hydroxy-3,5-di-tert-butylbenzyl)malonat; 3-n-Octyl-7,7,9,9-tetramethyl-1,3,8-triazaspiro[4.5]decan-2,4-dion; Bis(1-octyloxy-2,2,6,6-tetramethylpiperidyl)sebacat; Bis(1-octyloxy-2,2,6,6-tetramethylpiperidyl)succinat; einem Kondensat von N,N'-Bis(2,2,6,6-tetramethylpiperidin-4-yl)hexamethylendiamin und 4-Morpholin-2,6-dichlor-1,3,5-triazin; einem Kondensat von N,N'-Bis(2,2,6,6-tetramethylpiperidin-4-yl)hexamethylendiamin und 4-Morpholin-2,6-dichlor-1,3,5-triazin, methyliert; einem Kondensat von 2-Chlor-4,6-bis(4-n-butylamino-2,2,6,6-tetramethylpiperidyl)-1,3,5-triazin und 1,2-Bis(3-aminopropylamino)ethan; einem Kondensat von 2-Chlor-4,6-bis(4-n-butylamino-1,2,2,6,6-pentamethylpiperidyl)-1,3,5-triazin und 1,2-Bis(3-aminopropylamino)ethan; 8-Acetyl-3-dodecyl-7,7,9,9-tetramethyl-1,3,8-triazaspiro[4.5]decan-2,4-dion; 3-Dodecyl-1-(2,2,6,6-tetramethylpiperidin-4-yl)pyrrolidin-2,5-dion; 3-Dodecyl-1-(1-ethanoyl-2,2,6,6-tetramethylpiperidin-4-yl)pyrrolidin-2,5-dion; 3-Dodecyl-1-(1,2,2,6,6-pentamethylpiperidin-4-yl)pyrrolidin-2,5-dion; einer Mischung von 4-Hexadecyloxy- und 4-Stearyloxy-2,2,6,6-tetramethylpiperidin; einer Mischung von 4-Hexadecyloxy- und 4-Stearyloxy-1,2,2,6,6-pentamethylpiperidin; einem Kondensat von N,N'-Bis(2,2,6,6-tetramethylpiperidin-4-yl)hexamethylendiamin und 4-Cyclohexylamino-2,6-dichlor-1,3,5-triazin; einem Kondensat von 1,2-Bis(3-aminopropylamino)ethan, 2,4,6-Trichlor-1,3,5-triazin und 4-Butylamino-2,2,6,6-tetramethylpiperidin; 2-Undecyl-7,7,9,9-tetramethyl-1-oxa-3,8-diaza-4-oxospiro[4.5]decan; Oxopiperanzinyltriazinen; einem Reaktionsprodukt von 7,7,9,9-Tetramethyl-2-cycloundecyl-1-oxa-3,8-diaza-4-oxospiro[4.5]decan und Epichlorhydrin; Tetrakis(2,2,6,6-tetramethyl-4-piperidyl)butan-1,2,3,4-tetracarboxylat; 1,2,3,4-Butantetracarbonsäure, Tetrakis(1,2,2,6,6-pentamethyl-4-piperidinyl)ester; 1,2,3,4-Butantetracarbonsäure, 1,2,2,6,6-Pentamethyl-4-piperdinyltridecylester; 1,2,3,4-Butantetracarbonsäure, 2,2,6,6-Tetramethyl-4-piperidinyltridecylester; 1,2,3,4-Butanetetracarbonsäure, Polymer mit 2,2,6,6-Tetramethyl-2,4,8,10-tetraoxaspiro[5.5]-undecan-3,9-diethanol-1,2,2,6,6-Pentamethyl-4-piperdinylester; 1,2,3,4-Butantetracarbonsäure, Polymer mit 2,2,6,6-Tetramethyl-2,4,8,10-tetraoxaspiro[5.5]-undecan-3,9-diethanol-2,2,6,6-tetramethyl-4-piperdinylester; Bis(1-undecanoxy-2,2,6,6-tetramethylpiperidin-4-yl)carbonat; 1-(2-Hydroxy-2-methylpropoxy)-2,2,6,6-tetramethyl-4-piperdinol; 1-(2-Hydroxy-2-methylpropoxy)-4-octadecanoyloxy-2,2,6,6-tetramethylpiperidin; 1-(4-Octadecanoyloxy-2,2,6,6-tetramethylpiperidin-1-yloxy)-2-octadecanoyloxy-2-methylpropan; 1-(2-Hydroxyethyl)-2,2,6,6-tetramethyl-4-piperdinol; einem Reaktionsprodukt von 1-(2-Hydroxyethyl)-2,2,6,6-tetramethyl-4-piperdinol und Dimethylsuccinat; 2,2,4,4-Tetramethyl-7-oxa-3,20-diazadispiro[5.1.11.2]heneicosan-21-on; dem Ester von 2,2,6,6-Tetramethyl-4-piperidinol mit höheren Fettsäuren; 3-Dodecyl-1-(2,2,6,6-Tetramethyl-4-piperidyl)pyrrolidin-2,5-dion; 1H-Pyrrol-2,5-dion, 1-octadecyl-, Polymer mit (1-Methylethenyl)benzol und 1-(2,2,6,6-Tetramethyl-4-piperidinyl)-1H-pyrrol-2,5-dion; Piperazinon, 1,1',1"-[1,3,5-Triazin-2,4,6-triyltris[(cyclohexylimino)-2,1-ethandiyl]]tris[3,3,5,5-tetramethyl-; Piperazinon, 1,1',1"-[1,3,5-Triazin-2,4,6-triyltris[(cyclohexylimino)-2,1-ethandiyl]]tris[3,3,4,5,5-pentamethyl-; dem Reaktionsprodukt von 7,7,9,9-Tetramethyl-2-cycloundecyl-1-oxa-3,8-diaza-4-oxospiro[4.5]decan und Epichlorhydrin; dem Kondensat von N,N'-Bis(2,2,6,6-tetramethylpiperidin-4-yl)hexamethylendiamin und 4-Cyclohexylamino-2,6-dichlor-1,3,5-triazin; dem Kondensat von 1,2-Bis(3-aminopropylamino)ethan, 2,4,6-Trichlor-1,3,5-triazin und 4-Butylamino-2,2,6,6-tetramethylpiperidin; dem Kondensat von N,N'-Bis(2,2,6,6-tetramethylpiperidin-4-yl)hexamethylendiamin und 4-Morpholin-2,6-dichlor-1,3,5-triazin; dem Kondensat von 2-Chlor-4,6-bis(4-n-butylamino-2,2,6,6-tetramethylpiperidyl)-1,3,5-triazin und 1,2-Bis(3-aminopropylamino)ethan; dem Kondensat von 2-Chlor-4,6-bis(4-n-butylamino-1,2,2,6,6-pentamethylpiperidyl)-1,3,5-triazin und 1,2-Bis(3-aminopropylamino)ethan; 2-[(2-Hydroxyethyl)amino]-4,6-bis[N-(1-cyclohexyloxy-2,2,6,6-tetramethylpiperidin-4-yl)butylamino-1,3,5-triazin; Malonsäure, [(4-Methoxyphenyl)methylen]-bis(1,2,2,6,6-pentamethyl-4-piperidinyl)ester; Tetrakis(2,2,6,6-tetramethylpiperidin-4-yl)-1,2,3,4-butantetracarboxylat; Hydrozimtsäure, 3,5-Bis(1,1-dimethylethyl)-4-hydroxy-, 1-[2-[3-[3,5-Bis(1,1-dimethylethyl)-4-hydroxyphenyl]-1-oxopropoxy]ethyl]-2,2,6,6-tetramethyl-4-piperidinylester; N-(1-Octyloxy-2,2,6,6-tetramethylpiperidin-4-yl)-N'-dodecyloxalamid; Tris(2,2,6,6-tetramethylpiperidin-4-yl)nitriltriacetat; 1,5-Dioxaspiro{5,5}undecan-3,3-dicarbonsäure, Bis(1,2,2,6,6-pentamethyl-4-piperidinyl): 1,5-Dioxaspiro{5,5}undecan-3,3-dicarbonsäure, Bis(2,2,6,6-tetramethyl-4-piperidinyl); dem Kondensat von 1-(2-Hydroxyethyl)-2,2,6,6-tetramethyl-4-hydroxypiperidin und Bernsteinsäure; dem Kondensat von N,N'-Bis(2,2,6,6-tetramethylpiperidin-4-yl)hexamethylendiamin und 4-tert-Octylamino-2,6-dichlor-1,3,5-triazin; 1,2,3,4-Butantetracarbonsäure, 1,2,2,6,6-Pentamethyl-4-piperidinyltridecylester; Tetrakis(2,2,6,6-tetramethylpiperidin-4-yl)-1,2,3,4-butantetracarboxylat; 1,2,3,4-butantetracarbonsäure, 2,2,6,6-Tetramethyl-4-piperidinyltridecylester; Tetrakis(1,2,2,6,6-pentamethylpiperidin-4-yl)-1,2,3,4-butantetracarboxylat; einer Mischung von 2,2,4,4-Tetramethyl-21-oxo-7-oxa-3.20-diazaspiro(5.1.11.2)-heneicosan-20-propionsäuredodecylester und 2,2,4,4-Tetramethyl-21-oxo-7-oxa-3.20-diazaspiro(5.1.11.2)-heneicosan-20-Propionsäuretetradecylester; 1H,4H,5H,8H-2,3a,4a,6,7a,8a-Hexaazacyclopenta[def]fluoren-4,8-dion, Hexahydro-2,6-bis(2,2,6,6-tetramethyl-4-piperidinyl)-; Polymethyl[propyl-3-oxy(2',2',6',6'-tetramethyl-4,4'-piperidinyl)]siloxan; Polymethyl[propyl-3-oxy(1',2',2',6',6'-pentamethyl-4,4'-piperidinyl)]siloxan; einem Copolymer von Methylmethacrylat mit Ethylacrylat und 2,2,6,6-Tetramethylpiperidin-4-ylacrylat; einem Copolymer von gemischten C₂₀- bis C₂₄-alpha-Olefinen und (2,2,6,6-Tetramethylpiperidin-4-yl)succinimid; 1,2,3,4-Butantetracarbonsäure, Polymer mit β,β,β',β'-Tetramethyl-2,4,8,10-tetraoxaspiro[5.5]undecan-3,9-diethanol, 1,2,2,6,6-pentamethyl-4-piperidinylester; 1,2,3,4-Butantetracarbonsäure, Polymer mit β,β,β',β'-Tetramethyl-2,4,8,10-tetraoxaspiro[5.5]undecan-3,9-diethanol, 2,2,6,6-Tetramethyl-4-piperidinylester-Copolymer; 1,3-Benzendicarboxamid, N,N'-Bis(2,2,6,6-tetramethyl-4-piperidinyl; 1,1'-(1,10-Dioxo-1,10-decandiyl)-bis(hexahydro-2,2,4,4,6-pentamethylpyrimidin; Ethandiamid, N-(1-Acetyl-2,2,6,6-tetramethylpiperidinyl)-N'-dodecyl; Formamid, N,N'-1,6-Hexandiylbis[N-(2,2,6,6-tetramethyl-4-piperidinyl); D-Glucitol, 1,3:2,4-bis-O-(2,2,6,6-tetramethyl-4-piperidinyliden)-; 2,2,4,4-Tetramethyl-7-oxa-3,20-diaza-21-oxo-dispiro[5.1.11.2]heneicosan; Propanamid, 2-Methyl-N-(2,2,6,6-tetramethyl-4-piperidinyl)-2-[(2,2,6,6-tetramethyl-4-piperidinyl)amino]-; 7-Oxa-3,20-diazadispiro[5.1.11.2]heneicosan-20-propionsäure, 2,2,4,4-Tetramethyl-21-oxo-, Dodecylester; N-(2,2,6,6-Tetramethylpiperidin-4-yl)-β-aminopropionsäuredodecylester; N-(2,2,6,6-Tetramethylpiperidin-4-yl)-N'-aminooxalamid; Propanamid, N-(2,2,6,6-Tetramethyl-4-piperidinyl)-3-[(2,2,6,6-tetramethyl-4-piperidinyl)amino]-; einer Mischung von 4-Hexadecyloxy- und 4-Stearyloxy-2,2,6,6-tetramethylpiperidin; 3-Dodecyl-1-(1,2,2,6,6-pentamethylpiperidin-4-yl)pyrrolidin-2,5-dion; 3-Dodecyl-1-(1-ethanoyl-2,2,6,6-pentamethylpiperidin-4-yl)pyrrolidin-2,5-dion; Bis(2,2,6,6-tetramethylpiperidin-4-yl)succinat; Bis(1,2,2,6,6-pentamethylpiperidin-4-yl)-n-butyl-3,5-di-tert-butyl-4-hydroxybenzylmalonat; Tris(2,2,6,6-tetramethylpiperidin-4-yl)nitriltriacetat; 1,1'-(1,2-Ethandiyl)bis(3,3,5,5-tetramethylpiperazinon); 4-Benzoyl-2,2,6,6-tetramethylpiperidin; 4-Stearyloxy-2,2,6,6-tetramethylpiperidin; Bis(1,2,2,6,6-pentamethylpiperidyl)-2-n-butyl-2-(2-hydroxy-3,5-di-tert-butylbenzyl)malonat; 3-n-Octyl-7,7,9,9-tetramethyl-1,3,8-triazaspiro[4.5]decan-2,4-dion; Bis(1-octyloxy-2,2,6,6-tetramethylpiperidyl)sebacat; Bis(1-octyloxy-2,2,6,6-tetramethylpiperidyl)succinat; 8-Acetyl-3-dodecyl-7,7,9,9-tetramethyl-1,3,8-triazaspiro[4.5]decan-2,4-dion; 3-Dodecyl-1-(2,2,6,6-tetramethylpiperidin-4-yl)pyrrolidin-2,5-dion; 3-Dodecyl-1-(1-ethanoyl-2,2,6,6-tetramethylpiperidin-4-yl)pyrrolidin-2,5-dion; 3-Dodecyl-1-(1,2,2,6,6-pentamethylpiperidin-4-yl)pyrrolidin-2,5-dion; einer Mischung von 4-Hexadecyloxy- und 4-Stearyloxy-2,2,6,6-tetramethylpiperidin; 2-Undecyl-7,7,9,9-tetramethyl-1-oxa-3,8-diaza-4-oxospiro[4.5]decan; 1,5-Dioxaspiro{5,5}undecan-3,3-dicarbonsäure, Bis(2,2,6,6-tetramethyl-4-piperidinyl) und 1,5-Dioxaspiro{5,5}undecan-3,3-dicarbonsäure, Bis(1,2,2,6,6-pentamethyl-4-piperidinyl); N¹-(β-Hydroxyethyl)-3,3-pentamethylen-5,5-dimethylpiperazin-2-on; N¹-tert-Octyl-3,3,5,5-tetramethyldiazepin-2-on; N¹-tert-Octyl-3,3-pentamethylen-5,5-hexamethylen-diazepin-2-on; N¹-tert-Octyl-3,3-pentamethylen-5,5-dimethylpiperazin-2-on; trans-1,2-Cyclohexanbis(N¹-5,5-dimethyl-3,3-pentamethylen-2-piperazinon; trans-1,2-Cyclohexanbis(N¹-3,3,5,5-dispiropentamethylen-2-piperazinon); N¹-Isopropyl-1,4-diazadispiro-(3,3,5,5)pentamethylen-2-piperazinon; N¹-Isopropyl-1,4-diazadispiro-3,3-pentamethylen-5,5-tetramethylen-2-piperazinon; N¹-Isopropyl-5,5-dimethyl-3,3-pentamethylen-2-piperazinon; trans-1,2-Cyclohexanbis-N¹-(dimethyl-3,3-pentamethylen-2-piperazinon); N¹-Octyl-5,5-dimethyl-3,3-pentamethylen-1,4-diazepin-2-on; N¹-Octyl-1,4-diazadispiro-(3,3,5,5)pentamethylen-1,5-diazepin-2-on; 1,6-Hexandiamin, N,N'-Bis(2,2,6,6-tetramethyl-4-piperidinyl)-, Polymer mit 2,4,6-Trichlor-1,3,5-triazin, Reaktionsprodukten mit 3-Brom-1-propen, n-Butyl-1-butanamin und N-Butyl-2,2,6,6-tetramethyl-4-piperidinamin, oxidiert, hydriert und Mischungen davon.

5. Stabilisatorzusammensetzung nach einem der Ansprüche 1 bis 4, wobei das coaktive Mittel ein Alkohol ist, ausgewählt aus der Gruppe, bestehend aus 1-Decanol; 1-Undecanol; 1-Dodecanol; 1-Tridecanol; 1-Tetradecanol; 1-Pentadecanol; 1-Hexadecanol; 1-Heptadecanol; 1-Octadecanol; 1-Nonadecanol; 1-Eicosanol; 1-Docosanol; 1-Tetracosanol; 1-Hexacosanol; 1-Octacosanol; 1-Triacontanol; 2-Methyl-1-undecanol; 2-Propyl-1-nonanol; 2-Butyl-1-octanol; 2-Methyl-1-tridecanol; 2-Ethyl-1-dodecanol; 2-Propyl-1-undecanol; 2-Butyl-1-decanol; 2-Pentyl-1-nonanol; 2-Hexyl-1-octanol; 2-Methyl-1-pentadecanol; 2-Ethyl-1-tetradecanol; 2-Propyl-1-tridecanol; 2-Butyl-1-dodecanol; 2-Pentyl-1-undecanol; 2-Hexyl-1-decanol; 2-Heptyl-1-decanol; 2-Hexyl-1-nonanol; 2-Octyl-1-octanol; 2-Methyl-1-heptadecanol; 2-Ethyl-1-hexadecanol; 2-Propyl-1-pentadecanol; 2-Butyl-1-tetradecanol; 1-Pentyl-1-tridecanol; 2-Hexyl-1-dodecanol; 2-Octyl-1-decanol; 2-Nonyl-1-nonanol; 2-Dodecanol; 3-Dodecanol; 4-Dodecanol; 5-Dodecanol; 6-Dodecanol; 2-Tetradecanol; 3-Tetradecanol; 4-Tetradecanol; 5-Tetradecanol; 6-Tetradecanol; Tetradecanol; 7-Tetradecanol; 2-Hexadecanol; 3-Hexadecanol; 4-Hexadecanol; 5-Hexadecanol; 6-Hexadecanol; 7-Hexadecanol; 8-Hexadecanol; 2-Octadecanol; 3-Octadecanol; 4-Octadecanol; 5-Octadecanol; 6-Octadecanol; 7-Octadecanol; 8-Octadecanol; 9-Octadecanol; 9-Octadedcanol-1; 2,4,6,8-Tetramethyl-1-nonanol; 3,5,5,7,7-Pentamethyl-1-octanol; 3-Butyl-1-nonanol; 3-Butyl-1-undecanol; 3-Hexyl-1-undecanol; 3-Hexyl-1-tridecanol; 3-Octyl-1-tridecanol; 2-Methyl-2-undecanol; 3-Methyl-3-undecanol; 4-Methyl-4-undecanol; 2-Methyl-2-tridecanol; 3-Methyl-3-tridecanol; 4-Methyl-3-tridecanol; 4-Methyl-4-tridecanol; 3-Ethyl-3-decanol; 3-Ethyl-3-dodecanol; 2,4,6,8-Tetramethyl-2-nonanol; 2-Methyl-3-undecanol; 2-Methyl-4-undecanol; 4-Methyl-2-undecanol; 5-Methyl-2-undecanol; 4-Ethyl-2-decanol; 4-Ethyl-3-decanol; und Mischungen davon.

6. Stabilisatorzusammensetzung nach einem der Ansprüche 1 bis 4, wobei das coaktive Mittel ein alkoxylierter Alkohol gemäß Formel (III) ist:
R-(OCHR'CH₂)_{y}-OR" (III)
oder ein Monoalkylether davon,
wobei R eine Hydrocarbyl-Gruppe mit 12 bis 60 Kohlenstoff-Atomen ist; R' aus H oder C₁- bis C₄-Alkyl ausgewählt ist; R" aus H oder einer Hydrocarbyl-Gruppe mit 1 bis 10 Kohlenstoff-Atomen ausgewählt ist; und y eine ganze Zahl von 1 bis 100 ist;
wobei vorzugsweise R ein C₁₂- bis C₃₀-Alkyl ist; wobei noch bevorzugter
die Alkylgruppe 12 bis 22 Kohlenstoff-Atome enthält; oder
wobei R" für H steht; oder
wobei y von 1 bis 75 beträgt.

7. Stabilisatorzusammensetzung nach Anspruch 6, wobei das coaktive Mittel einen ethoxylierten und/oder propoxylierten Alkohol umfasst, wobei der Alkohol ausgewählt ist aus der Gruppe, bestehend aus Docosylalkohol; Stearylalkohol; Oleylalkohol; Cetylalkohol; Isotridecylalkohol; Laurylalkohol; C₁₂- bis C₁₅-Alkoholen; C₁₆-/C₁₈-Alkoholen; und C₂₀- bis C₅₀-Alkoholen; oder
wobei das coaktive Mittel eine Mischung aus ethoxyliertem Alkohol und propoxyliertem Alkohol umfasst,
wobei vorzugsweise der Alkohol C₁₂- bis C₃₀-Alkohole umfasst; oder
wobei das coaktive Mittel ausgewählt ist aus der Gruppe, bestehend aus C₁₂- bis C₁₅-Oxoalkoholen mit 2 Ethylenoxid- und 5 Propylenoxid-Gruppen; und C₁₂- bis C₁₅-Oxoalkoholen mit 5 Ethylenoxid- und 2 Propylenoxid-Gruppen.

8. Stabilisatorzusammensetzung nach Anspruch 6, wobei R" für Methyl steht und das coaktive Mittel einen Monoalkylether eines ethoxylierten und/oder propoxylierten Alkohols umfasst, wobei der Alkohol ausgewählt ist aus der Gruppe, bestehend aus Docosylalkohol; Stearylalkohol; Oleylalkohol; Cetylalkohol; Isotridecylalkohol; Laurylalkohol; C₁₂- bis C₁₅-Alkoholen; C₁₆-/C₁₈-Alkoholen; und C₂₀- bis C₅₀-Alkoholen.

9. Masterbatchkonzentrat, umfassend eine Stabilisatorzusammensetzung nach den Ansprüchen 1 bis 8; und mindestens ein polymeres organisches Material, das mit einem durch das Masterbatchkonzentrat zu stabilisierenden polymeren organischen Material identisch oder verträglich ist, wobei die Stabilisatorzusammensetzung in einer Menge von 10 Gew.-% bis 90 Gew.-%, bezogen auf das Gesamtgewicht des Masterbatchkonzentrats, vorliegt.

10. Fertigungsgegenstand, umfassend ein polymeres organisches Material, das stabilisiert werden soll, vorzugsweise ausgewählt aus der Gruppe, bestehend aus Polyolefinen, Polyethylenvinylacetat (EVA), Polyestern, Polyethern, Polyketonen, Polyamiden, natürlichen und synthetischen Kautschuken, Polyurethanen, Polystyrolen, schlagzähen Polystyrolen, Polyacrylaten, Polymethacrylaten, Polybutylacrylaten, Polyacetalen, Polyacrylnitrilen, Polybutadienen, Polystyrolen, Acrylnitril-Butadien-Styrol, Styrolacrylnitril, Acrylatstyrolacrylnitril, Celluloseacetatbutyrat, Cellulose-Polymeren, Polyimiden, Polyamidimiden, Polyetherimiden, Polyphenylsulfiden, Polyphenyloxidpolysulfonen, Polyethersulfonen, Polyvinylchloriden, Polycarbonaten, Polyketonen, aliphatischen Polyketonen, thermoplastischen Olefinen (TPO), Aminoharz-vernetzten Polyacrylaten und Polyestern, Polyisocyanat-vernetzten Polyestern und Polyacrylaten, Phenol/Formaldehyd-, Harnstoff/Formaldehyd- und Melamin/Formaldehyd-Harzen, trocknenden und nichttrocknenden Alkyd-Harzen, Alkyd-Harzen, Polyester-Harzen, mit Melamin-Harzen vernetzten Acrylat-Harzen, Harnstoff-Harzen, Isocyanaten, Isocyanuraten, Carbamaten, Epoxid-Harzen, vernetzten Epoxid-Harzen, die sich von aliphatischen, cycloaliphatischen, heterocyclischen und aromatischen Glycidyl-Verbindungen ableiten, die mit Anhydriden oder Aminen vernetzt sind, Polysiloxanen, Michael-Additionspolymeren, Aminen, blockierten Aminen mit aktivierten ungesättigten und Methylen-Verbindungen, Ketiminen mit aktivierten ungesättigten und Methylen-Verbindungen, Polyketiminen in Kombination mit ungesättigten Acrylpolyacetoacetat-Harzen, Polyketiminen in Kombination mit ungesättigten Acryl-Harzen, Beschichtungszusammensetzungen, strahlungshärtbaren Zusammensetzungen, Epoxymelamin-Harzen und Fasern; besonders bevorzugt ein Polyolefin-Polymer, ausgewählt aus der Gruppe, bestehend aus i) Polymeren von Monoolefinen, ausgewählt aus Polyethylen, Polypropylen, Polyisobutylen, Polybut-1-en oder Poly-4-methylpent-1-en; ii) Polymeren von Diolefinen, ausgewählt aus Polyisopren oder Polybutadien; iii) Polymeren von Cycloolefinen, ausgewählt aus Cyclopenten oder Norbornen; iv) Polyethylen, ausgewählt aus gegebenenfalls vernetztem Polyethylen, Polyethylen hoher Dichte (HDPE), Polyethylen hoher Dichte und hohem Molekulargewicht (HDPE-HMW), Polyethylen hoher Dichte und ultrahohem Molekulargewicht (HDPE-UHMW), Polyethylen mittlerer Dichte (MDPE), Polyethylen niedriger Dichte (LDPE), linearem Polyethylen niedriger Dichte (LLDUPE), Polyethylen sehr niedriger Dichte (VLDUPE) oder Polyethylen ultraniedriger Dichte (ULDUPE); v) thermoplastischen Olefinen (TPO); vi) Copolymeren davon; und vii) Mischungen davon; und
a) von 0,01 Gew.-% bis 15 Gew.-%, bezogen auf das Gesamtgewicht des Fertigungsgegenstands, einer Stabilisatorzusammensetzung, umfassend
i) eine stabilisierende Menge eines Ultraviolettlichtabsorbers (UVA), ausgewählt aus der Gruppe, bestehend aus: Orthohydroxybenzophenon-Verbindungen; Orthohydroxyphenylbenzotriazol-Verbindungen; und Mischungen davon;
ii) von 1 Gew.-% bis 99 Gew.-%, bezogen auf das Gesamtgewicht der Stabilisatorzusammensetzung, eines coaktiven Mittels, ausgewählt aus der Gruppe, bestehend aus einwertigen C₁₂- bis C₆₀-Alkoholen, alkoxylierten Alkoholen oder Monoalkylethern davon und Mischungen davon; und
iii) eine stabilisierende Menge einer gehinderten Amin-Lichtstabilisatorverbindung (HALS), umfassend eine funktionelle Gruppe gemäß Formel (II): 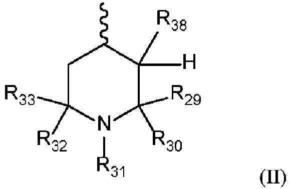
wobei R₃₁ ausgewählt ist aus: Wasserstoff; OH; C₁- bis C₂₀-Hydrocarbyl; -CH₂CN; C₁- bis C₁₂-Acyl; oder C₁- bis C₁₈-Alkoxy; R₃₈ ausgewählt ist aus: Wasserstoff; oder C₁- bis C₈-Hydrocarbyl; und R₂₉, R₃₀, R₃₂ und R₃₃ jeweils unabhängig aus C₁- bis C₂₀-Hydrocarbyl ausgewählt sind oder R₂₉ und R₃₀ und/oder R₃₂ und R₃₃ zusammen mit dem Kohlenstoff, an den sie gebunden sind, ein C₅- bis C₁₀-Cycloalkyl bilden; oder
eine funktionelle Gruppe gemäß Formel (IIa): 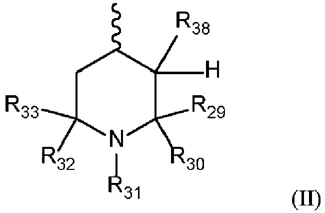
wobei
m eine ganze Zahl von 1 bis 2 ist;
R₃₉ ausgewählt ist aus: Wasserstoff; OH; C₁- bis C₂₀-Hydrocarbyl; -CH₂CN; C₁- bis C₁₂-Acyl; oder C₁- bis C₁₂-Alkoxy;
jedes von G₁ bis G₄ unabhängig ausgewählt ist aus C₁- bis C₂₀-Hydrocarbyl; oder
Mischungen von HALS-Verbindungen mit funktionellen Gruppen gemäß Formel (II) und Formel (IIa); oder
b) ein Masterbatchkonzentrat nach Anspruch 9,
so dass die Endkonzentration des coaktiven Mittels in dem Fertigungsgegenstand von 0,01 Gew.-% bis 1 Gew.-%, bezogen auf das Gewicht des Fertigungsgegenstands, beträgt;
wobei vorzugsweise die Endkonzentration des coaktiven Mittels in dem Fertigungsgegenstand von 0,05 Gew.-% bis 0,5 Gew.-%, bezogen auf das Gewicht des Fertigungsgegenstands, beträgt.

11. Fertigungsgegenstand nach Anspruch 11, wobei die Stabilisatorzusammensetzung nach einem der Ansprüche 1 bis 8 ist.

12. Fertigungsgegenstand nach einem der Ansprüche 10 bis 11, wobei das Verhältnis von coaktivem Mittel zu UVA in dem Fertigungsgegenstand 200:1 bis 1:50 beträgt; und wobei vorzugsweise
das Verhältnis von coaktivem Mittel zu UVA in dem Fertigungsgegenstand 50:1 bis 1:30 beträgt.

13. Fertigungsgegenstand nach einem der Ansprüche 10 bis 12, ferner **dadurch gekennzeichnet, dass** er einen Kontaktwinkel mit Wasser an einer Oberfläche des Gegenstands von mehr als 20° aufweist; und wobei vorzugsweise
der Kontaktwinkel mit Wasser an einer Oberfläche des Gegenstands größer ist als 50°.

14. Fertigungsgegenstand nach einem der Ansprüche 10 bis 13, wobei das polymere organische Material Polyethylen oder Polypropylen ist und mit einer stabilisierenden Menge einer Stabilisatorzusammensetzung gemischt ist, Folgendes umfassend
i) von 0,01 Gew.-% bis 5 Gew.-% einer gehinderten Amin-Lichtstabilisatorverbindung, ausgewählt aus der Gruppe, bestehend aus Bis(2,2,6,6-tetramethylpiperidin-4-yl)sebacat; Bis(1,2,2,6,6-pentamethylpiperidin-4-yl)sebacat; Bis(1-octyloxy-2,2,6,6-tetramethylpiperidin-4-yl)sebacat; einem Kondensat von 1-(2-Hydroxyethyl)-2,2,6,6-tetramethyl-4-hydroxypiperidin und Bernsteinsäure; einem Kondensat von N,N'-Bis(2,2,6,6-tetramethylpiperidin-4-yl)hexamethylendiamin und 4-tert-Octylamino-2,6-dichlor-1,3,5-triazin; einem Kondensat von N,N'-Bis(2,2,6,6-tetramethylpiperidin-4-yl)hexamethylendiamin und 4-Morpholin-2,6-dichlor-1,3,5-triazin; einem Kondensat von N,N'-Bis(2,2,6,6-tetramethylpiperidin-4-yl)hexamethylendiamin und 4-Morpholin-2,6-dichlor-1,3,5-triazin, methyliert; 2,2,6,6-Tetramethylpiperidin-4-ylstearat; dem Kondensat von 2-Chlor-4,6-bis(4-n-butylamino-1,2,2,6,6-pentamethylpiperidyl)-1,3,5-triazin und 1,2-Bis(3-aminopropylamino)ethan; 1,6-Hexandiamin, N,N'-Bis(2,2,6,6-tetramethyl-4-piperidinyl)-, Polymer mit 2,4,6-Trichlor-1,3,5-triazin, Reaktionsprodukten mit 3-Brom-1-propen, n-Butyl-1-butanamin und N-Butyl-2,2,6,6-tetramethyl-4-piperidinamin, oxidiert, hydriert; und Mischungen davon;
ii) von 0,001 Gew.-% bis 5 Gew.-% einer Benzotriazol-Verbindung, ausgewählt aus der Gruppe, bestehend aus 2-(2'-Hydroxy-5'-methylphenyl)benzotriazol; 2-(2'-Hydroxy-3',5'-dimethylphenyl)-benzotriazol; 2-(2'-Hydroxy-5-tert-octylphenyl)-2H-benzotriazol; 2-(3',5'-Di-tert-butyl-2'-hydroxyphenyl)-5-chlorbenzotriazol; 2-(3'-tert-Butyl-5'-methyl-2'-hydroxyphenyl)-5-chlorbenzotriazol; und Mischungen davon; und
iii) von 0,05 Gew.-% bis 0,5 Gew.-% eines coaktiven Mittels in der Form eines alkoxylierten Alkohols gemäß Formel (III):
R-(OCHR'CH₂)_{y}-OR" (III),
wobei R für ein C₁₂- bis C₁₈-Alkyl steht; jedes von R' und
R" für H steht; und y aus 1 bis 75 ausgewählt ist.

15. Fertigungsgegenstand nach einem der Ansprüche 10 bis 13, wobei das polymere organische Material Polyethylen oder Polypropylen ist und mit einer stabilisierenden Menge einer Stabilisatorzusammensetzung gemischt ist, Folgendes umfassend
i) von 0,001 Gew.-% bis 5 Gew.-% einer Benzophenon-Verbindung, ausgewählt aus der Gruppe, bestehend aus 2-Hydroxy-4-methoxybenzophenon; 2,2'-Dihydroxy-4-methoxybenzophenon; 2-Hydroxy-4-octyloxybenzophenon; und Mischungen davon;
ii) von 0,01 Gew.-% bis 0,5 Gew.-% eines coaktiven Mittels in der Form eines alkoxylierten Alkohols gemäß Formel (III):
R-(OCHR'CH₂)_{y}-OR" (III),
wobei R für ein C₁₂- bis C₁₈-Alkyl steht; jedes von R' und
R" für H steht; und y aus 1 bis 75 ausgewählt ist; und
iii) von 0,01 Gew.-% bis 5 Gew.-% einer gehinderten Amin-Lichtstabilisatorverbindung, ausgewählt aus der Gruppe, bestehend aus Bis(2,2,6,6-tetramethylpiperidin-4-yl)sebacat; Bis(1,2,2,6,6-pentamethylpiperidin-4-yl)sebacat; Bis(1-octyloxy-2,2,6,6-tetramethylpiperidin-4-yl)sebacat; einem Kondensat von 1-(2-Hydroxyethyl)-2,2,6,6-tetramethyl-4-hydroxypiperidin und Bernsteinsäure; einem Kondensat von N,N'-Bis(2,2,6,6-tetramethylpiperidin-4-yl)hexamethylendiamin und 4-tert-Octylamino-2,6-dichlor-1,3,5-triazin; einem Kondensat von N,N'-Bis(2,2,6,6-tetramethylpiperidin-4-yl)hexamethylendiamin und 4-Morpholin-2,6-dichlor-1,3,5-triazin; einem Kondensat von N,N'-Bis(2,2,6,6-tetramethylpiperidin-4-yl)hexamethylendiamin und 4-Morpholin-2,6-dichlor-1,3,5-triazin, methyliert; 2,2,6,6-Tetramethylpiperidin-4-ylstearat; dem Kondensat von 2-Chlor-4,6-bis(4-n-butylamino-1,2,2,6,6-pentamethylpiperidyl)-1,3,5-triazin und 1,2-Bis(3-aminopropylamino)ethan; 1,6-Hexandiamin, N,N'-Bis(2,2,6,6-tetramethyl-4-piperidinyl)-, Polymer mit 2,4,6-Trichlor-1,3,5-triazin, Reaktionsprodukten mit 3-Brom-1-propen, n-Butyl-1-butanamin und N-Butyl-2,2,6,6-tetramethyl-4-piperidinamin, oxidiert, hydriert; und Mischungen davon.

## Revendications

1. Composition de stabilisant pour matériaux organiques polymériques, ladite composition de stabilisant étant essentiellement constituée de :
i) une quantité stabilisante d'un absorbeur de lumière ultraviolette (UVA) choisi dans le groupe constitué par : les composés orthohydroxybenzophénone ; les composés orthohydroxyphénylbenzotriazole ; et des mélanges de ceux-ci ;
ii) une quantité stabilisante d'un co-agent actif choisi dans le groupe constitué par les alcools monohydriques en C₁₂-C₆₀ ; les alcools alcoxylés ou les éthers monoalkyliques de ceux-ci ; et leurs mélanges, le co-agent actif étant présent à raison de 1 % en poids à 99 % en poids sur base du poids total de la composition de stabilisant ; et
iii) une quantité stabilisante d'un composé photostabilisant de type amine encombrée (HALS) comprenant un groupe fonctionnel selon la formule (II) : 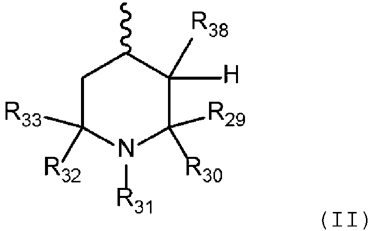
dans laquelle R₃₁ est choisi parmi : hydrogène ; OH ; hydrocarbyle en C₁-C₂₀ ; -CH₂CN ; acyle en C₁-C₁₂ ; ou alcoxy en C₁-C₁₈ ; R₃₈ est choisi parmi : hydrogène ; ou
hydrocarbyle en C₁-C₈ ; et chacun parmi R₂₉, R₃₀, R₃₂ et R₃₃ est choisi indépendamment parmi hydrocarbyle en C₁-C₂₀ ou R₂₉ et R₃₀ et/ou R₃₂ et R₃₃ pris conjointement avec le carbone auquel ils sont fixés forment un cycloalkyle en C₃-C₁₀ ; ou
un groupe fonctionnel selon la formule (IIa) : 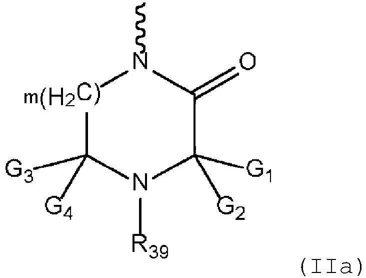
dans laquelle
m est un entier de 1 à 2 ;
R₃₉ est choisi parmi : hydrogène ; OH ; hydrocarbyle en C₁-C₂₀ ; -CH₂CN ; acyle en C₁-C₁₂ ; ou C₁-C₁₈ alcoxy ; et chacun parmi G₁-G₄ est choisi indépendamment parmi hydrocarbyle en C₁-C₂₀ ; OR
des mélanges de composés HALS ayant des groupes fonctionnels selon la formule (II) et la formule (IIa).

2. Composition de stabilisant selon la revendication 1, dans laquelle le co-agent actif et l'absorbeur d'UV combinés avec HALS (co-agent actif : (UVA + HALS)) sont présents en un rapport en poids de 1:20 à 50:1.

3. Composition de stabilisant selon la revendication 1 ou 2, dans laquelle le composé orthohydroxybenzophénone est choisi dans le groupe constitué par 2-hydroxy-4-méthoxybenzophénone ; 2,2'-dihydroxy-4-méthoxybenzophénone ; 2-hydroxy-4-octyloxybenzophénone ; 2,2'-dihydroxy-4,4'-diméthoxybenzophénone ; 2,2'-dihydroxybenzophénone ; 2,2',4,4'-tétrahydroxybenzophénone ; 2,2'-dihydroxy-4,4'-diméthoxybenzophénone ; 2,2'-dihydroxy-4,4'-diéthoxybenzophénone ; 2,2'-dihydroxy-4,4'-dipropoxybenzophénone ; 2,2'-dihydroxy-4,4'-dibutoxybenzophénone ; 2,2'-dihydroxy-4-méthoxy-4'-éthoxybenzophénone ; 2,2'-dihydroxy-4-méthoxy-4'-propoxybenzophénone ; 2,2'-dihydroxy-4-méthoxy-4'-butoxybenzophénone ; 2,2'-dihydroxy-4-éthoxy-4'-propoxybenzophénone ; 2,2'-dihydroxy-4-éthoxy-4'-butoxybenzophénone ; 2,3'-dihydroxy-4,4'-diméthoxybenzophénone ; 2,3'-dihydroxy-4-méthoxy-4'-butoxybenzophénone ; 2-hydroxy-4,4',5'-triméthoxybenzophénone ; 2-hydroxy-4,4',6'-tributoxybenzophénone ; 2-hydroxy-4-butoxy-4',5'-diméthoxybenzophénone ; 2-hydroxy-4-éthoxy-2',4'-dibutylbenzophénone ; 2-hydroxy-4-propoxy-4',6'-dichlorobenzophénone ; 2-hydroxy-4-propoxy-4',6'-dibromobenzophénone ; 2,4-dihydroxybenzophénone ; 2-hydroxy-4-éthoxybenzophénone ; 2-hydroxy-4-propoxybenzophénone ; 2-hydroxy-4-butoxybenzophénone ; 2-hydroxy-4-méthoxy-4'-méthylbenzophénone ; 2-hydroxy-4-méthoxy-4'-éthylbenzophénone ; 2-hydroxy-4-méthoxy-4'-propylbenzophénone ; 2-hydroxy-4-méthoxy-4'-butylbenzophénone ; 2-hydroxy-4-méthoxy-4'-tert-butylbenzophénone ; 2-hydroxy-4-méthoxy-4'-chlorobenzophénone ; 2-hydroxy-4-méthoxy-2'-chlorobenzophénone ; 2-hydroxy-4-méthoxy-4'-bromobenzophénone ; 2-hydroxy-4,4'-diméthoxybenzophénone ; 2-hydroxy-4,4'-diméthoxy-3-méthylbenzophénone ; 2-hydroxy-4,4'-diméthoxy-2'-éthylbenzophénone ; 2-hydroxy-4,4',5'-triméthoxybenzophénone ; 2-hydroxy-4-éthoxy-4'-méthylbenzophénone ; 2-hydroxy-4-éthoxy-4'-éthylbenzophénone ; 2-hydroxy-4-éthoxy-4'-propylbenzophénone ; 2-hydroxy-4-éthoxy-4'-butylbenzophénone ; 2-hydroxy-4-éthoxy-4'-méthoxybenzophénone ; 2-hydroxy-4,4'-diéthoxybenzophénone ; 2-hydroxy-4-éthoxy-4'-propoxybenzophénone ; 2-hydroxy-4-éthoxy-4'-butoxybenzophénone ; 2-hydroxy-4-éthoxy-4'-chlorobenzophénone ; 2-hydroxy-4-éthoxy-4'-bromobenzophénone ; et leurs mélanges ; et dans laquelle le composé orthohydroxyphénylbenzotriazole est choisi dans le groupe constitué par 2-(2'-hydroxy-5'-méthylphényl)-benzotriazole ; 2-(2'-hydroxy-5'-tert-butylphényl)benzotriazole ; 2-(2'-hydroxy-3'-méthyl-5'-tert-butylphényl)-benzotriazole ; 2-(2'-hydroxy-5'-cyclohexylphényl)-benzotriazole ; 2-(2'-hydroxy-3',5'-diméthylphényl)-benzotriazole ; 2-(2'-hydroxy-5'-tert-butylphényl)-5-chloro-benzotriazo le ; 2-(2'-hydroxy-5-tert-octylphényl)-2H-benzotriazole ; 2-(2'-hydroxy-5-octylphényl)-2H-benzotriazole ; 2-(3',5'-di-tert-butyl-2'-hydroxyphényl)-5-chlorobenzotri azole ; 2-(3'-tert-butyl-5'-méthyl-butyl-2'-hydroxyphényl)-5-ch lorobenzotriazole ; 2-(3',5'-di-tert-amyl-2'-hydroxyphényl)benzotriazole ; 2-(3',5'-bis(α,α-diméthylbenzyl)-2'-hydroxyphényl)benzotriazole ; 2-(3'-tert-butyl-2'-hydroxy-5'-(2-octyloxycarbonyléthyl )phényl)benzotriazole ; 2,2'-méthylène-bis[4-(1,1,3,3-tétraméthylbutyl)-6-benzotriazole-2-ylphénol] ; produit de transestérification du 2-[3'-tert-butyl-5'-(2-méthoxycarbonyléthyl)-2'-hydroxyphényl]-2H-benzotriazole avec le polyéthylène glycol 300 ; 2-[2'-hydroxy-3'-(α,α-diméthylbenzyl)-5'-(1,1,3,3-tétraméthylbutyl)phényl]benzotriazole ; 5-trifluorométhyl-2-(2-hydroxy-3-α-cumyl-5-tert-octylphényl)-2H-benzotriazole ; 2-(2'-hydroxy-5'-(2-hydroxyéthyl)phényl)benzotriazole ; 2-(2'-hydroxy-5'-(2-méthacryloyloxyéthyl)phényl)benzotriazole ; 2-(3'-tert-butyl-5'-méthyl-2'-hydroxyphényl)-5-chloro-b enzotriazole ; 2-(3'-sec-butyl-5'-tert-butyl-2'-hydroxyphényl)-benzotriazole ; 2-(3',5'-di-tert-butyl-2'-hydroxyphényl)-benzotriazole ; 2-(5'-tert-octyl-2'-hydroxyphényl)-benzotriazole; 2-(3'-dodécyl-5'-méthyl-2'-hydroxyphényl)-benzotriazole; 2-(3'-tert-butyl-5'-(2-octyloxycarbonyléthyl)-2'-hydroxyphényl)-5-chlorobenzotriazole; 2-(5'-méthyl-2'-hydroxyphényl)-benzotriazole; 2-(5'-tert-butyl-2'-hydroxyphényl)-benzotriazole; 2-(2'-hydroxy-3'-di-tert-butylphényl)-benzotriazole; et leurs mélanges.

4. Composition de stabilisant selon l'une quelconque des revendications 1 à 3, dans laquelle le photostabilisant de type amine encombrée est choisi dans le groupe constitué par sébacate de bis(2,2,6,6-tétraméthylpipéridin-4-yl) ; succinate de bis(2,2,6,6-tétraméthylpipéridin-4-yl) ; sébacate de bis(1,2,2,6,6-pentaméthylpipéridin-4-yl) ; sébacate de bis(1-octyloxy-2,2,6,6-tétraméthylpipéridin-4-yl) ; 3,5-di-tert-butyl-4-hydroxybenzylmalonate de n-butyle de bis(1,2,2,6,6-pentaméthylpipéridin-4-yl) ; condensat de 1-(2-hydroxyéthyl)-2,2,6,6-tétraméthyl-4-hydroxypipéridine et d'acide succinique ; stéarate de 2,2,6,6-tétraméthylpipéridin-4-yle ; dodécanate de 2,2,6,6-tétraméthylpipéridin-4-yle ; stéarate de 1,2,2,6,6-pentaméthylpipéridin-4-yle ; dodécanate de 1,2,2,6,6-pentaméthylpipéridin-4-yle ; condensat de N,N'-bis(2,2,6,6-tétraméthylpipéridin-4-yl)hexaméthylènediamine et de 4-tert-octylamino-2,6-dichloro-1,3,5-triazine ; nitrilotriacétate de tris(2,2,6,6-tétraméthylpipéridin-4-yl) ; tétrakis(2,2,6,6-tétraméthylpipéridin-4-yl)-1,2,3,4-butanététracarboxylate ; 4-benzoyl-2,2,6,6-tétraméthylpipéridine ; 4-stéaryloxy-2,2,6,6-tétraméthylpipéridine ; bis(1,2,2,6,6-pentaméthylpipéridyl)-2-n-butyl-2-(2-hydroxy-3,5-di-tert-butylbenzyl)malonate ; 3-n-octyl-7,7,9,9-tétraméthyl-1,3,8-triazaspiro[4.5]décan-2,4-dione ; bis(1-octyloxy-2,2,6,6-tétraméthylpipéridyl)sébacate ; bis(1-octyloxy-2,2,6,6-tétraméthylpipéridyl)succinate ; un condensat de N,N'-bis(2,2,6,6-tétraméthylpipéridin-4-yl)hexaméthylènediamine et de 4-morpholino-2,6-dichloro-1,3,5-triazine ; un condensat de N,N'-bis(2,2,6,6-tétraméthylpipéridin-4-yl)hexaméthylènediamine et de 4-morpholino-2,6-dichloro-1,3,5-triazine, méthylé ; un condensat de 2-chloro-4,6-bis(4-n-butylamino-2,2,6,6-tétraméthylpipéridyl)-1,3,5-triazine et de 1,2-bis(3-aminopropylamino)éthane ; un condensat de 2-chloro-4,6-bis(4-n-butylamino-1,2,2,6,6-pentaméthylpipéridyl)-1,3,5-triazine et de 1,2-bis-(3-aminopropylamino)éthane ; 8-acétyl-3-dodécyl-7,7,9,9-tétraméthyl-1,3,8-triazaspiro[4.5]décane-2,4-dione ; 3-dodécyl-1-(2,2,6,6-tétraméthylpipéridin-4-yl)pyrrolidin-2,5-dione ; 3-dodécyl-1-(1-éthanoyl-2,2,6,6-tétraméthylpipéridin-4-yl)pyrrolidin-2,5-dione ; 3-dodécyl-1-(1,2,2,6,6-pentaméthylpipéridin-4-yl)pyrrolidine-2,5-dione ; un mélange de 4-hexadécyloxy- et 4-stéaryloxy-2,2,6,6-tétraméthylpipéridine ; un mélange de 4-hexadécyloxy- et 4-stéaryloxy-1,2,2,6,6-pentaméthylpipéridine ; un condensat de N,N'-bis(2,2,6,6-tétraméthylpipéridin-4-yl)hexaméthylènediamine et de 4-cyclohexylamino-2,6-dichloro-1,3,5-triazine ; un condensat de 1,2-bis(3-aminopropylamino)éthane, de 2,4,6-trichloro-1,3,5-triazine et de 4-butylamino-2,2,6,6-tétraméthylpipéridine ; 2-undécyl-7,7,9,9-tétraméthyl-1-oxa-3,8-diaza-4-oxospiro[4.5]décane ; oxo-pipéranzinyl-triazines ; un produit de réaction du 7,7,9,9-tétraméthyl-2-cycloundécyl-1-oxa-3,8-diaza-4-oxospiro[4.5]décane et de l'épichlorhydrine ; tétrakis(2,2,6,6-tétraméthyl-4-pipéridyl)butane-1,2,3,4-tétracarboxylate ; acide 1,2,3,4-butanététracarboxylique, tétrakis(1,2,2,6,6-pentaméthyl-4-pipéridinyl)ester; acide 1,2,3,4-butanététracarboxylique, ester tridécylique de 1,2,2,6,6-pentaméthyl-4-pipéridinyl; acide 1,2,3,4-butanététracarboxylique, ester tridécylique de 2,2,6,6-tétraméthyl-4-pipéridinyle ; acide 1,2,3,4-butanététracarboxylique, polymère avec ester de 2,2,6,6-tétraméthyl-2,4,8,10-tétraoxaspiro[5.5]-undécane-3,9-diéthanol,1,2,2,6,6-pentaméthyl-4-pipéridinylique ; acide 1,2,3,4-butanététracarboxylique, polymère avec 2,2,6,6-tétraméthyl-2,4,8,10-tétraoxaspiro[5.5]-undécane-3,9-diéthanol, ester 2,2,6,6-tétraméthyl-4-pipéridinylique ; bis(1-undécanoxy-2,2,6,6-tétraméthylpipéridin-4-yl)carbonate ; 1-(2-hydroxy-2-méthylpropoxy)-2,2,6,6-tétraméthyl-4-pipéridinol ; 1-(2-hydroxy-2-méthylpropoxy)-4-octadécanoyloxy-2,2,6,6-tétraméthylpipéridine ; 1-(4-octadécanoyloxy-2,2,6,6-tétraméthylpipéridin-1-yloxy)-2-octadécanoyloxy-2-méthylpropane ; 1-(2-hydroxyéthyl)-2,2,6,6-tétraméthyl-4-pipéridinol ; produit de réaction du 1-(2-hydroxyéthyl)-2,2,6,6-tétraméthyl-4-pipéridinol et du diméthylsuccinate ; 2,2,4,4-tétraméthyl-7-oxa-3,20-diazadispiro[5.1.11.2]hénéicosan-21-one ; ester du 2,2,6,6-tétraméthyl-4-pipéridinol avec des acides gras supérieurs ; 3-dodécyl-1-(2,2,6,6-tétraméthyl-4-pipéridyl)pyrrolidine-2,5-dione; 1H-Pyrrole-2,5-dione, 1-octadécyl-, polymère avec (1-méthyléthényl)benzène et 1-(2,2,6,6-tétraméthyl-4-pipéridinyl)-1H-pyrrole-2,5-dione; pipérazinone, 1,1',1"-[1,3,5-triazine-2,4,6-triyltris[(cyclohexylimino)-2,1-éthanediyl]]tris[3,3,5,5-tétraméthyl-; pipérazinone, 1,1',1"-[1,3,5-triazine-2,4,6-triyltris[(cyclohexylimino)-2,1-éthanediyl]]tris[3,3,4,5,5-pentaméthyl-; le produit de la réaction du 7,7,9,9-tétraméthyl-2-cycloundécyl-1-oxa-3,8-diaza-4-oxospiro[4.5]décane et de l'épichlorhydrine ; le condensat de N,N'-bis(2,2,6,6-tétraméthylpipéridin-4-yl)hexaméthylènediamine et de 4-cyclohexylamino-2,6-dichloro-1,3,5-triazine ; le condensat du 1,2-bis(3-aminopropylamino)éthane, de la 2,4,6-trichloro-1,3,5-triazine et de la 4-butylamino-2,2,6,6-tétraméthylpipéridine ; le condensat de la N,N'-bis(2,2,6,6-tétraméthylpipéridin-4-yl)hexaméthylènediamine et de la 4-morpholino-2,6-dichloro-1,3,5-triazine ; le condensat de la 2-chloro-4,6-bis(4-n-butylamino-2,2,6,6-tétraméthylpipéridyl)-1,3,5-triazine et du 1,2-bis(3-aminopropylamino)éthane ; le condensat de 2-chloro-4,6-bis(4-n-butylamino-1,2,2,6,6-pentaméthylpipéridyl)-1,3,5-triazine et de 1,2-bis-(3-aminopropylamino)éthane ; 2-[(2-hydroxyéthyl)amino]-4,6-bis[N-(1-cyclohexyloxy-2,2,6,6-tétraméthylpipéridin-4-yl)butylamino-1,3,5-triazine ; acide propanedioïque, [(4-méthoxyphényl)-méthylène]-bis-(1,2,2,6,6-pentaméthyl-4-pipéridinyl) ester ; tétrakis(2,2,6,6-tétraméthylpipéridin-4-yl)-1,2,3,4-butanététracarboxylate ; acide benzènepropanoïque, 3,5-bis(1,1-diméthyléthyl)-4-hydroxy-, 1-[2-[3-[3,5-bis(1,1-diméthyléthyl)-4-hydroxyphényl]-1-oxopropoxy]éthyl]-2,2,6,6-tétraméthyl-4-pipéridinyle ester ; N-(1-octyloxy-2,2,6,6-tétraméthylpipéridin-4-yl)-N'-dodécyloxalamide ; nitrilotriacétate de tris(2,2,6,6-tétraméthylpipéridin-4-yl) ; acide 1,5-dioxaspiro{5,5}undécane-3,3-dicarboxylique, bis(1,2,2,6,6-pentaméthyl-4-pipéridinyle): acide 1,5-dioxaspiro{5,5}undécane-3,3-dicarboxylique, bis(2,2,6,6-tétraméthyl-4-pipéridinyle); le condensat de 1-(2-hydroxyéthyl)-2,2,6,6-tétraméthyl-4-hydroxypipéridine et d'acide succinique; le condensat de N,N'-bis(2,2,6,6-tétraméthylpipéridin-4-yl)hexaméthylènediamine et de 4-tert-octylamino-2,6-dichloro-1,3,5-triazine ; Acide 1,2,3,4-butanététracarboxylique, ester tridécylique de 1,2,2,6,6-pentaméthyl-4-pipéridinyle ; tétrakis(2,2,6,6-tétraméthylpipéridin-4-yl)-1,2,3,4-butanététracarboxylate ; acide 1,2,3,4-butanététracarboxylique, ester tridécylique de 2,2,6,6-tétraméthyl-4-pipéridinyle ; tétrakis(1,2,2,6,6-pentaméthylpipéridin-4-yl)-1,2,3,4-butanététracarboxylate ; mélange de 2,2,4,4-tétraméthyl-21-oxo-7-oxa-3.20-diazaspiro(5.1.11.2)-hénéicosane-20-acide propanoïque-dodécylester et de 2,2,4,4-tétraméthyl-21-oxo-7-oxa-3.20-diazaspiro(5.1.11.2)-hénéicosane-20-acide propanoïque-tétradécylester ; 1H,4H,5H,8H-2,3a,4a,6,7a,8a-hexaazacyclopenta[def]fluorène-4,8-dione, hexahydro-2,6-bis(2,2,6,6-tétraméthyl-4-pipéridinyl)- ; polyméthyl[propyl-3-oxy(2',2',6',6'-tétraméthyl-4,4'-pipéridinyl)]siloxane; polyméthyl[propyl-3-oxy(1',2',2',6',6'-pentaméthyl-4,4'-pipéridinyl)]siloxane; copolymère de méthacrylate de méthyle avec de l'acrylate d'éthyle et de l'acrylate de 2,2,6,6-tétraméthylpipéridin-4-yle; copolymère d'alpha-oléfines mixtes en C₂₀ à C₂₄ et de (2,2,6,6-tétraméthylpipéridin-4-yl)succinimide; Acide 1,2,3,4-butanététracarboxylique, polymère avec β,β,β',β'-tétraméthyl-2,4,8,10-tétraoxaspiro[5.5]undécane-3,9-diéthanol, ester 1,2,2,6,6-pentaméthyl-4-pipéridinyle ; acide 1,2,3,4-butanététracarboxylique, polymère avec β,β,β',β'-tétraméthyl-2,4,8,10-tétraoxaspiro[5.5]undécane-3,9-diéthanol, copolymère d'ester 2,2,6,6-tétraméthyl-4-pipéridinyle ; 1,3-benzènedicarboxamide, N,N'-bis(2,2,6,6-tétraméthyl-4-pipéridinyl; 1,1'-(1,10-dioxo-1,10-décanediyl)-bis(hexahydro-2,2,4,4,6-pentaméthylpyrimidine ; éthane diamide, N-(1-acétyl-2,2,6,6-tétraméthylpipéridinyl)-N'-dodécyle ; formamide, N,N'-1,6-hexanediylbis[N-(2,2,6,6-tétraméthyl-4-pipéridinyl) ; D-glucitol, 1,3:2,4-bis-O-(2,2,6,6-tétraméthyl-4-pipéridinylidène)-; 2,2,4,4-tétraméthyl-7-oxa-3,20-diaza-21-oxo-dispiro[5.1.11.2]hénéicosane ; propanamide, 2-méthyl-N-(2,2,6,6-tétraméthyl-4-pipéridinyl)-2-[(2,2,6,6-tétraméthyl-4-pipéridinyl)amino]- ; acide 7-oxa-3,20-diazadispiro[5.1.11.2]hénéicosane-20-propanoïque, 2,2,4,4-tétraméthyl-21-oxo-, ester dodécylique ; ester dodécylique de l'acide N-(2,2,6,6-tétraméthylpipéridin-4-yl)-β-aminopropionique ; N-(2,2,6,6-tétraméthylpipéridin-4-yl)-N'-aminooxalamide ; propanamide, N-(2,2,6,6-tétraméthyl-4-pipéridinyl)-3-[(2,2,6,6-tétraméthyl-4-pipéridinyl)amino]- ; mélange de 4-hexadécyloxy- et 4-stéaryloxy-2,2,6,6-tétraméthylpipéridine ; 3-dodécyl-1-(1,2,2,6,6-pentaméthylpipéridin-4-yl)pyrrolidine-2,5-dione; 3-dodécyl-1-(1-éthanoyl-2,2,6,6-pentaméthylpipéridin-4-yl)pyrrolidine-2,5-dione; bis(2,2,6,6-tétraméthylpipéridin-4-yl)succinate; bis(1,2,2,6,6-pentaméthylpipéridin-4-yl) n-butyl 3,5-di-tert-butyl-4-hydroxybenzylmalonate; tris(2,2,6,6-tétraméthylpipéridin-4-yl) nitrilotriacétate; 1,1'-(1,2-éthanediyl)bis(3,3,5,5-tétraméthylpipérazinone); 4-benzoyl-2,2,6,6-tétraméthylpipéridine ; 4-stéaryloxy-2,2,6,6-tétraméthylpipéridine ; bis(1,2,2,6,6-pentaméthylpipéridyl)-2-n-butyl-2-(2-hydroxy-3,5-di-tert-butylbenzyl)malonate ; 3-n-octyl-7,7,9,9-tétraméthyl-1,3,8-triazaspiro[4.5]décan-2,4-dione ; bis(1-octyloxy-2,2,6,6-tétraméthylpipéridyl)sébacate ; bis(1-octyloxy-2,2,6,6-tétraméthylpipéridyl)succinate; 8-acétyl-3-dodécyl-7,7,9,9-tétraméthyl-1,3,8-triazaspiro[4.5]décane-2,4-dione; 3-dodécyl-1-(2,2,6,6-tétraméthylpipéridin-4-yl)pyrrolidin-2,5-dione; 3-dodécyl-1-(1-éthanoyl-2,2,6,6-tétraméthylpipéridin-4-yl)pyrrolidin-2,5-dione; 3-dodécyl-1-(1,2,2,6,6-pentaméthylpipéridin-4-yl)pyrrolidine-2,5-dione; un mélange de 4-hexadécyloxy- et 4-stéaryloxy-2,2,6,6-tétraméthylpipéridine ; 2-undécyl-7,7,9,9-tétraméthyl-1-oxa-3,8-diaza-4-oxospiro[4.5]décane ; acide 1,5-dioxaspiro{5,5}undécane-3,3-dicarboxylique, bis(2,2,6,6-tétraméthyl-4-pipéridinyle) et acide 1,5-dioxaspiro{5,5}undécane-3,3-dicarboxylique, bis(1,2,2,6,6-pentaméthyl-4-pipéridinyle) ; N¹-(β-hydroxyéthyl)3,3-pentaméthylène-5,5-diméthylpipérazin-2-one ; N¹-tert-octyl-3,3,5,5-tétraméthyl-diazépin-2-one ; N¹-tert-octyl-3,3-pentaméthylène-5,5-hexaméthylène-diazépin-2-one ; N¹-tert-octyl-3,3-pentaméthylène-5,5-diméthylpipérazin-2-one ; trans-1,2-cyclohexane-bis-(N¹-5,5-diméthyl-3,3-pentaméthylène-2-pipérazinone; trans-1,2-cyclohexane-bis-(N¹-3,3,5,5-dispiropentaméthylène-2-pipérazinone); N¹-isopropyl-1,4-diazadispiro-(3,3,5,5)pentaméthylène-2-pipérazinone; N¹-isopropyl-1,4-diazadispiro-3,3-pentaméthylène-5,5-tétraméthylène-2-pipérazinone; N¹-isopropyl-5,5-diméthyl-3,3-pentaméthylène-2-pipérazinone; trans-1,2-cyclohexane-bis-N¹-(diméthyl-3,3-pentaméthylène-2-pipérazinone); N¹-octyl-5,5-diméthyl-3,3-pentaméthylène-1,4-diazépin-2-one; N¹-octyl-1,4-diazadispiro-(3,3,5,5)pentaméthylène-1,5-diazépin-2-one; 1,6-hexanediamine, N,N'-bis(2,2,6,6-tétraméthyl-4-pipéridinyl)-, polymère avec 2,4,6-trichloro-1,3,5-triazine, produits de réaction avec 3-bromo-1-propène, n-butyl-1-butanamine et N-butyl-2,2,6,6-tétraméthyl-4-pipéridinamine, oxydés, hydrogénés; et leurs mélanges.

5. Composition de stabilisant selon l'une quelconque des revendications 1 à 4, dans laquelle le co-agent actif est un alcool choisi dans le groupe constitué par 1-décanol ; 1-undécanol ; 1-dodécanol ; 1-tridécanol ; 1-tétradécanol ; 1-pentadécanol ; 1-hexadécanol ; 1-heptadécanol ; 1-octadécanol ; 1-nonadécanol ; 1-eicosanol ; 1-docosanol ; 1-tétracosanol ; 1-hexacosanol ; 1-octacosanol ; 1-triacontanol ; 2-méthyl-1-undécanol ; 2-propyl-1-nonanol ; 2-butyl-1-octanol ; 2-méthyl-1-tridécanol ; 2-éthyl-1-dodécanol ; 2-propyl-1-undécanol ; 2-butyl-1-décanol ; 2-pentyl-1-nonanol ; 2-hexyl-1-octanol ; 2-méthyl-1-pentadécanol ; 2-éthyl-1-tétradécanol ; 2-propyl-1-tridécanol ; 2-butyl-1-dodécanol ; 2-pentyl-1-undécanol ; 2-hexyl-1-décanol ; 2-heptyl-1-décanol ; 2-hexyl-1-nonanol ; 2-octyl-1-octanol ; 2-méthyl-1-heptadécanol ; 2-éthyl-1-hexadécanol ; 2-propyl-1-pentadécanol ; 2-butyl-1-tétradécanol ; 1-pentyl-1-tridécanol ; 2-hexyl-1-dodécanol ; 2-octyl-1-décanol ; 2-nonyl-1-nonanol ; 2-dodécanol ; 3-dodécanol ; 4-dodécanol ; 5-dodécanol ; 6-dodécanol ; 2-tétradécanol ; 3-tétradécanol ; 4-tétradécanol ; 5-tétradécanol ; 6-tétradécanol ; tétradécanol ; 7-tétradécanol ; 2-hexadécanol ; 3-hexadécanol ; 4-hexadécanol ; 5-hexadécanol ; 6-hexadécanol ; 7-hexadécanol ; 8-hexadécanol ; 2-octadécanol ; 3-octadécanol ; 4-octadécanol ; 5-octadécanol ; 6-octadécanol ; 7-octadécanol ; 8-octadécanol ; 9-octadécanol ; 9-octadécanol-1 ; 2,4,6,8-tétraméthyl-1-nonanol ; 3,5,5,7,7-pentaméthyl-1-octanol ; 3-butyl-1-nonanol ; 3-butyl-1-undécanol ; 3-hexyl-1-undécanol ; 3-hexyl-1-tridécanol ; 3-octyl-1-tridécanol ; 2-méthyl-2-undécanol ; 3-méthyl-3-undécanol ; 4-méthyl-4-undécanol ; 2-méthyl-2-tridécanol ; 3-méthyl-3-tridécanol ; 4-méthyl-3-tridécanol ; 4-méthyl-4-tridécanol ; 3-éthyl-3-décanol ; 3-éthyl-3-dodécanol ; 2,4,6,8-tétraméthyl-2-nonanol ; 2-méthyl-3-undécanol ; 2-méthyl-4-undécanol ; 4-méthyl-2-undécanol ; 5-méthyl-2-undécanol ; 4-éthyl-2-décanol ; 4-éthyl-3-décanol ; et leurs mélanges.

6. Composition de stabilisant selon l'une quelconque des revendications 1 à 4, le co-agent actif étant un alcool alcoxylé selon la formule (III) :
R-(OCHR'CH₂)_{y}-OR" (III),
ou son éther de monoalkyle,
dans laquelle R est un groupe hydrocarbyle ayant de 12 à 60 atomes de carbone ; R' est choisi parmi H ou alkyle en C₁-C₄ ; R" est choisi parmi H ou un groupe hydrocarbyle ayant de 1 à 10 atomes de carbone ; et y est un entier de 1 à 100 ;
préférablement dans laquelle R est un alkyle en C₁₂ à C₃₀ ; plus préférablement
dans laquelle le groupe alkyle contient de 12 à 22 carbones ; ou
dans laquelle R" représente H ; ou
dans laquelle y est de 1 à 75.

7. Composition de stabilisant selon la revendication 6, dans laquelle le co-agent actif comprend un alcool éthoxylé et/ou propoxylé, dans laquelle l'alcool est choisi dans le groupe constitué par alcool docosylique ; alcool stéarylique ; alcool oléylique ; alcool cétylique ; alcool isotridécylique ; alcool laurylique ; alcools en C₁₂-C₁₅ ; alcools en C₁₆/C₁₈ ; et alcools en C₂₀-C₅₀ ; ou dans laquelle le co-agent actif comprend un mélange d'alcool éthoxylé et d'alcool propoxylé,
de préférence dans laquelle l'alcool comprend des alcools en C₁₂-C₃₀ ; ou
dans laquelle le co-agent actif est choisi dans le groupe constitué par des oxo alcools en C₁₂-C₁₅ ayant 2 groupes oxyde d'éthylène et 5 groupes oxyde de propylène ; et des oxo alcools en C₁₂-C₁₅ ayant 5 groupes oxyde d'éthylène et 2 groupes oxyde de propylène.

8. Composition de stabilisant selon la revendication 6, dans laquelle R" est un groupe méthyle et le co-agent actif comprend un éther monoalkylique d'un alcool éthoxylé et/ou propoxylé, dans laquelle l'alcool est choisi dans le groupe constitué par alcool docosylique ; alcool stéarylique ; alcool oléylique ; alcool cétylique ; alcool isotridécylique ; alcool laurylique ; alcools en C₁₂-C₁₅ ; alcools en C₁₆/C₁₈ ; et alcools en C₂₀-C₅₀.

9. Concentré de mélange maître comprenant une composition de stabilisant telle que définie dans l'une quelconque des revendications 1 à 8 ; et au moins une matière organique polymérique identique à ou compatible avec une matière organique polymérique à stabiliser par le concentré de mélange maître, dans lequel la composition de stabilisant est présente en une quantité de 10 % en poids à 90 % en poids, par rapport au poids total du concentré de mélange maître.

10. Article de fabrication comprenant un matériau organique polymérique à stabiliser, préférablement choisi dans le groupe constitué par les polyoléfines, le poly(éthylène-acétate de vinyle) (EVA), les polyesters, les polyéthers, les polycétones, les polyamides, les caoutchoucs naturels et synthétiques, les polyuréthanes, les polystyrènes, les polystyrènes à haute résistance aux chocs, les polyacrylates, les polyméthacrylates, les polybutylacrylates, les polyacétals, les polyacrylonitriles, les polybutadiènes, les polystyrènes, l'acrylonitrile-butadiène-styrène, l'acrylonitrile styrène, l'acrylonitrile acrylate styrène, l'acétate butyrate de cellulose, les polymères cellulosiques, les polyimides, les polyamideimides, les polyétherimides, les polyphénylsulfures, les polyphényloxydepolysulfones, les polyéthersulfones, les polychlorures de vinyle, les polycarbonates, les polycétones, les polycétones aliphatiques, les oléfines thermoplastiques (TPO), les polyacrylates et polyesters réticulés par des aminorésines, les polyesters et polyacrylates réticulés par des polyisocyanates, les résines phénol/formaldéhyde, urée/formaldéhyde et mélamine/formaldéhyde, les résines alkydes siccatives et non siccatives, les résines alkydes, les résines polyester, les résines acrylates réticulées par des résines mélamine, les résines urée, les isocyanates, les isocyanurates, les carbamates, les résines époxy, les résines époxy réticulées dérivées de composés glycidyliques aliphatiques, cycloaliphatiques, hétérocycliques et aromatiques, réticulés par des anhydrides ou des amines, les polysiloxanes, les polymères d'addition de Michael, les amines, les amines bloquées avec des composés insaturés et méthylène activés, les cétimines comportant des composés insaturés et méthylène activés, les polycétimines en combinaison avec des résines polyacétoacétate acryliques insaturées, les polycétimines en combinaison avec des résines acryliques insaturées, les compositions de revêtement, les compositions durcissables par rayonnement, les résines époxymélamine et les fibres ;
plus préférablement un polymère polyoléfine choisi dans le groupe constitué par i) les polymères de monooléfines choisis parmi le polyéthylène, le polypropylène, le polyisobutylène, le polybut-1-ène ou le poly-4-méthylpent-1-ène ; ii) les polymères de dioléfines choisis parmi le polyisoprène ou le polybutadiène ; iii) les polymères de cyclooléfines choisis parmi le cyclopentène ou le norbornène ; iv) le polyéthylène choisi parmi le polyéthylène réticulé (éventuellement), le polyéthylène haute densité (HDPE), le polyéthylène haute densité et de masse moléculaire élevée (HDPE-HMW), le polyéthylène haute densité et de masse moléculaire ultra-élevée (HDPE-UHMW), le polyéthylène moyenne densité (MDPE), le polyéthylène basse densité (LDPE), le polyéthylène linéaire basse densité (LLDPE), le polyéthylène très basse densité (VLDPE) ou le polyéthylène ultra basse densité (ULDPE) ; v) les oléfines thermoplastiques (TPO) ; vi) leurs copolymères ; et vii) leurs mélanges ; et
a) de 0,01 % en poids à 15 % en poids, par rapport au poids total de l'article de fabrication, d'une composition de stabilisant comprenant
i) une quantité stabilisante d'un absorbeur de lumière ultraviolette (UVA) choisi dans le groupe constitué par : les composés orthohydroxybenzophénone ; les composés orthohydroxyphénylbenzotriazole ; et des mélanges de ceux-ci ;
ii) de 1 % en poids à 99 % en poids sur la base du poids total de la composition de stabilisant d'un co-agent actif choisi dans le groupe constitué par les alcools monohydriques en C₁₂-C₆₀ ; les alcools alcoxylés ou les monoéthers alkylés de ceux-ci ; et leurs mélanges ; et
iii) une quantité stabilisante d'un composé photostabilisant de type amine encombrée (HALS) comprenant un groupe fonctionnel selon la formule (II) : 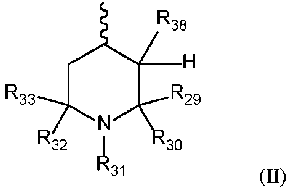
dans laquelle R₃₁ est choisi parmi : hydrogène ; OH ; hydrocarbyle en C₁-C₂₀ ; -CH₂CN ; acyle en C₁-C₁₂ ; ou alcoxy en C₁-C₁₈ ; R₃₈ est choisi parmi : hydrogène ; ou hydrocarbyle en C₁-C₈ ; et chacun parmi R₂₉, R₃₀, R₃₂ et R₃₃ est choisi indépendamment parmi hydrocarbyle en C₁-C₂₀ ou R₂₉ et R₃₀ et/ou R₃₂ et R₃₃ pris conjointement avec le carbone auquel ils sont fixés forment un cycloalkyle en C₃-C₁₀ ; ou
un groupe fonctionnel selon la formule (IIa) : 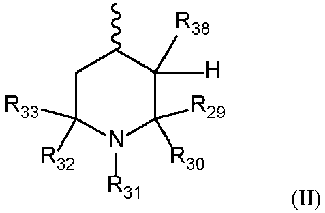
dans laquelle
m est un entier de 1 à 2 ;
R₃₉ est choisi parmi : hydrogène ; OH ; hydrocarbyle en C₁-C₂₀ ; -CH₂CN ; acyle en C₁-C₁₂ ; ou C₁-C₁₈ alcoxy ; et chacun parmi G₁-G₄ est choisi indépendamment parmi hydrocarbyle en C₁-C₂₀ ; OR
des mélanges de composés HALS ayant des groupes fonctionnels selon la formule (II) et la formule (IIa) ; ou
b) un concentré de mélange maître tel que défini dans la revendication 9,
de telle sorte que la concentration finale du co-agent actif dans l'article de fabrication soit de 0,01 % en poids à 1 % en poids, sur la base du poids de l'article de fabrication ;
préférablement, dans laquelle la concentration finale du co-agent actif dans l'article de fabrication est de 0,05 % en poids à 0,5 % en poids, sur la base du poids de l'article de fabrication.

11. Article de fabrication selon la revendication 11, dans lequel la composition de stabilisant est telle que définie dans l'une quelconque des revendications 1 à 8.

12. Article de fabrication selon l'une quelconque des revendications 10 à 11, dans lequel le rapport du co-agent actif sur UVA dans l'article de fabrication est de 200:1 à 1:50, et mieux encore
dans lequel le rapport du co-agent actif sur UVA dans l'article de fabrication est de 50:1 à 1:30.

13. Article de fabrication selon l'une quelconque des revendications 10 à 12, **caractérisé en outre en ce qu'**il a en outre un angle de contact avec l'eau à une surface de l'article supérieur à 20° ; et de préférence encore dans lequel l'angle de contact avec l'eau à la surface de l'article est supérieur à 50°.

14. Article de fabrication selon l'une quelconque des revendications 10 à 13, dans lequel le matériau organique polymérique est un polyéthylène ou un polypropylène et est mélangé avec une quantité stabilisante d'une composition de stabilisant comprenant
i) de 0,01 % en poids à 5 % en poids d'un composé photostabilisant de type amine encombrée choisi dans le groupe constitué par sébacate de bis(2,2,6,6-tétraméthylpipéridin-4-yl) ; sébacate de bis(1,2,2,6,6-pentaméthylpipéridin-4-yl) ; sébacate de bis(1-octyloxy-2,2,6,6-tétraméthylpipéridin-4-yl) ; un condensat de 1-(2-hydroxyéthyl)-2,2,6,6-tétraméthyl-4-hydroxypipéridine et d'acide succinique ; un condensat de N,N'-bis(2,2,6,6-tétraméthylpipéridin-4-yl)hexaméthylènediamine et de 4-tert-octylamino-2,6-dichloro-1,3,5-triazine ; un condensat de N,N'-bis(2,2,6,6-tétraméthylpipéridin-4-yl)hexaméthylènediamine et de 4-morpholino-2,6-dichloro-1,3,5-triazine ; un condensat de N,N'-bis(2,2,6,6-tétraméthylpipéridin-4-yl)hexaméthylènediamine et de 4-morpholino-2,6-dichloro-1,3,5-triazine, méthylé ; stéarate de 2,2,6,6-tétraméthylpipéridin-4-yle ; le condensat de 2-chloro-4,6-bis(4-n-butylamino-1,2,2,6,6-pentaméthylpipéridyl)-1,3,5-triazine et de 1,2-bis-(3-aminopropylamino)éthane ; 1,6-hexanediamine, N,N'-bis(2,2,6,6-tétraméthyl-4-pipéridinyl)-, polymère avec 2,4,6-trichloro-1,3,5-triazine, produits de réaction avec 3-bromo-1-propène, n-butyl-1-butanamine et N-butyl-2,2,6,6-tétraméthyl-4-pipéridinamine, oxydés, hydrogénés; et leurs mélanges;
ii) de 0,001 % en poids à 5 % en poids d'un composé benzotriazole choisi dans le groupe constitué par 2-(2'-hydroxy-5'-méthylphényl)-benzotriazole ; 2-(2'-hydroxy-3',5'-diméthylphényl)-benzotriazole ; 2-(2'-hydroxy-5-tert-octylphényl)-2H-benzotriazole ; 2-(3',5'-di-tert-butyl-2'-hydroxyphényl)-5-chlorobenzotriazole ; 2-(3'-tert-butyl-5'-méthyl-2'-hydroxyphényl)-5-chloro-benzotriazole ; et leurs mélanges ; et
iii) de 0,05 % en poids à 0,5 % en poids d'un co-agent actif sous la forme d'un alcool alcoxylé selon la formule (III) :
R-(OCHR'CH₂)_{y}-OR" (III),
dans laquelle R est un alkyle en C₁₂ à C₁₈ ; chacun parmi R' et R" est H ; et y est choisi de 1 à 75.

15. Article de fabrication selon l'une quelconque des revendications 10 à 13, dans lequel le matériau organique polymérique est un polyéthylène ou un polypropylène et est mélangé avec une quantité stabilisante d'une composition de stabilisant comprenant
i) de 0,001 % en poids à 5 % en poids d'un composé benzophénone choisi dans le groupe constitué par 2-hydroxy-4-méthoxybenzophénone ; 2,2'-dihydroxy-4-méthoxybenzophénone ; 2-hydroxy-4-octyloxybenzophénone ; et leurs mélanges ;
ii) de 0,01 % en poids à 0,5 % en poids d'un co-agent actif sous la forme d'un alcool alcoxylé selon la formule (III) :
R-(OCHR'CH₂)_{y}-OR" (III),
dans laquelle R est un alkyle en C₁₂ à C₁₈ ; chacun parmi R' et R" est H ; et y est choisi de 1 à 75 ; et
iii) de 0,01 % en poids à 5 % en poids d'un composé photostabilisant de type amine encombrée choisi dans le groupe constitué par sébacate de bis(2,2,6,6-tétraméthylpipéridin-4-yl) ; sébacate de bis(1,2,2,6,6-pentaméthylpipéridin-4-yl) ; sébacate de bis(1-octyloxy-2,2,6,6-tétraméthylpipéridin-4-yl) ; un condensat de 1-(2-hydroxyéthyl)-2,2,6,6-tétraméthyl-4-hydroxypipéridine et d'acide succinique ; un condensat de N,N'-bis(2,2,6,6-tétraméthylpipéridin-4-yl)hexaméthylènediamine et de 4-tert-octylamino-2,6-dichloro-1,3,5-triazine ; un condensat de N,N'-bis(2,2,6,6-tétraméthylpipéridin-4-yl)hexaméthylènediamine et de 4-morpholino-2,6-dichloro-1,3,5-triazine ; un condensat de N,N'-bis(2,2,6,6-tétraméthylpipéridin-4-yl)hexaméthylènediamine et de 4-morpholino-2,6-dichloro-1,3,5-triazine, méthylé ; stéarate de 2,2,6,6-tétraméthylpipéridin-4-yle ; le condensat de 2-chloro-4,6-bis(4-n-butylamino-1,2,2,6,6-pentaméthylpipéridyl)-1,3,5-triazine et de 1,2-bis-(3-aminopropylamino)éthane ; 1,6-hexanediamine, N,N'-bis(2,2,6,6-tétraméthyl-4-pipéridinyl)-, polymère avec 2,4,6-trichloro-1,3,5-triazine, produits de réaction avec 3-bromo-1-propène, n-butyl-1-butanamine et N-butyl-2,2,6,6-tétraméthyl-4-pipéridinamine, oxydés, hydrogénés; et leurs mélanges.
